# EUROPÄISCHE PATENTSCHRIFT

(11) **EP 4 728 705 B1**
(45) Veröffentlichungstag und Bekanntmachung des Hinweises auf die Patenterteilung: **14.10.2026**
(21) Anmeldenummer: 25710868.8
(22) Anmeldetag: 10.03.2025
(51) Int. Cl.: H04L 9/40

(54) **SYSTEM UND VERFAHREN ZUR BESTIMMUNG VON IT-SICHERHEITSRELEVANTEN ERKENNUNGSLÜCKEN EINER HYBRIDEN IT-BETRIEBSUMGEBUNG**
SYSTEM AND METHOD FOR DETERMINING IT SECURITY RELEVANT RECOGNITION GAPS IN A HYBRID IT OPERATING ENVIRONMENT
SYSTÈME ET PROCÉDÉ DE DÉTERMINATION D'INTERVALLES DE DÉTECTION PERTINENTS POUR LA SÉCURITÉ INFORMATIQUE D'UN ENVIRONNEMENT D'EXPLOITATION INFORMATIQUE HYBRIDE

(30) Priorität: 08.03.2024 EP 24162510
(43) Veröffentlichungstag der Anmeldung: 22.04.2026
(73) Patentinhaber: Neon Information Security GmbH, 82041 Oberhaching (DE)
(72) Erfinder: OSTERLOH, Marcus, 26209 Hatten (DE); KEMETMÜLLER, Christoph, 80469 München (DE); HUPE, Torsten, 82041 Oberhaching (DE)
(74) Vertreter: Kehl, Ascherl, Liebhoff & Ettmayr Patentanwälte Partnerschaft mbB
(86) Internationale Anmeldenummer: PCT/EP2025/056409
(87) Internationale Veröffentlichungsnummer: WO 2025/186477

(56) Entgegenhaltungen:
- US-A1- 2022 114 257
- US-A1- 2023 156 032

## Beschreibung

Die vorliegende Erfindung bezieht sich gemäß Anspruch 1 auf ein System zur Bestimmung von IT-sicherheitsrelevanten Erkennungslücken einer hybriden IT-Betriebsumgebung und gemäß Anspruch 14 auf ein Verfahren zur Bestimmung von IT-sicherheitsrelevanten Erkennungslücken einer hybriden IT-Betriebsumgebung.

Angesichts der gerade in jüngster Vergangenheit zunehmenden IT-Security Bedrohungen strengen Unternehmen sich an, entsprechende Ereignisse präzise zu erkennen, um auf Angriffe zu reagieren und Maßnahmen zeitnah umsetzen zu können. Eines der zentralen Werkzeuge im Bereich "Security Management / Security Operations" ist das sog. SIEM (Security Incident and Event Management System): Es ermöglicht, die Security-relevanten Ereignisse zu monitoren, zu kategorisieren und Alarme auszulösen. Mit Blick auf die gegebene Komplexität und Aktualität ist die dauerhafte Schärfe des SIEM-Regelwerks von entscheidender Bedeutung: Es muss sensitiv genug sein, um alle relevanten Ereignisse zu erfassen, und zugleich eine minimale False-Positive Rate sicherstellen. Dies angesichts der Tatsache, dass IT-Security Angriffe in ihrer Gestalt äußerst dynamisch sind und sich laufend an neue Gegebenheiten anpassen; hinzu kommen die fortwährenden Veränderungen der IT-Landschaft.

Die Druckschrift US2016/0078221A1 offenbart eine Malwarenalyse. Die Malwareanalyse beschränkt sich auf statistische bzw. dynamische Binäranalyse: Bei der statischen Analyse werden Dateien auf Maschinenlevel analysiert, während bei der dynamischen Analyse typischerweise Sandboxen zur Anwendung kommen.

Die Druckschrift US2022/0114257A1 offenbart Netzwerkanalysen auf Basis von einer Firewall. Derartige Netzwerkanalysen haben grundsätzlich defensiven Charakter. Zudem betrachten Netzwerkanalysen lediglich den Netzwerkverkehr und analysieren diesen innerhalb des OSI Modells.

Weitere zum technologischen Hintergrund gehörende Schriften sind: US2023/0156032A1 und EP3873056A1.

Die Druckschrift US2022345479 A1 offenbart ein Verfahren zum Identifizieren von Schwachstellen in einem Sicherheitsinformations- und Ereignisverwaltungssystem (SIEM).

Das Verfahren gemäß der US2022345479 A1 umfasst die Schritte: Initialisieren eines Sicherheitstestagenten (STA) mit einem Testszenarioziel und einem Verstärkungslernmodell, wobei das Modell einen Satz von Zuständen, die den Fortschritt in Richtung des Ziels anzeigen, einen Satz von Aktionen, die von einem legitimen Benutzer innerhalb einer Zielumgebung durchgeführt werden können, und einen Satz von Belohnungswerten, die mit dem Durchführen einer spezifizierten Aktion in einem spezifizierten Zustand verbunden sind, definiert; und Lernen einer Strategie zum Erreichen des Ziels innerhalb der Zielumgebung, wobei das Lernen einen Prozess umfasst, der: Eine Zielaktion aus dem Satz von Aktionen für einen aktuellen Zustand auswählt und ausführt; auf einen Alarm überwacht, der als Reaktion auf die Zielaktion, die in der Zielumgebung ausgeführt wird, ausgelöst wird; einen Belohnungswert empfängt, der mit der Zielaktion und dem aktuellen Zustand verbunden ist; berechnet und speichert einen aktualisierten Belohnungswert in dem Modell; und als Reaktion darauf, dass der Prozess nicht abgebrochen wurde, den Prozess für einen nächsten Zustand wiederholt. Die Lehre des US2022345479 A1 verfolgt im Kern das strategische Ziel, mit Hilfe eines Reinforcement Learning Algorithmus im iterativen Vorgehen eine Angriffs-Policy zu ermitteln, die - übertragen auf das Anwendungsfeld - bei Ausübung auf eine IT-Betriebsumgebung das Auslösen einer SIEM-Alarmierung vermeidet. Die Policy beschreibt, welche Aktion bei einer beliebigen Verhaltensvariante innerhalb der Lernumgebung zur höchstmöglichen Belohnung führt.

Diese Lösung ist nachteilig, da z.B. die Schutzfunktionen der zur IT-Betriebsumgebung gehörenden Geräte nicht analysiert werden. Der vorliegenden Erfindung liegt daher die Aufgabe zu Grunde, ein System sowie ein Verfahren zum Verbessern der Abwehrfähigkeiten einer IT-Betriebsumgebung bereitzustellen.

Die zuvor genannte Aufgabe wird durch ein System nach Anspruch 1 gelöst. Das erfindungsgemäße System nach Anspruch 1 ist ein System zur Bestimmung von IT-sicherheitsrelevanten Erkennungslücken einer hybriden IT-Betriebsumgebung. Die hybride IT-Betriebsumgebung weist dabei besonders bevorzugt zumindest einen On-Premise-Anteil und einen Cloud-Anteil auf. Das erfindungsgemäße System weist dabei bevorzugt zumindest eine Analyseeinheit, eine Angriffseinheit zum Bereitstellen von mehreren voneinander verschiedenen Angriffsdateien und/oder Angriffscodes zur Modifikation der Funktionsweise von mehreren Geräten der hybriden IT-Betriebsumgebung, wobei die mehrere Geräte einer Geräteart und/oder unterschiedlichen Gerätearten zugehörig sind, mehrere Zuordnungsmittel zur Identifikation und/oder Adressierung der mehreren Geräte, wobei jedes der mehreren Geräte durch zumindest ein Zuordnungsmittel, insbesondere durch jeweils ein Zuordnungsmittel, zum Empfang der Angriffsdatei und/oder des Angriffscode identifizierbar und/oder adressierbar ist, und mehrere Detektionsmittel auf.

Der Begriff "Detektionsmittel" kann im Rahmen der vorliegenden Erfindung alternativ auch durch den Begriff "Detektor" ersetzt werden.

Der Begriff "Zuordnungsmittel" kann im Rahmen der vorliegenden Erfindung alternativ auch durch den Begriff "Zuordner" ersetzt werden.

Eine Aktivität zumindest eines und bevorzugt jedes der mehreren Geräte infolge des Empfangs der Angriffsdatei und/oder des Angriffscodes ist zumindest mittelbar und bevorzugt unmittelbar durch zumindest ein Detektionsmittel, insbesondere durch jeweils ein Detektionsmittel, detektierbar. Das Detektionsmittel, insbesondere das jeweilige Detektionsmittel, ist zum Erzeugen von Aktivitätsdaten des mindestens einen Geräts und bevorzugt jedes der mehreren Geräte in Abhängigkeit zumindest eines Teils der Aktivität des mindestens einen Geräts und bevorzugt jedes der mehreren Geräte infolge des Empfangs der Angriffsdatei und/oder des Angriffscodes durch das mindestens eine Gerät und bevorzugt durch jedes der mehreren Geräte und ein Ausführen der Angriffsdatei und/oder des Angriffscodes durch das mindestens eine Gerät und bevorzugt durch jedes der mehreren Geräte konfiguriert, und wobei das Detektionsmittel, insbesondere das jeweilige Detektionsmittel, zum zumindest mittelbaren und bevorzugt unmittelbaren Bereitstellen der Aktivitätsdaten an die Analyseeinheit konfiguriert ist. Die Analyseeinheit ist zum Bestimmen des Vorliegens oder nicht Vorliegens einer IT-sicherheitsrelevanten Erkennungslücke in Abhängigkeit der Aktivitätsdaten eines Geräts, insbesondere der Aktivitätsdaten jedes Geräts, und der von dem Gerät, insbesondere von dem jeweiligen Gerät, empfangenen Angriffsdatei und/oder des Angriffscode konfiguriert.

Diese Lösung ist vorteilhaft, da die IT-Betriebsumgebung, insbesondere der Gerätebestand der hybriden IT-Betriebsumgebung, proaktiv legitimierten Angriffen ausgesetzt werden kann, um dadurch IT-sicherheitsrelevante Erkennungslücken zu identifizieren, wodurch eine Möglichkeit zum Vermeiden oder Schließen der IT-sicherheitsrelevanten Erkennungslücken bewirkt wird. Beispielsweise kann ausgehend von einer Bibliothek an real ausgeführten Angriffen das Verhalten der angegriffenen hybriden IT-Betriebsumgebung untersucht werden, um festzustellen, ob die Schutzfunktionen der zur hybriden IT-Betriebsumgebung gehörenden Geräte gegriffen haben und ob die Angriffe z.B. durch ein SIEM erkannt wurden. Hierbei können Angriffsparameter, Angriffstypen und Angriffsabfolge nach unterschiedlichen Kriterien variiert werden.

Die Modifikation der Funktionsweise kann mehrere Geräte einer Geräteart, d.h. z.B. mehrere Clients oder mehrere Netzwerkcontroller oder mehrere Server oder mehrere Firewalls, betreffen oder die Modifikation der Funktionsweise von Geräten kann Geräte unterschiedlicher Gerätearten, insbesondere zumindest einen Client und zumindest einen Netzwerkcontroller, betreffen oder die Modifikation der Funktionsweise von Geräten kann mehrere Geräte unterschiedlicher Gerätearten, insbesondere zwei oder mehr als zwei Clients und mindestens einen und bevorzugt mehr als einen Netzwerkcontroller oder einer Firewall, betreffen.

Es wird dabei bevorzugt nicht nur "dieser eine" kritische Angriffspfad ermittelt, sondern - anhand variiert ausgeführter, realer bzw. praxisnaher Angriffe - die kritischen Zustände der hybriden IT-Betriebsumgebung und bevorzugt die Erkennungsfähigkeit des SIEM graduell ermittelt und somit besonders bevorzugt insgesamt bewertet: Die kritischen Zustände der zur hybriden IT-Betriebsumgebung gehörenden Geräte - absolut und/oder in zueinander in Relation gesetzt - und/oder die Erkennungsfähigkeit des SIEM können angesichts einer vorgegebenen Bedrohungslage die Angreifbarkeit bzw. das Schutz-Niveau einer hybriden IT-Betriebsumgebung charakterisieren.

Weitere bevorzugte Ausführungsformen sind Gegenstand der nachfolgenden Beschreibungsteile und/oder der Unteransprüche.

Gemäß einer bevorzugten Ausführungsform der vorliegenden Erfindung repräsentieren die Angriffsdateien Angriffe zu unterschiedlichen Angriffstypen, insbesondere mehr als drei voneinander verschiedenen Angriffstypen, und/oder die Angriffscodes repräsentieren bevorzugt Angriffe zu unterschiedlichen Angriffstypen, insbesondere mehr als drei voneinander verschiedenen Angriffstypen.

Konkret repräsentiert jede Angriffsdatei bevorzugt einen oder genau einen oder mindestens einen Angriff, wobei der Angriff eine konkrete Angriffstechnik eines konkreten Angriffstyps repräsentieren. Die Angriffsdateien sind folglich eine Vielzahl an Angriffsdateien, wobei zumindest drei und bevorzugt zumindest fünf und besonders bevorzugt zumindest der Angriffsdateien unterschiedliche Angriffstypen repräsentieren.

Konkret repräsentiert jeder Angriffscode bevorzugt einen oder genau einen oder mindestens einen Angriff, wobei der Angriff eine konkrete Angriffstechnik eines konkreten Angriffstyps repräsentiert. Die Angriffscodes sind folglich eine Vielzahl an Angriffscodes, wobei zumindest drei und bevorzugt zumindest fünf und besonders bevorzugt zumindest der Angriffscodes unterschiedliche Angriffstypen repräsentieren.

Gemäß einer weiteren bevorzugten Ausführungsform der vorliegenden Erfindung repräsentieren die Angriffsdateien oder Angriffscodes zumindest zu zwei unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung sind die unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung repräsentieren die Angriffsdateien Angriffe zu mehr als drei voneinander verschiedenen Angriffstypen repräsentieren und/oder die Angriffscodes repräsentieren Angriffe zu mehr als drei voneinander verschiedenen Angriffstypen.

Gemäß einer weiteren bevorzugten Ausführungsform der vorliegenden Erfindung sind die zumindest drei unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest drei unterschiedlichen Angriffstypen: Ausführung, Dauerhaftigkeit und Privilegien-Eskalation.

Gemäß einer weiteren bevorzugten Ausführungsform der vorliegenden Erfindung repräsentieren die Angriffsdateien Angriffe zu mehr als vier voneinander verschiedenen Angriffstypen repräsentieren und/oder die Angriffscodes repräsentieren Angriffe zu mehr als vier voneinander verschiedenen Angriffstypen.

Gemäß einer weiteren bevorzugten Ausführungsform der vorliegenden Erfindung sind die zumindest oder genau vier unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest vier unterschiedlichen Angriffstypen: Ausführung, Dauerhaftigkeit, Privilegien-Eskalation, Zugang zu Anmeldeinformationen.

Gemäß einer weiteren bevorzugten Ausführungsform der vorliegenden Erfindung repräsentieren die Angriffsdateien oder Angriffscodes zumindest zu drei unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung repräsentieren die Angriffsdateien Angriffe zu mehr als oder zu genau fünf voneinander verschiedenen Angriffstypen repräsentieren und/oder die Angriffscodes repräsentieren Angriffe zu mehr als fünf oder zu genau fünf voneinander verschiedenen Angriffstypen.

Gemäß einer weiteren bevorzugten Ausführungsform der vorliegenden Erfindung sind die zumindest fünf oder genau fünf unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau fünf unterschiedlichen Angriffstypen: Ausführung, Dauerhaftigkeit, Privilegien-Eskalation, Zugang zu Anmeldeinformationen, Entdeckung.

Gemäß einer weiteren bevorzugten Ausführungsform der vorliegenden Erfindung repräsentieren die Angriffsdateien oder Angriffscodes zumindest zu vier unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung repräsentieren die Angriffsdateien Angriffe zu mehr als oder zu genau sechs voneinander verschiedenen Angriffstypen repräsentieren und/oder die Angriffscodes repräsentieren Angriffe zu mehr als sechs oder zu genau sechs voneinander verschiedenen Angriffstypen.

Gemäß einer weiteren bevorzugten Ausführungsform der vorliegenden Erfindung sind die zumindest sechs oder genau sechs unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau sechs unterschiedlichen Angriffstypen: Ausführung, Dauerhaftigkeit, Privilegien-Eskalation, Zugang zu Anmeldeinformationen, Entdeckung, Seitliche Bewegung.

Gemäß einer weiteren bevorzugten Ausführungsform der vorliegenden Erfindung repräsentieren die Angriffsdateien oder Angriffscodes zumindest zu fünf unterschiedlichen Angriffstypen jeweils mehr als zwei und bevorzugt mehr als drei, insbesondere vier oder mehr als vier, unterschiedliche Angriffstechniken.

Gemäß einer weiteren bevorzugten Ausführungsform der vorliegenden Erfindung repräsentieren die Angriffsdateien Angriffe zu mehr als oder zu genau sieben voneinander verschiedenen Angriffstypen repräsentieren und/oder die Angriffscodes repräsentieren Angriffe zu mehr als fünf oder zu genau fünf voneinander verschiedenen Angriffstypen.

Gemäß einer weiteren bevorzugten Ausführungsform der vorliegenden Erfindung sind die zumindest sieben oder genau sieben unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau sieben unterschiedlichen Angriffstypen: Ausführung, Dauerhaftigkeit, Privilegien-Eskalation, Zugang zu Anmeldeinformationen, Entdeckung, Seitliche Bewegung, Sammlung.

Gemäß einer weiteren bevorzugten Ausführungsform der vorliegenden Erfindung repräsentieren die Angriffsdateien oder Angriffscodes zumindest zu sechs unterschiedlichen Angriffstypen jeweils mehr als zwei und bevorzugt mehr als drei, insbesondere vier oder mehr als vier, unterschiedliche Angriffstechniken.

Gemäß einer weiteren bevorzugten Ausführungsform der vorliegenden Erfindung repräsentieren die Angriffsdateien Angriffe zu mehr als oder zu genau acht voneinander verschiedenen Angriffstypen repräsentieren und/oder die Angriffscodes repräsentieren Angriffe zu mehr als acht oder zu genau acht voneinander verschiedenen Angriffstypen repräsentieren.

Gemäß einer weiteren bevorzugten Ausführungsform der vorliegenden Erfindung sind die zumindest acht oder genau acht unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau acht unterschiedlichen Angriffstypen: Ausführung, Dauerhaftigkeit, Privilegien-Eskalation, Zugang zu Anmeldeinformationen, Entdeckung, Seitliche Bewegung, Sammlung, Kommando und Kontrolle.

Gemäß einer weiteren bevorzugten Ausführungsform der vorliegenden Erfindung ist zumindest eine Angriffsdatei die einen ersten Angriffstyp repräsentiert oder ein Angriffscode der einen ersten Angriffstyp repräsentiert bereitstellbar und zumindest eine Angriffsdatei, die einen zweiten Angriffstyp repräsentiert, oder ein Angriffscode, der einen zweiten Angriffstyp repräsentiert, ist bereitstellbar,
wobei die Angriffsdatei die den zweiten Angriffstyp repräsentiert oder der Angriffscode der den zweiten Angriffstyp repräsentiert in Abhängigkeit von der Angriffsdatei, die den ersten Angriffstyp repräsentiert, oder in Abhängigkeit von dem Angriffscode, der den ersten Angriffstyp repräsentiert, bereitstellbar ist.

Im Folgenden werden Angriffstypen und die von den Angriffstypen umfassten Angriffstechniken in deutscher und englischer Sprache wiedergegeben. Die Wiedergabe der Begriffe in beiden Sprachen soll helfen eine Unklarheit bzgl. dieser Begriffe zu vermeiden, da diese Begriffe in der Fachwelt (auch in der deutschen Fachwelt) im Wesentlichen in englischer Sprache verwendet werden und die jeweilige deutsche Übersetzung dem Fachmann fremd sein kann.

| Terminologie der Angriffe in deutscher Sprache | | | Terminologie der Angriffe in englischer Sprache | |
|---|---|---|---|---|
| Angriffstype n | Angriffstechniken | | Types of attack | Techniques of attack |
| | | | | |
| **Initialer** Zugang | | | **Initial** Access | |
| | Drive-by-Kompromittierung | | | Drive-by Compromise |
| | Öffentlich zugängliche Anwendung ausnutzen | | | Exploit Public-Facing Application |
| | Externe Entfernte Dienste | | | External Remote Services |
| | Hardware-Ergänzungen | | | Hardware Additions |
| | Phishing | | | Phishing |
| | Replikation über Wechselmedien | | | Replication Through Removable Media |
| | Kompromittierung der Lieferkette | | | Supply Chain Compromise |
| | Vertrauenswürdige Beziehung | | | Trusted Relationship |
| | Gültige Konten | | | Valid Accounts |

| Ausführung | | | Execution | |
|---|---|---|---|---|
| | Befehls- und Skriptinterpreter | | | Command and Scripting Interpreter |
| | Befehl "Container-Verwaltung" | | | Container Administration Command |
| | Container bereitstellen | | | Deploy Container |
| | Interprozessuale Kommunikation | | | Inter-Process Communication |
| | Native API | | | Native API |
| | Geplante Aufgabe/Auftrag | | | Scheduled Task/Job |
| | Gemeinsam genutzte Module | | | Shared Modules |
| | Tools für die Softwarebereitstellung | | | Software Deployment Tools |
| | Systemdienstleistungen | | | System Services |
| | Ausführung durch den Benutzer | | | User Execution |
| | Instrumentation für die Windows-Verwaltung | | | Windows Management Instrumentation |

| Dauerhaftig keit | | | Persistence | |
|---|---|---|---|---|
| | Manipulation von Konten | | | Account Manipulation |
| | BITS-Aufträge | | | BITS Jobs |
| | Start- oder Anmelde-Autostart-Ausführung | | | Boot or Logon Autostart Execution |
| | Start- oder Anmeldeinitialisierungssk ripts | | | Boot or Logon Initialization Scripts |
| | Browser-Erweiterungen | | | Browser Extensions |
| | Kompromittierung der Client-Software-Binärdatei | | | Compromise Client Software Binary |
| | Konto erstellen | | | Create Account |
| | Erstellen oder Ändern eines Systemprozesses | | | Create or Modify System Process |
| | Ereignisgesteuerte Ausführung | | | Event Triggered Execution |
| | Externe Entfernte Dienste | | | External Remote Services |
| | Übernahme des Kontrollflusses | | | Hijack Execution Flow |
| | Implantierung des internes Abbildes | | | Implant Internal Image |
| | Geänderter Authentifizierungsprozess | | | Modified Authentication Process |
| | Starten der Office-Anwendung | | | Office Application Startup |
| | Vor dem Start vor dem Betriebssystem | | | Pre-OS Boot |
| | Geplante Aufgabe/Auftrag | | | Scheduled Task/Job |
| | Server-Softwarekomponente | | | Server Software Component |
| | Signalisierung | | | Traffic Signaling |
| | Gültige Konten | | | Valid Accounts |

| Privilegien-Eskalation | | | Privilege Escalation | |
|---|---|---|---|---|
| | Missbrauch des Kontrollmechanismus | | | Abuse Elevation Control Mechanism |
| | Manipulation von Zugriffstoken | | | Access Token Manipulation |
| | Start- oder Anmelde-Autostart-Ausführung | | | Boot or Logon Autostart Execution |
| | Start- oder Anmeldeinitialisierungssk ripts | | | Boot or Logon Initialization Scripts |
| | Erstellen oder Ändern eines Systemprozesses | | | Create or Modify System Process |
| | Änderung der Domain-Richtlinie | | | Domain Policy Modification |
| | Ausbruch zum Gastgebersystem | | | Escape to Host |
| | Ereignisgesteuerte Ausführung | | | Event Triggered Execution |
| | Ausnutzung für die Rechteausweitung | | | Exploitation for Privilege Escalation |
| | Übernahme des Kontrollflusses | | | Hijack Execution Flow |
| | Prozess-Injektion | | | Process Injection |
| | Geplante Aufgabe/Auftrag | | | Scheduled Task/Job |
| | Gültige Konten | | | Valid Accounts |

| Umgehung der | | | Defense Evasion | |
|---|---|---|---|---|
| Verteidigun g | | | | |
| | Missbrauch des Kontrollmechanismus | | | Abuse Elevation Control Mechanism |
| | Manipulation von Zugriffstoken | | | Access Token Manipulation |
| | BITS-Aufträge | | | BITS Jobs |
| | Image auf Host erstellen | | | Build Image on Host |
| | Dateien oder Informationen entschleiern/dekodieren | | | Deobfuscate/Decode Files or Information |
| | Container bereitstellen | | | Deploy Container |
| | Direkter Volume-Zugriff | | | Direct Volume Access |
| | Änderung der Domain-Richtlinie | | | Domain Policy Modification |
| | Leitplanken für die Ausführung | | | Execution Guardrails |
| | Ausnutzung zur Umgehung der Verteidigung | | | Exploitation for Defense Evasion |
| | Änderung von Datei- und Verzeichnisberechtigunge n | | | File and Directory Permissions Modification |
| | Artefakte verschleiern | | | Hide Artifacts |
| | Übernahme des Kontrollflusses | | | Hijack Execution Flow |
| | Beeinträchtigung der Abwehr | | | Impair Defenses |
| | Entfernen eines Indikators | | | Indicator Removal |
| | Indirekte Befehlsausführung | | | Indirect Command Execution |
| | Maskierung | | | Masquerading |
| | Ändern des Authentifizierungsprozess es | | | Modify Authentication Process |
| | Ändern der Cloud Compute-Infrastruktur | | | Modify Cloud Compute Infrastructure |
| | Registrierung ändern | | | Modify Registry |
| | Systemabbild ändern | | | Modify System Image |
| | Überbrückung von Netzwerkgrenzen | | | Network Boundary Bridging |
| | Verschleierte Dateien oder Informationen | | | Obfuscated Files or Information |
| | Änderung der Plist-Datei | | | Plist File Modification |
| | Ausführung von Schadecode vor dem Betriebssystemstart | | | Pre-OS Boot |
| | Prozess-Injektion | | | Process Injection |
| | Reflektierendes Laden von Codes | | | Reflective Code Loading |
| | Nicht autorisierter Domänencontroller | | | Rogue Domain Controller |
| | Rootkit | | | Rootkit |
| | Ausführung signierter binärer Proxys | | | Signed Binary Proxy Execution |
| | Ausführung des signierten Skript-Proxys | | | Signed Script Proxy Execution |
| | Untergrabung von Vertrauenskontrollen | | | Subvert Trust Controls |
| | Template-Injektion | | | Template Injection |
| | Signalisierung | | | Traffic Signaling |
| | Proxy-Ausführung von Trusted Developer Utilities | | | Trusted Developer Utilities Proxy Execution |
| | Nicht verwendete/nicht unterstützte Cloud-Regionen | | | Unused/Unsupported Cloud Regions |
| | Alternatives Authentifizierungsmaterial verwenden | | | Use Alternate Authentication Material |
| | Gültige Konten | | | Valid Accounts |
| | Virtualisierung/Sandbox-Umgehung | | | Virtualization/Sandbox Evasion |
| | Schwächung der Verschlüsselung | | | Weaken Encryption |
| | XSL-Skriptverarbeitung | | | XSL Script Processing |

| **Zugang zu Anmeldeinfo rmationen** | | | **Credential Access** | |
|---|---|---|---|---|
| | Mitschneiden und verändern von Authentifizierungsdaten | | | Adversary-in-the-Middle |
| | Brute Force | | | Brute Force |
| | Anmeldeinformationen aus Passwort-Speicher | | | Credentials from Password Stores |
| | Ausnutzung für den Zugriff auf Anmeldeinformationen | | | Exploitation for Credential Access |
| | Erzwungene Authentifizierung | | | Forced Authentication |
| | Fälschen von Web-Anmeldeinformationen | | | Forge Web Credentials |
| | Mitschneiden von Eingaben | | | Input Capture |
| | Ändern des Authentifizierungsprozess es | | | Modify Authentication Process |
| | Abfangen der Multi-Faktor-Authentifizierung | | | Multi-Factor Authentication Interception |
| | Generierung von Multi-Faktor-Authentifizierungsanfrage n | | | Multi-Factor Authentication Request Generation |
| | Abhören des Netzwerkverkehrs | | | Network Sniffing |
| | Auslesen von Betriebssystem-Anmeldeinformationen | | | OS Credential Dumping |
| | Stehlen des Anwendungszugriffstoken s | | | Steal Application Access Token |
| | Stehlen oder Fälschen des Anwendungszugriffstoken s | | | Steal or Forge Authentication Certificates |
| | Stehlen oder Fälschen des Kerberos-Tickets | | | Steal or Forge Kerberos Tickets |
| | Entwendung der Websitzungs-Cookies | | | Steal Web Session Cookie |
| | Ungesicherte Anmeldeinformationen | | | Unsecured Credentials |

| **Entdeckung** | | | **Discovery** | |
|---|---|---|---|---|
| | Konto-Erkennung | | | Account Discovery |
| | Erkennung von Anwendungsfenstern | | | Application Window Discovery |
| | Erkennung von Browser-Informationen | | | Browser Information Discovery |
| | Erkennung von Cloud-Infrastrukturen | | | Cloud Infrastructure Discovery |
| | Cloud-Service-Dashboard | | | Cloud Service Dashboard |
| | Erkennung von Cloud-Diensten | | | Cloud Service Discovery |
| | Container- und Ressourcenermittlung | | | Container and Resource Discovery |
| | Erkennung von Domänenvertrauen | | | Domain Trust Discovery |
| | Datei- und Verzeichniserkennung | | | File and Directory Discovery |
| | Ermittlung von Gruppenrichtlinien | | | Group Policy Discovery |
| | Erkennung von Netzwerkdiensten | | | Network Service Discovery |
| | Ermittlung von Netzwerkfreigaben | | | Network Share Discovery |
| | Abhören des Netzwerkverkehrs | | | Network Sniffing |
| | Erkennung von Kennwortrichtlinien | | | Password Policy Discovery |
| | Erkennung von Peripheriegeräten | | | Peripheral Device Discovery |
| | Erkennung von Berechtigungsgruppen | | | Permission Groups Discovery |
| | Prozess-Erkennung | | | Process Discovery |
| | Registrierung abfragen | | | Query Registry |
| | Remote-Systemerkennung | | | Remote System Discovery |
| | Software-Erkennung | | | Software Discovery |
| | Erkennung von Systeminformationen | | | System Information Discovery |
| | Ermittlung des Systemstandorts | | | System Location Discovery |
| | Ermittlung der Systemnetzwerkkonfigura tion | | | System Network Configuration Discovery |
| | Erkennung von Systemnetzwerkverbindu ngen | | | System Network Connections Discovery |
| | Erkennung von Systembesitzern/Benutze rn | | | System Owner/User Discovery |
| | Erkennung von Systemdiensten | | | System Service Discovery |
| | Ermittlung der Systemzeit | | | System Time Discovery |
| | Virtualisierung/Sandbox-Umgehung | | | Virtualization/Sandbox Evasion |

| **Seitliche Bewegung** | | | **Lateral Movement** | |
|---|---|---|---|---|
| | Ausnutzung von Remote-Diensten | | | Exploitation of Remote Services |
| | Internes Spearphishing | | | Internal Spearphishing |
| | Transfer von Werkzeugen über interne Systeme | | | Lateral Tool Transfer |
| | Übernahme von Entfernten-Dienst-Sitzungen | | | Remote Service Session Hijacking |
| | Entfernte Dienste | | | Remote Services |
| | Replikation über Wechselmedien | | | Replication Through Removable Media |
| | Tools für die Softwarebereitstellung | | | Software Deployment Tools |
| | Marktierte Freigegebene Inhalte | | | Taint Shared Content |
| | Alternatives Authentifizierungsmaterial verwenden | | | Use Alternate Authentication Material |

| **Sammlung** | | | **Collection** | |
|---|---|---|---|---|
| | Mitschneiden und verändern von Authentifizierungsdaten | | | Adversary-in-the-Middle |
| | Archivierung gesammelter Daten | | | Archive Collected Data |
| | Audioaufnahme | | | Audio Capture |
| | Automatisierte Informationssammlung | | | Automated Collection |
| | Browser-Sitzungsübernahme | | | Browser Session Hijacking |
| | Daten aus der Zwischenablage | | | Clipboard Data |
| | Daten aus dem Cloud-Speicher | | | Data from Cloud Storage |
| | Daten aus dem Konfigurations-Repository | | | Data from Configuration Repository |
| | Daten aus Informationsrepositorien | | | Data from Information Repositories |
| | Daten aus dem lokalen System | | | Data from Local System |
| | Daten von freigegebenen Netzwerklaufwerken | | | Data from Network Shared Drive |
| | Daten von Wechselmedien | | | Data from Removable Media |
| | Bereitgestellte Daten | | | Data Staged |
| | Sammlung von E-Mails | | | Email Collection |
| | Mitschneiden von Eingaben | | | Input Capture |
| | Bildschirmaufnahme | | | Screen Capture |
| | Videoaufnahme | | | Video Capture |

| **Kommando und Kontrolle** | | | **Command and Control** | |
|---|---|---|---|---|
| | Protokoll der Anwendungsschicht | | | Application Layer Protocol |
| | Kommunikation über Wechselmedien | | | Communication Through Removable Media |
| | Datenkodierung | | | Data Encoding |
| | Verschleierung von Daten | | | Data Obfuscation |
| | Dynamische Auflösung | | | Dynamic Resolution |
| | Verschlüsselter Kanal | | | Encrypted Channel |
| | Fallback-Kanäle | | | Fallback Channels |
| | Übergabe von Eingangswerkzeugen | | | Ingress Tool Transfer |
| | Mehrstufige Kanäle | | | Multi-Stage Channels |
| | Nicht-Anwendungsschicht-Protokoll | | | Non-Application Layer Protocol |
| | Nicht standardmäßiger Anschluss | | | Non-Standard Port |
| | Protokolltunnel | | | Protocol Tunneling |
| | Proxy | | | Proxy |
| | Software für den Fernzugriff | | | Remote Access Software |
| | Signalisierung | | | Traffic Signaling |
| | Webservice | | | Web Service |

| **Exfiltration** | | | **Exfiltration** | |
|---|---|---|---|---|
| | Automatisierte Exfiltration | | | Automated Exfiltration |
| | Größenbeschränkungen für die Datenübertragung | | | Data Transfer Size Limits |
| | Exfiltration über alternatives Protokoll | | | Exfiltration Over Alternative Protocol |
| | Exfiltration über C2-Kanal | | | Exfiltration Over C2 Channel |
| | Exfiltration über ein anderes Netzwerkmedium | | | Exfiltration Over Other Network Medium |
| | Exfiltration über physisches Medium | | | Exfiltration Over Physical Medium |
| | Exfiltration über Webdienst | | | Exfiltration Over Web Service |
| | Geplante Übertragung | | | Scheduled Transfer |

| **Auswirkung** | | | **Impact** | |
|---|---|---|---|---|
| | Entfernung des Kontozugriffs | | | Account Access Removal |
| | Datenvernichtung | | | Data Destruction |
| | Daten werden für die Auswirkungen verschlüsselt | | | Data Encrypted for Impact |
| | Datenmanipulation | | | Data Manipulation |
| | Entstellung | | | Defacement |
| | Festplatte löschen | | | Disk Wipe |
| | Denial-of-Service für Endpunkte | | | Endpoint Denial of Service |
| | Firmware-Beschädigung | | | Firmware Corruption |
| | Systemwiederherstellung blockieren | | | Inhibit System Recovery |
| | Netzwerk-Denial-of-Service | | | Network Denial of Service |
| | Ressourcenübernahme | | | Resource Hijacking |
| | Stoppen es Dienstes | | | Service Stop |
| | Herunterfahren/Neustart des Systems | | | System Shutdown/Reboot |

Gemäß einer bevorzugten Ausführungsform der vorliegenden Erfindung sind zumindest zwei Zuordnungsmittel genau zwei Geräten der mehreren Geräte unmittelbar zugeordnet, wobei ein erstes Zuordnungsmittel der beiden Zuordnungsmittel einem ersten Gerät der zwei Geräte zugeordnet ist und wobei das zweite Zuordnungsmittel der zwei Zuordnungsmittel einem zweiten Gerät der zwei Geräte zugeordnet ist.

Zumindest das erste Zuordnungsmittel ist gemäß einer weiteren bevorzugten Ausführungsform der vorliegenden Erfindung ein erstes Kommunikations- und Verarbeitungsprogramm, wobei das erste Kommunikations- und Verarbeitungsprogramm von einer Prozessoreinrichtung des ersten Geräts zum Empfang der Angriffsdatei und/oder des Angriffscodes zum Auslösen der Aktivität ausführbar ist und das zweite Zuordnungsmittel ein zweites Kommunikations- und Verarbeitungsprogramm ist, wobei das zweite Kommunikations- und Verarbeitungsprogramm von einer Prozessoreinrichtung des zweiten Geräts zum Empfang der Angriffsdatei und/oder des Angriffscodes zum Auslösen der Aktivität ausführbar ist.

Zumindest das erste Zuordnungsmittel ist bevorzugt ein erstes Kommunikations- und Verarbeitungsprogramm, wobei eine Prozessoreinrichtung des ersten Geräts zum Ausführen des ersten Kommunikations- und Verarbeitungsprogramms zum Empfang der Angriffsdatei und/oder des Angriffscodes zum Auslösen der Aktivität konfiguriert ist und das zweite Zuordnungsmittel ein zweites Kommunikations- und Verarbeitungsprogramm ist, wobei eine Prozessoreinrichtung von dem zweiten Gerät zum Ausführen des zweiten Kommunikations- und Verarbeitungsprogramms zum Empfang der Angriffsdatei und/oder des Angriffscodes zum Auslösen der Aktivität konfiguriert ist.

Die Ausführungsform ist vorteilhaft, da, unter Berücksichtigung unterschiedlicher und sich ändernder Angriffsverfahren sowie unter Berücksichtigung unterschiedlicher und sich ändernder hybriden IT-Betriebsumgebung/en, für die Prozessoreinrichtung eine Struktur geschaffen wird, die, ausgerichtet an die Gegebenheiten der zugrunde gelegten Angriffsverfahren und/oder der vorliegenden hybriden IT-Betriebsumgebung, spezifisch angepasst werden kann.

Die Prozessoreinrichtung/en weist bzw. weisen bevorzugt mehrere Funktionsblöcke auf. Die Funktionsblöcke der Prozessoreinrichtung/en sind aufgrund der Aufteilung bevorzugt eigenständig und besonders bevorzugt unabhängig voneinander in der Lage, Instruktionen zu empfangen, diese selbstständig zu prozessieren sowie im Weiteren Angriffe auszuführen.

Beispiele für mögliche Funktionsblöcke sind: "Kommunikation", "Datenaufbereitung" und "Angriffsausführung". Bevorzugt sind drei oder mindestens drei Funktionsblöcke je Prozessoreinrichtung vorgesehen.

Beispielsweise kann mit Hilfe des Funktionsblocks Kommunikation eine Verbindung zu einer Datenbank aufgebaut werden, um über diesen Weg Informationen und Daten zu empfangen, wobei es sich inhaltlich beispielsweise um Angriffsdateien handelt kann, die Instruktionen zur Ausführung von Angriffen enthalten können.

Beispielsweise können mit Hilfe des Funktionsblocks Datenaufbereitung die von der Datenbank empfangenen Informationen mit Hilfe eigener Logik eigenständig und/oder kontextbezogen modifiziert werden, um auf diese Weise die Ausführung von Angriffen vorzubereiten.

Beispielsweise können mit Hilfe des Funktionsblocks Angriffsausführung die vorbereiteten Informationen ausgeführt werden, wobei beispielsweise vorbereitete Datensequenzen mit Schad-Code gezielt an Ziele der hybriden IT-Betriebsumgebung zu einem vorgegebenen Zeitpunkt verschickt werden.

Durch das erste Kommunikations- und Verarbeitungsprogramm ist die Angriffsdatei und/oder der Angriffscode gemäß einer weiteren bevorzugten Ausführungsform der vorliegenden Erfindung durch die Prozessoreinrichtung des ersten Geräts und/oder eine weitere Ausführungskomponente des ersten Geräts, insbesondere GPU oder CPU, ausführbar. Durch das zweite Kommunikations- und Verarbeitungsprogramm ist bevorzugt die Angriffsdatei und/oder der Angriffscode durch die Prozessoreinrichtung des zweiten Geräts und/oder eine weitere Ausführungskomponente des zweiten Geräts, insbesondere GPU oder CPU, ausführbar.

Das erste Kommunikations- und Verarbeitungsprogramm ist bevorzugt zum Ausführen der Angriffsdatei und/oder des Angriffscodes durch die Prozessoreinrichtung des ersten Geräts und/oder eine weitere Ausführungskomponente des ersten Geräts, insbesondere GPU oder CPU, konfiguriert und wobei das zweite Kommunikations- und Verarbeitungsprogramm zum Ausführen der Angriffsdatei und/oder des Angriffscodes durch die Prozessoreinrichtung des zweiten Geräts und/oder eine weitere Ausführungskomponente des zweiten Geräts, insbesondere GPU oder CPU, konfiguriert ist.

Die Ausführungsform ist vorteilhaft, da für die Umsetzung von Angriffen in einem digitalen Umfeld eine digitale Prozessor-Einheit eine hohe Flexibilität mitbringt, um Kommunikationsaufgaben, Aufgaben der Modifikation und/oder Aufgaben der Ausführung durchzuführen.

In einer konkreten Ausführungsform kann zu diesem Zweck beispielsweise ein Einplatinen-Computer, beispielsweise in Form des Modells Raspberry Pi^{®} 5 B 8 GB 4 x 2.4 GHz, eingesetzt werden, um die Funktionsblöcke, insbesondere für die Kommunikation, die Datenaufbereitung und die Angriffsausführung, abzubilden. Die Ausführung eines Funktionsblocks oder mehrerer Funktionsblöcke kann die Nutzung von Kommunikations-, Speicher- und Prozessor-Ressourcen erfordern, die vom Einplatinen-Computer dediziert oder geteilt zur Verfügung stellbar sind.

Hierbei kann die Ausführung der Prozessoreinrichtung hinsichtlich der Kommunikations-Einheit, Speicher-Einheit und Prozessor-Einheiten bevorzugt so beschaffen sein, dass sie den konkreten Leistungsfähigkeitsanforderungen, Resilienz-Anforderungen, Datenschutzanforderungen und/oder Verschlüsselungsanforderungen genügt.

Eine weitere Ausführungsform umfasst bevorzugt die räumliche Aufteilung der Funktionsblöcke für Kommunikation, Datenaufbereitung und Angriffsausführung über mehrere Module, Geräte und/oder Rechenzentren, wobei interne Verwaltungseinheiten, insbesondere der jeweiligen Prozessoreinrichtung/en, als jeweiliger Bestandteil der Funktionsblöcke die Verwaltung der Ressourcen sicherstellen und unterstützen.

Eine weitere Ausführungsform umfasst bevorzugt die räumliche Aufteilung der Prozessoreinrichtung zur Bereitstellung der Kommunikations-, Speicher- und Prozessor-Ressourcen über mehrere Module, Geräte und/oder Rechenzentren, wobei interne Verwaltungseinheiten als jeweiliger Bestandteil der Prozessoreinrichtung/en und/oder als Teil der Funktionsblöcke die Verwaltung der Ressourcen sicherstellen und unterstützen.

Zumindest das erste Zuordnungsmittel ist gemäß einer weiteren bevorzugten Ausführungsform der vorliegenden Erfindung eine erste Kommunikations- und Verarbeitungseinrichtung zum Ausführen eines ersten Kommunikations- und Verarbeitungsprogramms, wobei die erste Kommunikations- und Verarbeitungseinrichtung zumindest eine erste Kommunikationsverbindung zum ersten Gerät aufweist, und zumindest das zweite Zuordnungsmittel ist eine zweite Kommunikations- und Verarbeitungseinrichtung zum Ausführen eines zweiten Kommunikations- und Verarbeitungsprogramms, wobei die zweite Kommunikations- und Verarbeitungseinrichtung zumindest eine zweite Kommunikationsverbindung zum zweiten Gerät aufweist.

Diese Ausführungsform ist vorteilhaft, da es für die Erkennungsfähigkeit hilfreich ist, Angriffe sowohl direkt über ein Gerät der hybriden IT-Betriebsumgebung als auch indirekt über mehrere Geräte der hybriden IT-Betriebsumgebung auszuführen.

Zur direkten Ausführung eines Angriffs wird bevorzugt eine direkte Kommunikationsverbindung zwischen Kommunikations- und Verarbeitungseinrichtung und Gerät A verwendet.

In der indirekten Ausführung eines Angriffs wird bevorzugt eine Kommunikationsverbindung zwischen der Kommunikations- und Verarbeitungseinrichtung und einem Gerät B verwendet, wobei das Systemverhalten des Geräts B wiederum einen Einfluss auf das Gerät A haben kann, was ebenfalls einer Kommunikationsbeziehung für einen Angriff entsprechen kann.

Die Kommunikationsbeziehung kann ein oder mehrere oder weniger als 7 oder weniger als 6 oder weniger als 5 OSI-Layer und bevorzugt alle OSI-Layer umfassen. Bevorzugt kann die Kommunikationsbeziehung durch eine Ende-zu-Ende Leistungsfähigkeit und/oder die Ende-zu-Ende Freischaltung auf den erforderlichen OSI-Layer, insbesondere unter Berücksichtigung der jeweiligen Verschlüsselung, gekennzeichnet sein.

Das erste Kommunikations- und Verarbeitungsprogramm ist gemäß einer weiteren bevorzugten Ausführungsform der vorliegenden Erfindung von einer Prozessoreinrichtung der ersten Kommunikations- und Verarbeitungseinrichtung zum Empfang der Angriffsdatei und/oder des Angriffscodes ausführbar, wobei die Angriffsdatei und/oder der Angriffscodes mittels des ersten Kommunikations- und Verarbeitungsprogramms zur Manipulation des ersten Geräts über die erste Kommunikationsverbindung zum Auslösen der Aktivität ausführbar ist, und das zweite Kommunikations- und Verarbeitungsprogramm ist bevorzugt von einer Prozessoreinrichtung der zweiten Kommunikations- und Verarbeitungseinrichtung zum Empfang der Angriffsdatei und/oder des Angriffscodes ausführbar, wobei die Angriffsdatei und/oder der Angriffscodes mittels des zweiten Kommunikations- und Verarbeitungsprogramms zur Manipulation des zweiten Geräts über die zweite Kommunikationsverbindung zum Auslösen der Aktivität ausführbar ist.

Das erste Kommunikations- und Verarbeitungsprogramm ist bevorzugt zum Ausführen durch eine Prozessoreinrichtung der ersten Kommunikations- und Verarbeitungseinrichtung zum Empfang der Angriffsdatei und/oder des Angriffscodes konfiguriert, wobei die Angriffsdatei und/oder der Angriffscodes zum Ausführen mittels des ersten Kommunikations- und Verarbeitungsprogramms zur Manipulation des ersten Geräts über die erste Kommunikationsverbindung zum Auslösen der Aktivität konfiguriert ist, und das zweite Kommunikations- und Verarbeitungsprogramm zum Ausführen durch eine Prozessoreinrichtung der zweiten Kommunikations- und Verarbeitungseinrichtung ist zum Empfang der Angriffsdatei und/oder des Angriffscodes konfiguriert, wobei die Angriffsdatei und/oder der Angriffscodes zum Ausführen mittels des zweiten Kommunikations- und Verarbeitungsprogramms zur Manipulation des zweiten Geräts über die zweite Kommunikationsverbindung zum Auslösen der Aktivität konfiguriert ist.

Diese Ausführungsform ist vorteilhaft, da zur gezielten Ausführung eines Angriffs dieser in den spezifischen Kontext stellbar und vorbereitbar ist.

Die Anpassungen an die spezifische Umgebung durch Anreicherung des Angriffs mit spezifischen Daten kann mit Hilfe des Kommunikations- und Verarbeitungsprogramms erfolgen. Zu diesem Zweck werden je nach Ausführungsform vom Kommunikations- und Verarbeitungsprogramms Umgebungsparameter abgefragt und/oder gesammelt. Sie sind die bevorzugten Eingangsparameter für die spezifische Anpassung des jeweils vorgesehenen Angriffs, wobei beispielsweise Befehlssequenzen ergänzt oder angepasst werden können.

Die Ausführung eines Angriffs erfolgt bevorzugt derart, dass diese Daten über die Kommunikationsverbindung direkt an das Gerät versandt werden, um von diesem empfangen und verarbeitet zu werden, oder indirekt an die Geräte versandt werden, um von diesen empfangen und verarbeitet zu werden.

Zumindest das erste Zuordnungsmittel ist gemäß einer weiteren bevorzugten Ausführungsform der vorliegenden Erfindung eine erste Kommunikations- und Verarbeitungseinrichtung zum Ausführen eines Kommunikations- und Verarbeitungsprogramms, wobei die erste Kommunikations- und Verarbeitungseinrichtung zumindest eine Kommunikationsverbindung zum ersten Gerät aufweist, wobei das Kommunikations- und Verarbeitungsprogramm bevorzugt von einer Prozessoreinrichtung der ersten Kommunikations- und Verarbeitungseinrichtung zum Empfang der Angriffsdatei und/oder des Angriffscodes ausführbar ist, wobei die Angriffsdatei und/oder der Angriffscodes mittels des Kommunikations- und Verarbeitungsprogramms zur Manipulation des ersten Geräts über die erste Kommunikationsverbindung zum Auslösen der Aktivität ausführbar ist. Zusätzlich kann das zweite Zuordnungsmittel ein zweites Kommunikations- und Verarbeitungsprogramm sein, wobei das zweite Kommunikations- und Verarbeitungsprogramm bevorzugt von einer Prozessoreinrichtung des zweiten Geräts zum Empfang der Angriffsdatei und/oder des Angriffscodes zum Auslösen der Aktivität ausführbar ist, wobei durch das zweite Kommunikations- und Verarbeitungsprogramm die Angriffsdatei und/oder der Angriffscode durch die Prozessoreinrichtung des zweiten Geräts und/oder eine weitere Ausführungskomponente des zweiten Geräts, insbesondere GPU oder CPU, ausführbar ist.

Einzelne, mehrere oder alle Zuordnungsmittel können bevorzugt in Abhängigkeit von einem oder mehreren Geräteparameter/n und/oder hybriden IT-Betriebsumgebungsparameter/n und/oder Datum und/oder Uhrzeit des jeweiligen Geräts die Ausführung der Angriffe selbständig steuern, z.B. Zeitversatz, Reihenfolge und/oder Dauer. Die selbständige Ansteuerung erfolgt bevorzugt regelbasiert, insbesondere Algorithmus- oder Kl- gesteuert.

Diese Ausführungsform ist vorteilhaft, da der Erfolg eines Angriffs z.B. durch situative Parameter und/oder den jeweiligen Zeitpunkt beeinflusst werden kann.

Das bzw. die Zuordnungsmittel berücksichtigen beispielsweise Datum und/oder Uhrzeit, die Zieladresse des Geräts, Geräteparameter/n und/oder weitere Kenngröße/n aus der hybriden IT-Betriebsumgebung, anhand derer der Angriff entsprechend ausgeführt wird.

In einer Ausführungsform des Angriffs "Brute Force" werden beispielsweise von einem Zuordnungsmittel aus systematisch voneinander abweichende Anmeldeversuche (Nutzer-Passwort-Varianten) auf einem Gerät wiederholt ausgeübt, das unter anderem durch seine IP-Adresse einer Netzwerkzone gekennzeichnet ist.

In einer Ausführungsform werden die Passwort-Varianten beispielsweise den vorgegebenen Einträgen einer Datenbank entnommen und jeweils wiederholt ausgeführt.

In einer anderen Ausführungsform werden die Anmeldeversuche gemäß einer Algorithmus-Vorschrift zuvor berechnet und jeweils wiederholt ausgeführt, wobei in jedem Schritt der Berechnung die Passwort-Sequenz um den Binärwert "1" erhöht wird.

In einer anderen Ausführungsform werden die Anmeldeversuche gemäß einer Algorithmus-Vorschrift zuvor berechnet und jeweils wiederholt ausgeführt, wobei in Abhängigkeit der Informationen über die hybriden IT-Betriebsumgebungsparameter, insbesondere der Informationen über die Netzwerkzone und über die IP-Adresse, in jedem Schritt der Berechnung die Passwort-Sequenz alphabetisch erhöht und über die ASCII Code Umrechnung errechnet wird, wobei abhängig von der Netzwerkzonen-seitigen Zuordnung der Region die Zeichen des regional verwendeten Alphabets verwendet werden.

In einer anderen Ausführungsform werden die Anmeldeversuche gemäß einer Algorithmus-Vorschrift zuvor berechnet und jeweils wiederholt ausgeführt, wobei in Abhängigkeit einer bereits zuvor erhaltenen Systemantwort von dem Gerät, die beispielsweise auf einen bestimmten Gerätetyp schließen lässt, die Ausführung der Nutzer-Passwort-Varianten auf eine Gerätetyp-spezifische bestimmte Anzahl pro Zeit limitiert wird.

Ein Angriff kann in einem Gerät oder in mehreren Geräten die Erzeugung von Daten zur Folge haben. Sobald der Angriff vollständig ausgeführt wurde, wird besonders bevorzugt eine Post-Routine nach dem Angriff ausgeführt, der sämtliche im Rahmen des Angriffs erzeugten Daten wieder löscht und das Zielsystem in einen Clean-State zurückführt. Bei dem Clean-State handelt es sich um den unveränderten Zustand des Geräts, in welchem das Gerät sich vor dem Angriff befand.

Auf diese Weise wird sichergestellt, dass das Zielsystem dauerhaft einsatzbereit bleibt und Angriffsverfahren auch auf Produktivsystemen der hybriden IT-Betriebsumgebung zum Einsatz kommen können.

Mehrere oder alle Detektionsmittel sind gemäß einer weiteren bevorzugten Ausführungsform der vorliegenden Erfindung Dokumentations- und Kommunikationsprogramme zum Erzeugen und Bereitstellen der Aktivitätsdaten.

Diese Ausführungsform zum Erkennen von Angriffen über mehrere Detektionsmittel ist in der Praxis vorteilhaft, da Angriffe oftmals über Merkmale am Gerät selbst aber auch indirekt über Sekundär-Merkmale anderer Geräte festgestellt werden, um beispielweise über diesen Weg die unterschiedlichen Reaktionen und Systemantworten eines Angriffs berücksichtigen zu können.

Die Detektionsmittel stellen bevorzugt sicher, dass die Aktivitätsdaten aufbereitet, aggregiert und/oder zusammenfasst werden. Bevorzugt sind die Ergebnisse an eine Master-Instanz weiterleitbar, bevorzugt direkt durch das Detektionsmittel oder indirekt durch ein weiteres Gerät, wie z.B. ein weiteres Detektionsmittel.

Aus Gründen der Erkennungsfähigkeit und der Resilienz arbeiten die Detektionsmittel bevorzugt unabhängig voneinander.

Die Dokumentations- und Kommunikationsprogramme sind gemäß einer weiteren bevorzugten Ausführungsform der vorliegenden Erfindung von den Geräten ausführbar. Zusätzlich oder alternativ sind ein oder mehrere zentrale Dokumentations- und Kommunikationsprogramme vorgesehen, wobei das eine zentrale oder die mehreren zentrale Dokumentations- und Kommunikationsprogramme von einer Masterinstanz ausführbar ist/sind. Zusätzlich oder alternativ sind zumindest zwei Dokumentations- und Kommunikationseinrichtungen zum Ausführen von Dokumentations- und Kommunikationsprogrammen vorgesehen, wobei eine erste Dokumentations- und Kommunikationseinrichtung der zumindest zwei Dokumentations- und Kommunikationseinrichtungen zum Ausführen eines ersten Dokumentations- und Kommunikationsprogramms konfiguriert ist, wobei die erste Dokumentations- und Kommunikationseinrichtung zumindest mittels einer ersten Datenverbindung mit einem der Geräte verbunden ist und wobei eine zweite Dokumentations- und Kommunikationseinrichtung der zumindest zwei Dokumentations- und Kommunikationseinrichtungen zum Ausführen eines zweiten Dokumentations- und Kommunikationsprogramms konfiguriert ist, wobei die zweite Dokumentations- und Kommunikationseinrichtung zumindest mittels einer zweiten Datenverbindung mit einem anderen der Geräte verbunden ist.

Die Ausbildung eines bzgl. eines konkreten Geräts vorgesehenen Detektionsmittels ist bevorzugt unabhängig von der Ausbildung eines bzgl. des konkreten Geräts vorgesehenen Zuordnungsmittels. Es ist alternativ jedoch auch möglich, dass eine Datenverarbeitungseinrichtung mit insbesondere einer CPU, APU oder GPU, mind. einem Speicher, insbesondere RAM oder HDD oder SSD, und mind. einem Interface, insbesondere ein LAN-, WLAN- oder BT-Interface, zum Ausführen der Funktion von mehreren Zuordnungsmitteln und/oder Detektionsmitteln vorgesehen ist. Beispielsweise kann die Datenverarbeitungseinrichtung mit insbesondere einer CPU, APU oder GPU, mind. einem Speicher, insbesondere RAM oder HDD oder SSD, und mind. einem Interface, insbesondere ein LAN-, WLAN- oder BT-Interface, bzgl. eines konkreten Geräts das Zuordnungsmittel und das Detektionsmittel ausbilden. Bevorzugt kann eine Datenverarbeitungseinheit, wie z.B. ein Einplatinen-Computer, zum Ausführen der Funktion von mehreren Zuordnungsmitteln und/oder von mehreren Detektionsmitteln oder von einem oder genau einem Zuordnungsmittel und mindestens oder genau einem Detektionsmittel oder von einem oder genau einem Detektionsmittel und mindestens oder genau einem Zuordnungsmittel vorgesehen sein.

Die Varianten-reichen Ausführungsformen des Detektionsmittel sind vorteilhaft, da auf diese Weise die unterschiedlichen IT-Security Bedrohungen im Kontext der unterschiedlich vorliegenden hybriden IT-Betriebsumgebungen berücksichtigt werden können.

Mit Hilfe unterschiedlicher Prozessor-Einheiten, Speicher-Einheiten und KommunikationsModulen ist es möglich, die benötigten Voraussetzungen zur Detektion der IT-sicherheitsrelevante Merkmale zu schaffen, um sie im Weiteren zum Zweck der Analyse zu verarbeiten und an die Master-Instanz zu überführen.

In einer konkreten Ausführungsform kann zu diesem Zweck als Beispiel eines Detektionsmittels ein Einplatinen-Computer in Form des Modells Raspberry Pi^{®} 5 B 8 GB 4 x 2.4 GHz eingesetzt werden, bei dem Funktionsblöcke für die Datenaufnahme, die Datenaufbereitung für die Analyse und die Kommunikation und Datenweiterleitung unterschiedlich konfiguriert werden können. Hierbei kann der Einplatinen-Computer die Nutzung von Kommunikations-, Speicher- und Prozessor-Ressourcen dediziert oder geteilt zur Verfügung stellen.

Mehrere oder alle Detektionsmittel sind gemäß einer weiteren bevorzugten Ausführungsform der vorliegenden Erfindung Aufbereitungs- und Kommunikationsprogramme zum Aufbereiten, Erzeugen und Bereitstellen der Aktivitätsdaten.

Eine Variante eines Detektionsmittel, bei dem die Ausführungsform die Aufbereitungs- und Kommunikationsfunktion umfasst, ist insbesondere im Hinblick auf die Analyse vorteilhaft, da die IT-sicherheitsrelevanten Merkmale den detektierten Sequenzen in spezifischer Weise gezielt zu entnehmen und/oder aufzubereiten sind. In einem Fall kann es erforderlich sein, dass die relevanten Informationen zu entschlüsseln, zu transformieren, zu filtern und/oder in neuer Form zusammenzustellen sind.

Gemäß einer bevorzugten Ausführungsform sind einzelne oder mehrere der Aufbereitungs- und Kommunikationsprogramme dazu eingerichtet, die Aufgabe der Aufbereitung, Analyse und Kommunikation eigenständig auszuführen. Bevorzugt können die Abläufe der Teilprozesse jeweils durch die Umgebungsparameter beeinflusst werden.

Die Aufbereitungs- und Kommunikationsprogramme sind gemäß einer weiteren bevorzugten Ausführungsform der vorliegenden Erfindung von den Geräten umfänglich ausführbar. Zusätzlich und/oder alternativ sind ein oder mehrere zentrale Aufbereitungs- und Kommunikationsprogramme vorgesehen, wobei das eine zentrale oder die mehreren zentrale Aufbereitungs- und Kommunikationsprogramme von einer Masterinstanz ausführbar ist/sind. Zusätzlich und/oder alternativ sind zumindest zwei Aufbereitungs- und Kommunikationseinrichtungen zum Ausführen von Aufbereitungs- und Kommunikationsprogrammen vorgesehen, wobei eine erste Aufbereitungs- und Kommunikationseinrichtung der zumindest zwei Aufbereitungs- und Kommunikationseinrichtungen zum Ausführen eines ersten Aufbereitungs- und Kommunikationsprogramms konfiguriert ist, wobei die erste Aufbereitungs- und Kommunikationseinrichtung zumindest mittels einer ersten Datenverbindung mit einem der Geräte verbunden ist und wobei eine zweite Aufbereitungs- und Kommunikationseinrichtung der zumindest zwei Aufbereitungs- und Kommunikationseinrichtungen zum Ausführen eines zweiten Aufbereitungs- und Kommunikationsprogramms konfiguriert ist, wobei die zweite Aufbereitungs- und Kommunikationseinrichtung zumindest mittels einer zweiten Datenverbindung mit einem anderen der Geräte verbunden ist.

Diese Ausführungsform ist vorteilhaft, da die Erkennung der Merkmale über eine oder mehrere Kommunikationsverbindungen erfolgen kann, bei denen zum Erkennen von Angriffen über mehrere Detektionsmittel, die jeweils mit den Geräten zumindest signaltechnisch verbunden sind, eingesetzt, um bezogen auf einen Angriff die Antworten der mehreren Geräte berücksichtigen zu können.

Gemäß einer bevorzugten Ausführungsform können die Kommunikationsverbindungen die Anbindung an das SIEM umfassen.

Die Erkennung von Angriffen kann besonders bevorzugt in verschiedener Weise erfolgen: In einer Ausführungsform erkennt das Detektionsmittel beispielsweise auf Grundlage eines Mustervergleichs einen Angriff, wobei der Mustervergleich sowohl auf Grundlage von Process Identifier (PID), Zeichenkettenfolgen als auch auf Grundlage von abstrakteren Indikatoren, wie beispielsweise Befehlssequenzen oder Zeitstempel, erfolgen kann.

In einer Ausführungsform im Fall eines "Brute Force" Angriffs können z.B. mit Hilfe des Detektionsmittels die Protokollinhalte des Geräts im Hinblick auf erfolgreiche Anmeldungen auf Grundlage eines Mustervergleichs analysiert werden.

Ein erfolgreicher Mustervergleich kann z.B. vorliegen, wenn im Protokoll des Geräts der mit dem Angriff mitgegebene Process Identifier mit dem Process Identifier des "Brute Force" Angriffs übereinstimmt.

Ein zusätzlicher oder alternativer erfolgreicher Mustervergleich kann vorliegen, wenn der Zeitpunkt der Anmeldung am Gerät mit dem Zeitpunkt der "Brute Force" Ausführung übereinstimmt.

Im Fall einer Überreinstimmung wird der identifizierte Angriff im Detektionsmittel gespeichert sowie an die Master-Instanz weitergeleitet, um von der Master-Instanz weiterverarbeitet zu werden und eine Alarmierung auszulösen. Im Weiteren kann es die Aufgabe der Master-Instanz sein, einen erkannten Angriff an weitere Detektionsmittel zu verteilen sowie einen erkannten Angriff in einer Bibliothek-Datenbank zur Dokumentationszwecken zu speichern sowie in einem anderen Prozessschritt einen erkannten Angriff als Grundlage für die Entwicklung neuer Angriffe und/oder neuen Methoden von Mustererkennungen optional zu verwenden.

Diese Lösung ist ferner vorteilhaft, da der Schutz der IT-Infrastruktur/en und/oder Applikation/en als Teil des produktiven Umfelds unter Einbeziehung des vorliegenden SIEM-Systems erfolgen kann: Die etablierten Monitoring- und Alarmierungsfunktionen des SIEM-Systems können in einem bevorzugt automatisierten Prozess auf Basis selbst initiierter "Angriffe von außen" auf ihre Güte hin verifiziert und im Weiteren Korrekturmaßnahmen aufgezeigt werden; die zugrunde gelegte Bibliothek schafft die Möglichkeit, das SIEM-System systematisch zu schärfen und gegenüber neuen Angriffs-Szenarien vorzubereiten. Die Automatisierung einhergehend mit besonders kurzen Iterationszyklen spiegelt den Schutz-Status in Quasi-Echtzeit wider und erlaubt bevorzugt die sofortige Ableitung von Maßnahmen zur Erhöhung des IT-Schutzes und der Betriebssicherheit.

Damit liegt der Kundennutzen im Bereich der betrieblichen Aufgaben: In Verbindung mit dem jeweils vorliegendem SIEM-System ermöglicht die bevorzugte Lösung qualitativ das IT-Security Management im kontinuierlichen Prozess und stellt dauerhaft-aktuell das erforderliche IT-Sicherheitsniveau der hybriden IT-Betriebsumgebung in einem dynamischen Umfeld sicher. Effizienzgewinne können z.B. auf der Automatisierung und Fehlerfreiheit der Abläufe beruhen, die bevorzugt durch Systematik und Reproduzierbarkeit gekennzeichnet sein können. Der quantitative Nutzen liegt u.a. in der Fokussierung der meist knappen und teuren Manpower-Ressourcen: Die Mitarbeiter des SOC-Teams können sich den eigentlichen Alarmen widmen und werden bevorzugt nicht für wiederkehrende Administrationsaufgaben in Anspruch genommen.

Die Aktivitätsdaten der Detektionsmittel oder einzelner Detektionsmittel sind gemäß einer weiteren bevorzugten Ausführungsform der vorliegenden Erfindung an ein Security Incident and Event Management Einheit (SIEM-Einheit) der hybriden IT-Betriebsumgebung übermittelbar, wobei von der SIEM-Einheit die Aktivitätsdaten an die Analyseeinheit weiterleitbar sind oder wobei von der SIEM-Einheit die Aktivitätsdaten modifizierbar und an die Analyseeinheit weiterleitbar sind.

Diese Ausführungsform ist vorteilhaft, da die erkannten, aufbereiteten und analysierten Merkmale an das SIEM übermittelt werden können, um zum Beispiel einen Abgleich zwischen der Erkennungsfähigkeit des SIEM mit den Analyseergebnissen durchzuführen. Hierzu lassen sich die Ereignisse beispielsweise über Standard-Funktionen im SIEM des Herstellers ElasticSearch (https://www.elastic.co/de/security/siem) hochladen und anzeigen bzw. auswerten.

Die Übermittlung der Daten an das SIEM kann in einer Ausführungsform in direktem Austausch erfolgen. In einem anderen Fall kann die Übermittlung der Daten an das SIEM indirekt über die Master-Instanz erfolgen, wobei in diesem Fall mit Hilfe der Master-Instanz weitere Merkmale von anderen Detektionsmitteln in der Analyse mitberücksichtigt werden können und den Informationsgehalt anreichern können.

Für den Fall, dass die Detektionsmittel Aufbereitungs- und Kommunikationseinrichtungen sind und folglich bereits eine Aufbereitung vornehmen, so kann das SIEM entweder diese Aufbereitung nutzen oder weiter aufbereiten, insbesondere mit Daten anderer Detektionsmittel kombinieren.

Die Analyseeinheit und/oder die Angriffseinheit sind gemäß einer weiteren bevorzugten Ausführungsform der vorliegenden Erfindung über ein oder mehrere Gateways mit der hybriden IT-Betriebsumgebung zum Austausch von Daten zumindest zeitweise verbunden.

Diese Ausführungsform ist vorteilhaft, da sich beispielsweise die Master-Instanz räumlich getrennt von der hybriden IT-Betriebsumgebung befinden kann.

Zur Anbindung der räumlich getrennten Einheiten in Form eines integralen, funktionalen Verbunds können ein oder mehrere Gateways zum Einsatz kommen, die die Verbindung beispielsweise zwischen Master-Instanz und den Geräten innerhalb der hybriden IT-Betriebsumgebung sicherstellten und Agenten, Detektionsmittel und/oder das SIEM mit einschließen können.

In einer bevorzugten Ausführungsform kann das Gateway das Risiko der Kommunikation über ein nicht-vertrauenswürdiges Medium wie bspw. eine öffentliche Internet-Verbindung berücksichtigen. Zu Vermeidung des Risikos ist das Gateway bevorzugt zur Ausbildung einer Ende-zu-Ende Verschlüsslung eingerichtet.

Das Gateway ist eine Kommunikations-Einrichtung, die eine logische Punkt-zu-Punkt-Verbindung auf Sende- und Empfänger-Seite jeweils abschließt und die Verbindung mit Hilfe der Verschlüsselung gegen das Abhören absichert. Auf diese Weise ist es möglich, Teile des integralen, funktionalen Verbunds räumlich auszulagern.

Jede Gateway-Einrichtung ist gegen IT-Security Angriffe gehärtet und besteht aus einer gehärteten Prozessor-Einheit, einem gehärteten Speicher und gehärteten Kommunikationsmodulen, mit deren Hilfe Kommunikationssequenzen empfangen, verarbeitet, verschlüsselt bzw. entschlüsselt und an das Ziel weiterverschickt werden können.

Mittels des so genannten Gateways kann eine sichere Verbindung hergestellt werden. Beispielsweise kann das Zielsystem, welches ein Gateway beinhaltet, über das ungesicherte öffentliche Internet erreichbar sein. In diesem Zusammenhang kommt es mittels des Zuordnungsmittels zu einer Verbindung über das Internet zum Gateway und in Folge zu einer Verbindung zum eigentlichen Zielsystem.

Die Analyseeinheit und/oder die Angriffseinheit ist/sind gemäß einer weiteren bevorzugten Ausführungsform der vorliegenden Erfindung mit einer zumindest zeitweisen und bevorzugt kontinuierlich aktualisierbaren Datenbank verbunden, wobei die Datenbank Daten bzgl. IT-sicherheitsrelevanten Erkennungslücken zur Erzeugung von Angriffsdateien und/oder Angriffscodes aufweist.

Diese Ausführungsform ist vorteilhaft, da Angriffe von einer Datenbank geladen werden können, bei der - vergleichbar mit einer Bibliothek - die Angriffe zuvor von IT-Security Experten erstellt und/oder gesammelt und/oderaufbereitet und/oder zusammengestellt und zur Verfügung gestellt werden.

Eine andere Ausführungsform basiert auf einer dynamischen Datenbank, bei der die Systemantworten als Ergebnis der ausgeführten Angriffe kontextbezogen gesammelt, aufbereitet, analysiert und/oder zusammengestellt werden. Die Ergebnisse werden in der Bibliothek bereitgehalten, insbesondere auf Abruf bereitgestellt. Die Ergebnisse können besonders bevorzugt als Basis für die erneute Ausführung eines Angriffs verwendet werden.

Dies ist vorteilhaft, da dadurch die Grundlage für ein selbstständig rekursives Vorgehen geschaffen wird, wobei zusätzlich zu den in der Datenbank gespeicherten Ergebnissen zugeordnete Informationen über Qualität und Güte der Ergebnisse gespeichert werden können, anhand derer Erkenntnisse und Maßnahmen zum weiteren Vorgehen im Fall eines neuen Angriffs entnommen werden können, die sich auf die vorhandenen Ergebnisse stützen.

Im Zusammenhang mit der Speicherung der Angriffe, insbesondere zusätzlich zur Speicherung der Angriffe, können bevorzugt mit Hilfe der Datenbank eine, mehrere oder alle Sigma-Regeln gespeichert werden. Sigma-Regeln stellen die generalisierte Erkennungsregel dar und abstrahieren von spezifischen SIEM-Regeln, welche individuell für jedes SIEM-System sind.

Ein Beispiel einer solchen Regel kann wie folgt aussehen:

```
 title: Vulnerable WinRing0 Driver Load
 id: 1a42dfa6-6cb2-4df9-9b48-295be477e835
 status: test
 description: Detects the load of a signed WinRing0 driver often used by threat actors, crypto
 miners (XMRIG) or malware for privilege escalation
 references:
  - https://github.com/xmrig/xmrig/tree/master/bin/WinRing0
  - https://www.rapid7.com/blog/post/2021/12/13/driver-based-attacks-past-and-present/
 author: Florian Roth (Nextron Systems)
 date: 2022/07/26
 modified: 2022/11/19
 tags:
  - attack.privilege_escalation
  - attack.t1543.003
 logsource:
  product: windows
  category: driver_load
 detection:
  selection_name:
    ImageLoaded|endswith:
      - '\WinRing0x64.sys'
      - '\WinRing0.sys'
      - '\WinRing0.dll'
      - '\WinRing0x64.dll'
      - '\winring00x64.sys'
  selection_sysmon:
    Hasheslcontains: 'IMPHASH=D41FA95D4642DC981F10DE36F4DC8CD7'
  selection_other:
    Imphash: 'd41fa95d4642dc981f10de36f4dc8cd7'
  condition: 1 of selection*
  falsepositives:
  - Unknown
 level: high
```

Bei dem Beispiel handelt es sich um eine Sigma Regel aus dem Git-Repository des Sigma Projektes.

Quelle:
https://qithub.com/SigmaHQ/sigma/blob/master/rules/windows/driver load/driver load win v uln winring0 driver.yml (Zeitpunkt des Zugriffes 20.02.2024)

Im Rahmen der Aufgaben zur Erstellung, Sammlung, Aufbereitung, Analyse und/oder Zusammenstellung von Angriffen kommt bevorzugt ein Algorithmus und bevorzugt mehrere Algorithmen zum Einsatz. Bevorzugt kann die Steuerung von Prozessen durch den Algorithmus oder die Algorithmen bewirkt werden, wobei bei der Ausführung interne und externe Merkmale und Parameter berücksichtigt werden. Zusätzlich können Kl-gesteuerte Abläufe zum Einsatz kommen.

Ein Beispiel für einen Angriff, wie dieser auf Datenebene hinterlegt werden kann, findet sich in dem nachfolgenden Beispiel wieder (JSON):

```
 {
 "_id": {
  "$oid": "60f405bc1b9c751384cbaa3c"
 },
 "meta": {
  "name": "Boot or Logon Autostart Execution: Registry Run Keys / Startup Folder",
  "description": "Adversaries have the potential to establish persistence by incorporating a
 program into a startup folder or associating it with a Registry run key. The inclusion of an
 entry in the \"run keys\" within the Registry or startup folder initiates the execution of the
 referenced program upon user login. Consequently, these programs execute within the
 user's context and inherit the associated permissions level of the respective
 account.\n\nUpon successful execution, cmd.exe will modify the registry by adding
 \\\"NEON\\\" to the Run key and sets calc.exe as the target program.\n",
  "references": [],
  "tactic": "",
  "source": "neon",
  "importdate": "2023-04-07T17:30:26",
  "sourceuuid": "e55be3fd-3521-4610-9d1a-e210e42dcf05",
  "hash": "9a7ae08e993d461b5660b266ef959ebd4114f4a9",
  "tacticid": "TA0003",
  "tacticshortname": "persistence",
  "techniqueid": "T1547.001"
 }
 "check": {
  "preconditions": [],
  "os": [
   "windows"
  ],
  "elevated": false,
  "commands": [
   "REG ADD \"HKCU\\SOFTWARE\\Microsoft\\Windows\\CurrentVersion\\Run\" /V
   \"NEON\" /t REG_SZ /F /D \"#{command_to_execute}\""
  ],
  "inputs": [
   {
    "defaultValue": "C:\\Windows\\System32\\calc.exe",
    "description": "The program that will be executed on startup.",
    "name": "command_to_execute",
    "type": "path"
   }
  ],
  "cleanup": [],
  "executionenvironment": "cmd"
```

Der Angriffscode wird in diesem Beispiel verwendet, um Erkennungslücken aufzuzeigen. An dieser Stelle wird aus dem Eintrag "check.commands" der Angriffscode ausgelesen. Dieser wird über die Variablen in "check.inputs" angereichert. Außerdem werden im Vorfeld die Instruktionen aus "check.preconditions" (falls existent) ausgeführt und nach der Ausführung von "check.commands" werden die Instruktionen "check.cleanup" (falls existent) ausgeführt, sodass neben dem eigentlichen Angriff die zugehörigen Pre- und Post-Konditionen erfüllt werden.

Beispiele für einen Datenbankeintrag sind Angriffe in verschiedenster Form. Hierbei kann es sich um ein einfaches Kommando auf dem Zielsystem handeln oder um Speicher-bezogene Daten, welche im Speicher zur Ausführung kommen, oder um Skriptoperationen.

Ein derartiger Datenbankeintrag bzw. ein Angriffsverfahren kann dann auf einem Zuordnungsmittel zum Einsatz kommen, welches die Ausführung des Angriffes gewährleistet und Meta-Informationen zu diesem Angriff an das zentrale System zurückspielt.

Diese Ausführungsform ist vorteilhaft, da in der Praxis viele Unternehmen ihre IT-Betriebsumgebung sowohl im on-Premise Rechenzentrum vorliegen haben, als auch in der cloud implementiert haben. In einer Ausführungsform können beide IT-Betriebsumgebungsanteile koexistent sein, d.h. das Unternehmen kann die eigenen IT-Systeme sowohl on-Premise als auch in der Cloud vorliegen haben.

Besonders bevorzugt können beide IT-Betriebsumgebungen oder beide IT-Betriebsumgebungsanteile durch die erfindungsgemäßen Lösungen geschützt werden.

Im Falle der On-Premise-IT-Betriebsumgebung sind die mehreren Geräte der On-Premise-IT-Betriebsumgebung zugehörig. On-Premise definiert hierbei ein lokales Netzwerk, insbesondere mit den mehreren in dem lokalen Netzwerk vorhandenen Geräten.

Im Falle der Cloud-IT-Betriebsumgebung sind die mehreren Geräte der Cloud-IT-Betriebsumgebung zugehörig. Cloud definiert hierbei beispielsweise eine über das Internet erreichbare Servereinrichtung. Beispiele für eine Cloud sind Private Cloud, Public Cloud und/oder Community Cloud, wobei auch eine Hybrid Cloud im Sinne der vorliegenden Erfindung als Cloud zu verstehen ist.

In einer Private Cloud wird die Cloud-Infrastruktur nur für eine Institution betrieben. Sie kann von der Institution selbst oder einem Dritten organisiert und geführt werden und kann dabei im Rechenzentrum der eigenen Institution oder einer fremden Institution stehen.

Von einer Public Cloud wird gesprochen, wenn die Dienste von der Allgemeinheit oder einer großen Gruppe, wie beispielsweise einer ganzen Industriebranche, genutzt werden können und die Services von einem Anbieter zur Verfügung gestellt werden.

In einer Community Cloud wird die Infrastruktur von mehreren Institutionen geteilt, die ähnliche Interessen haben. Eine solche Cloud kann von einer dieser Institutionen oder einem Dritten betrieben werden.

Werden mehrere Cloud Infrastrukturen, die für sich selbst eigenständig sind, über standardisierte Schnittstellen gemeinsam genutzt, wird dies Hybrid Cloud genannt.

Erfindungsgemäß handelt es sich bei der IT-Betriebsumgebung um eine hybride IT-Betriebsumgebung, wobei die hybride IT-Betriebsumgebung zumindest einen On-Premise-Anteil und einen Cloud-Anteil aufweist. Im Fall einer hybriden IT-Betriebsumgebung ist zumindest ein Gerät oder ein erster Anteil der mehreren Geräte dem On-Premise-Anteil der IT-Betriebsumgebung zugehörig und zumindest ein Gerät oder ein zweiter Anteil der mehreren Geräte ist dem Cloud-Anteil der IT-Betriebsumgebung zugehörig.

Die zuvor genannte Aufgabe wird erfindungsgemäß ebenfalls durch ein Verfahren nach Anspruch 14 gelöst. Das Verfahren nach Anspruch 14 betrifft die Bestimmung von IT-sicherheitsrelevanten Erkennungslücken einer hybriden IT-Betriebsumgebung, wobei die hybride IT-Betriebsumgebung zumindest einen On-Premise-Anteil und einen Cloud-Anteil aufweist. Das erfindungsgemäße Verfahren weist bevorzugt zumindest die folgenden Schritte auf:
Bereitstellen von mehreren voneinander verschiedenen Angriffsdateien und/oder Angriffscodes zur Modifikation der Funktionsweise von mehreren Geräten der hybriden IT-Betriebsumgebung mittels einer Angriffseinheit, wobei die mehrere Geräte einer Geräteart und/oder unterschiedlichen Gerätearten zugehörig sind und wobei zumindest ein Gerät oder ein erster Anteil der mehreren Geräte dem On-Premise-Anteil der IT-Betriebsumgebung zugehörig ist und wobei zumindest ein Gerät oder ein zweiter Anteil der mehreren Geräte dem Cloud-Anteil der IT-Betriebsumgebung zugehörig ist,
Identifikation und/oder Adressierung der mehreren Geräte mittels mehrerer Zuordnungsmittel, wobei jedes der mehreren Geräte durch zumindest ein Zuordnungsmittel, insbesondere durch jeweils ein Zuordnungsmittel, zum Empfang der Angriffsdatei und/oder des Angriffscode identifiziert und/oder adressiert wird,
Detektieren einer Aktivität zumindest eines und bevorzugt jedes der mehreren Geräte infolge des Empfangs der Angriffsdatei und/oder des Angriffscodes zumindest mittelbar und bevorzugt unmittelbar durch zumindest ein Detektionsmittel, insbesondere durch jeweils ein Detektionsmittel,
Erzeugen von Aktivitätsdaten des mindestens einen Geräts und bevorzugt jedes der mehreren Geräte in Abhängigkeit zumindest eines Teils der Aktivität infolge des Empfangs der Angriffsdatei und/oder des Angriffscodes durch ein Detektionsmittel, insbesondere das jeweilige Detektionsmittel,
zumindest mittelbares und bevorzugt unmittelbares Bereitstellen der Aktivitätsdaten an die Analyseeinheit durch ein Detektionsmittel, insbesondere das jeweilige Detektionsmittel,
Bestimmen des Vorliegens oder nicht Vorliegens einer IT-sicherheitsrelevanten Erkennungslücke in Abhängigkeit der Aktivitätsdaten eines Geräts, insbesondere der Aktivitätsdaten jedes Geräts, und der von dem Gerät, insbesondere von dem jeweiligen Gerät, empfangenen Angriffsdatei und/oder des Angriffscodes mittels der Analyseeinheit.

Zusätzlich kann sich die vorliegende Erfindung auf ein Verfahren zur Bestimmung einer Angriffserkennungsrate auf ein IT-System mit einer Mehrzahl von IT-Systemkomponenten überwachenden Security Incident and Event Management (SIEM) Systems beziehen, wobei eine Mehrzahl von vorgebbaren Angriffsszenarien bereitgestellt wird, wobei mindestens eine IT-Systemkomponente zu mindestens einem vorgebbaren Zeitpunkt mit mindestens einem der Angriffsszenarien, vorzugsweise mit einer zeitlichen Serie unterschiedlicher Angriffsszenarien, konfrontiert wird, wobei eine durch das besagte Angriffsszenario hervorgerufene Angriffsreaktion der besagten IT-Systemkomponente erfasst wird, wobei überprüft wird, ob das SIEM System eine mit dem besagten Angriffsszenario korrespondierende Angriffsmeldung generiert, wobei abhängig von der erfassten Angriffsreaktion und davon, ob das SIEM System eine besagte Angriffsmeldung generiert, eine Angriffserkennungsrate bzw. ein mit einer Angriffserkennungsrate des SIEM Systems korrespondierender Wert abgeleitet wird.

Gemäß einer weiteren bevorzugten Ausführungsform der vorliegenden Erfindung werden die Aktivitätsdaten der Detektionsmittel oder einzelner Detektionsmittel an eine Security Incident and Event Management Einheit (SIEM-Einheit) der IT-Betriebsumgebung übermittelt, wobei von der SIEM-Einheit die Aktivitätsdaten an die Analyseeinheit weitergeleitet werden oder wobei von der SIEM-Einheit die Aktivitätsdaten modifiziert und an die Analyseeinheit weitergeleitet werden.

Gemäß einer weiteren bevorzugten Ausführungsform der vorliegenden Erfindung repräsentieren die Angriffsdateien Angriffe zu unterschiedlichen Angriffstypen, insbesondere mehr als drei voneinander verschiedenen Angriffstypen, und/oder die Angriffscodes repräsentieren Angriffe zu unterschiedlichen Angriffstypen, insbesondere mehr als drei voneinander verschiedenen Angriffstypen, repräsentieren.

Gemäß einer weiteren bevorzugten Ausführungsform der vorliegenden Erfindung repräsentieren die Angriffsdateien oder Angriffscodes zumindest zu zwei unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung werden die unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung repräsentieren die Angriffsdateien Angriffe zu mehr als drei voneinander verschiedenen Angriffstypen repräsentieren und/oder die Angriffscodes repräsentieren Angriffe zu mehr als drei voneinander verschiedenen Angriffstypen.

Gemäß einer weiteren bevorzugten Ausführungsform der vorliegenden Erfindung werden die zumindest drei unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest drei unterschiedlichen Angriffstypen: Ausführung, Dauerhaftigkeit und Privilegien-Eskalation.

Gemäß einer weiteren bevorzugten Ausführungsform der vorliegenden Erfindung repräsentieren die Angriffsdateien Angriffe zu mehr als vier voneinander verschiedenen Angriffstypen und/oder die Angriffscodes repräsentieren Angriffe zu mehr als vier voneinander verschiedenen Angriffstypen.

Gemäß einer weiteren bevorzugten Ausführungsform der vorliegenden Erfindung werden die zumindest oder genau vier unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest vier unterschiedlichen Angriffstypen: Ausführung, Dauerhaftigkeit, Privilegien-Eskalation, Zugang zu Anmeldeinformationen.

Gemäß einer weiteren bevorzugten Ausführungsform der vorliegenden Erfindung repräsentieren die Angriffsdateien oder Angriffscodes zumindest zu drei unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung repräsentieren die Angriffsdateien Angriffe zu mehr als oder zu genau fünf voneinander verschiedenen Angriffstypen repräsentieren und/oder die Angriffscodes repräsentieren Angriffe zu mehr als fünf oder zu genau fünf voneinander verschiedenen Angriffstypen.

Gemäß einer weiteren bevorzugten Ausführungsform der vorliegenden Erfindung werden die zumindest fünf oder genau fünf unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau fünf unterschiedlichen Angriffstypen: Ausführung, Dauerhaftigkeit, Privilegien-Eskalation, Zugang zu Anmeldeinformationen, Entdeckung.

Gemäß einer weiteren bevorzugten Ausführungsform der vorliegenden Erfindung repräsentieren die Angriffsdateien oder Angriffscodes zumindest zu vier unterschiedlichen Angriffstypen jeweils mehr als zwei und bevorzugt mehr als drei unterschiedliche Angriffstechniken.

Gemäß einer weiteren bevorzugten Ausführungsform der vorliegenden Erfindung repräsentieren die Angriffsdateien Angriffe zu mehr als oder zu genau sechs voneinander verschiedenen Angriffstypen repräsentieren und/oder die Angriffscodes repräsentieren Angriffe zu mehr als sechs oder zu genau sechs voneinander verschiedenen Angriffstypen.

Gemäß einer weiteren bevorzugten Ausführungsform der vorliegenden Erfindung werden die zumindest sechs oder genau sechs unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung die zumindest oder genau sechs unterschiedlichen Angriffstypen sind: Ausführung, Dauerhaftigkeit, Privilegien-Eskalation, Zugang zu Anmeldeinformationen, Entdeckung, Seitliche Bewegung.

Gemäß einer weiteren bevorzugten Ausführungsform der vorliegenden Erfindung repräsentieren die Angriffsdateien oder Angriffscodes zumindest zu fünf unterschiedlichen Angriffstypen jeweils mehr als zwei und bevorzugt mehr als drei, insbesondere vier oder mehr als vier, unterschiedliche Angriffstechniken.

Gemäß einer weiteren bevorzugten Ausführungsform der vorliegenden Erfindung repräsentieren die Angriffsdateien Angriffe zu mehr als oder zu genau sieben voneinander verschiedenen Angriffstypen und/oder die Angriffscodes repräsentieren Angriffe zu mehr als fünf oder zu genau fünf voneinander verschiedenen Angriffstypen.

Gemäß einer weiteren bevorzugten Ausführungsform der vorliegenden Erfindung werden die zumindest sieben oder genau sieben unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung die zumindest oder genau sieben unterschiedlichen Angriffstypen sind: Ausführung, Dauerhaftigkeit, Privilegien-Eskalation, Zugang zu Anmeldeinformationen, Entdeckung, Seitliche Bewegung, Sammlung.

Gemäß einer weiteren bevorzugten Ausführungsform der vorliegenden Erfindung repräsentieren die Angriffsdateien oder Angriffscodes zumindest zu sechs unterschiedlichen Angriffstypen jeweils mehr als zwei und bevorzugt mehr als drei, insbesondere vier oder mehr als vier, unterschiedliche Angriffstechniken.

Gemäß einer weiteren bevorzugten Ausführungsform der vorliegenden Erfindung repräsentieren die Angriffsdateien Angriffe zu mehr als oder zu genau acht voneinander verschiedenen Angriffstypen und/oder die Angriffscodes repräsentieren Angriffe zu mehr als acht oder zu genau acht voneinander verschiedenen Angriffstypen.

Gemäß einer weiteren bevorzugten Ausführungsform der vorliegenden Erfindung werden die zumindest acht oder genau acht unterschiedlichen Angriffstypen aus einer Gruppe an Angriffstypen ausgewählt, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

Gemäß einer weiteren bevorzugten Ausführungsform der vorliegenden Erfindung sind die zumindest oder genau acht unterschiedlichen Angriffstypen: Ausführung, Dauerhaftigkeit, Privilegien-Eskalation, Zugang zu Anmeldeinformationen, Entdeckung, Seitliche Bewegung, Sammlung, Kommando und Kontrolle.

Gemäß einer weiteren bevorzugten Ausführungsform der vorliegenden Erfindung wird zumindest eine Angriffsdatei die einen ersten Angriffstyp repräsentiert oder ein Angriffscode der einen ersten Angriffstyp repräsentiert bereitgestellt und zumindest eine Angriffsdatei die einen zweiten Angriffstyp repräsentiert oder ein Angriffscode der einen zweiten Angriffstyp repräsentiert wird bereitgestellt, wobei die Angriffsdatei die den zweiten Angriffstyp repräsentiert oder der Angriffscode der den zweiten Angriffstyp repräsentiert in Abhängigkeit von der Angriffsdatei, die den ersten Angriffstyp repräsentiert, oder in Abhängigkeit von dem Angriffscode, der den ersten Angriffstyp repräsentiert, bereitgestellt wird.

Rein beispielhaft werden nachfolgend drei Beispiele aufgeführt, gemäß denen eine Anhängigkeit zwischen der ersten Angriffsdatei oder dem ersten Angriffscode und der zweiten Angriffsdatei oder dem zweiten Angriffscode bestehet:

### Beispiel 1:

1. Entdeckung (Angriffstyp): Konto-Erkennung (Angriffstechnik) => 2. Dauerhaftigkeit (Angriffstyp): Manipulation von Konten (Angriffstechnik).

### Beispiel 2:

1. Entdeckung (Angriffstyp): Erkennung von Systemnetzwerkverbindungen (Angriffstechnik) => 2. Zugang zu Anmeldeinformationen(Angriffstyp): Abhören des Netzwerkverkehrs (Angriffstechnik).

### Beispiel 3:

1. Ausführung (Angriffstyp): Befehls- und Skriptinterpreter (Angriffstechnik) => 2. Dauerhaftigkeit (Angriffstyp): Konto erstellen (Angriffstechnik).

Die zuvor genannte Aufgabe wird erfindungsgemäß ebenfalls durch ein Computerprogrammprodukt nach Anspruch 15 gelöst. Das Computerprogrammprodukt nach Anspruch 15 umfassen Befehle, die bewirken, dass das System gemäß einem der Ansprüche 1 bis 13 die Verfahrensschritte nach Anspruch 14 ausführt.

Merkmale, die vorliegend bzgl. Systemen oder Vorrichtungen offenbart sind, gelten ebenfalls für die hierin offenbarten Verfahren als offenbart und vice versa, soweit das für einen Fachmann technisch sinnvoll ist.

Die zugehörigen Figuren zeigen rein exemplarisch mögliche Ausführungsvarianten der vorliegenden Erfindung, wobei die Erfindung nicht auf diese Ausführungsformen beschränkt ist.

Darin zeigen:
- Fig. 1: schematisch ein Beispiel einer IT- Betriebsumgebung,
- Fig. 2a-c: schematisch unterschiedliche Formen der IT-Betriebsumgebung,
- Fig. 3: schematisch unterschiedlich relevante Gerätebestände von IT-Betriebsumgebungen,
- Fig. 4a-f: schematisch unterschiedliche Beziehungen zwischen Zuordnungsmittel, Gerät und Detektionsmittel,
- Fig. 5a-f: schematisch und beispielhaft die Bestimmung von IT-sicherheitsrelevanten Erkennungslücken,
- Fig. 6: schematisch und rein exemplarisch ein konkretes Beispiel eines erfindungsgemäßen Systems,
- Fig. 7: rein exemplarisch ein Beispiel einer Kontroll- und/oder Ausgabeinstanz, wie sie im Rahmen der vorliegenden Erfindung ausgestaltet sein kann, und
- Fig. 8a-f: rein exemplarisch ein Beispiel einer Angriffsdefinition mittels einer Kontroll- und/oder Ausgabeinstanz.

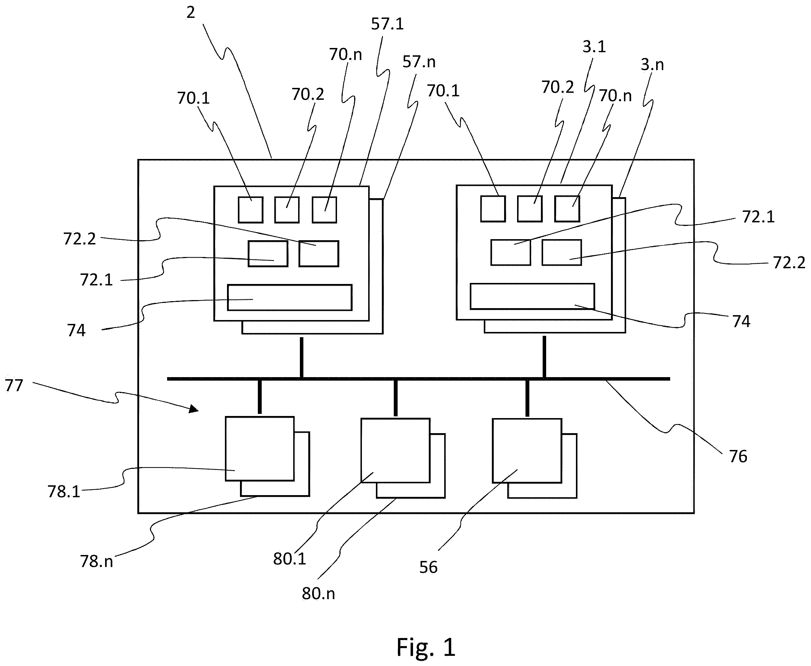

Fig. 1 zeigt eine hybriden IT-Betriebsumgebung 2, wie sie beispielsweise im Kontext der vorliegenden Erfindung vorliegen kann.

Gemäß dieser Darstellung kann die hybriden IT-Betriebsumgebung 2 einen Gerätebestand aufweisen, der z.B. einen Server 57 oder mehrere Server 57.1-57.n und bevorzugt einen Client 3 oder mehrere Clients 3.1-3.n aufweist. Der oder die Server 57.1-57.n und/oder der oder die Clients 3.1-3.n können dabei jeweils eine Anwendung 70 oder mehrere Anwendungen 70.1-70.n aufweisen. Zusätzlich kann eine Middleware 72 oder mehrere Middlewareprogramme 72.1-72.n und jeweils zumindest ein Betriebssystem 74 vorgesehen sein.

Über Kommunikationselemente 76 können die Clients 3.1-3.n untereinander oder die Server 57.1-57.n untereinander oder einzelne oder mehrere oder alle Clients 3.1-3.n und einzelne oder mehrere oder alle Server 57.1-57.n miteinander zumindest zeitweise eine Datenverbindung aufweisen. Zusätzlich oder alternativ können über die Kommunikationselemente 76 eine oder mehr als eine Firewall 78 und/oder eine oder mehr als eine weitere Einrichtung und/oder ein oder mehr als ein SIEM 56 zum Senden und/oder Empfangen von Daten angebunden sein. Die Kommunikationselemente 76 können eine oder mehrere Festkörperdatenleitung/en, insbesondere Kupfer oder Glasfaser, und/oder eine oder mehrere Funkverbindung/en ausbilden.

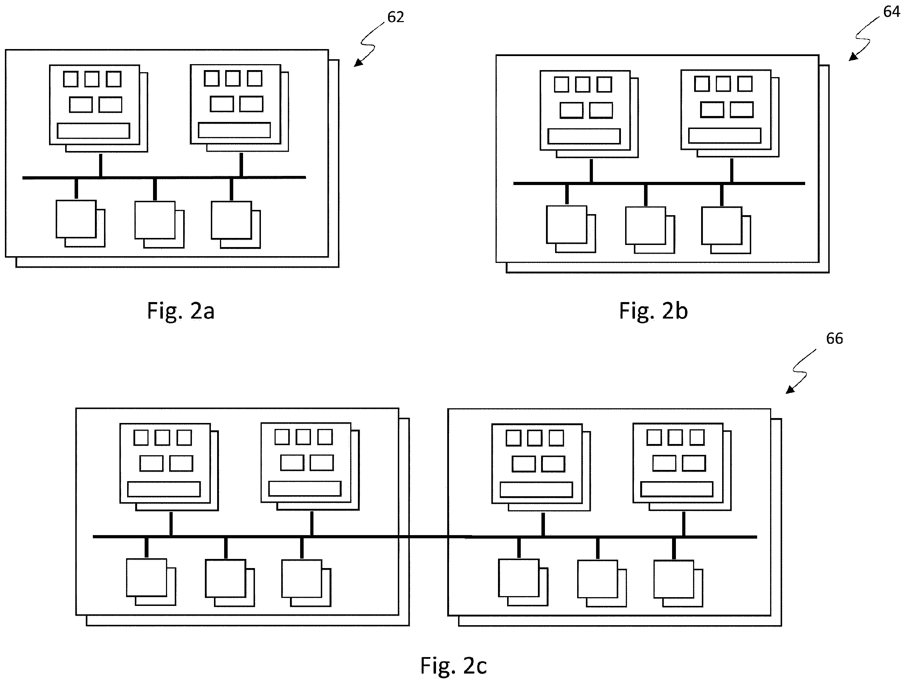

Die Fig. 2a-2c zeigen schematisch, dass es sich bei IT-Betriebsumgebungen um On-Premise-, oder Cloud- oder - erfindungsgemäß - um hybride Betriebsumgebung/en handeln kann.

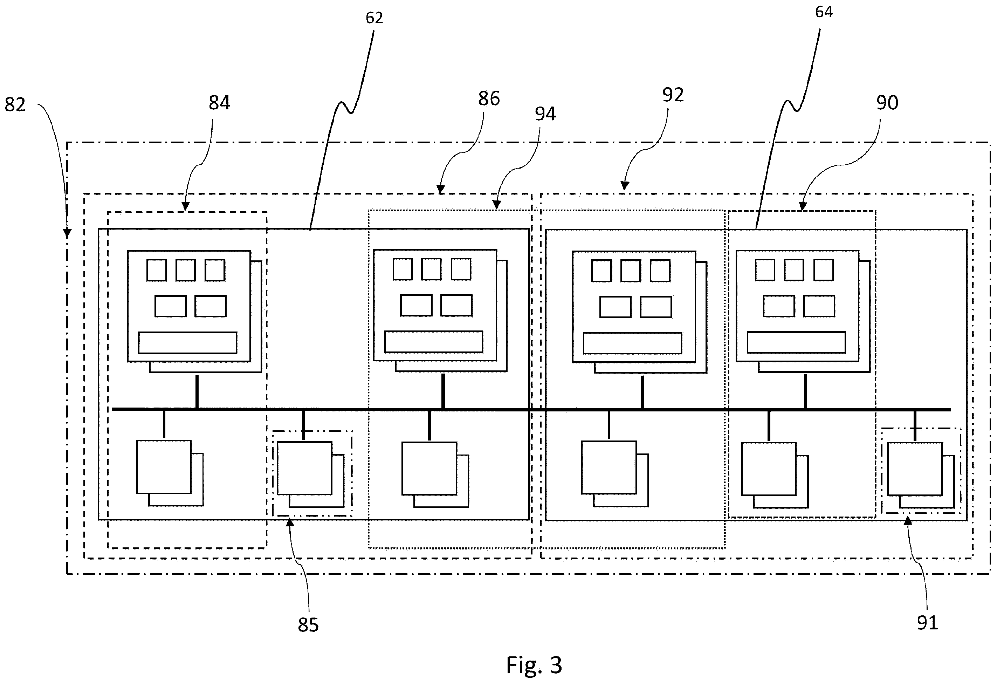

Fig. 3 zeigt schematisch eine hybride Betriebsumgebung, wobei das Bezugszeichen 62 eine On-Premise-IT-Betriebsumgebung bzw. einen On-Premise-Teil der IT-Betriebsumgebung 2 und das Bezugszeichen 64 eine Cloud-IT-Betriebsumgebung bzw. einen Cloud-IT-Teil der IT-Betriebsumgebung 2 zeigt.

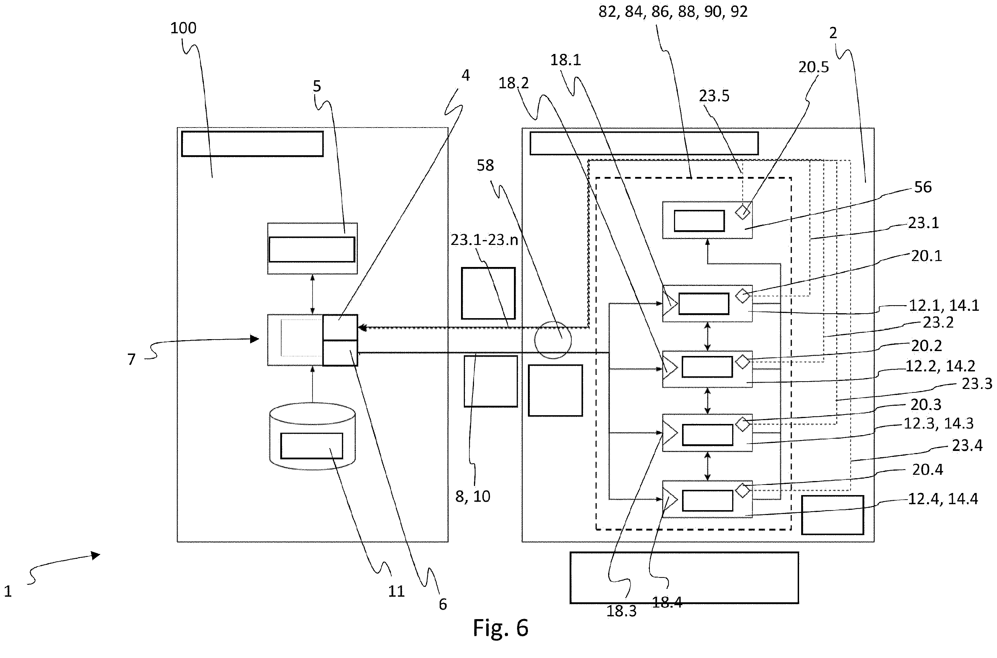

Die mehreren im erfindungsgemäßen System 1 zur Bestimmung von IT-sicherheitsrelevanten Erkennungslücken der hybriden IT-Betriebsumgebung 2 verwendeten Geräte 12 können einerseits dem Gesamtgerätebestand 82 der hybriden IT-Betriebsumgebung entsprechen oder können andererseits z.B. zwei oder mehr als zwei Geräte 12.1-12.n einer einzigen Geräteart oder ein erstes Gerät 12 einer ersten Geräteart 14.1 (vgl. z.B. Fig. 6) und ein erstes Gerät 12 einer weiteren Geräteart 14.2 sein. Zudem kann eine beliebige Auswahl aus Geräten 12.1-12.n des Gesamtgerätebestands 82 der hybriden IT-Betriebsumgebung 2 als die mehreren im erfindungsgemäßen System 1 zur Bestimmung von IT-sicherheitsrelevanten Erkennungslücken der hybriden IT-Betriebsumgebung 2 verwendeten Geräte 12 ausgewählt bzw. festgelegt bzw. definiert sein.

Im Folgenden werden rein exemplarisch Beispiele für die Auswahl unterschiedlicher Geräte 12.1-12.n beschrieben.

Der Gesamtgerätebestand 82 der IT-Betriebsumgebung 2 weist unterschiedlichen Gerätearten 14.1-14.n auf, wobei bezüglich jeder Geräteart 14.1-14.n ein Gerät 12 oder mehrere Geräte 12.1-12.n vorgesehen sind.

Ein vollständiger On-Premise-Gerätebestand 86 der IT-Betriebsumgebung 2 kann z.B. je Geräteart 14.1-14.n ein oder mehrere Geräte 12.1-12.n aufweisen.

Ein komplexer-Teil-On-Premise-Gerätebestand 84 der IT-Betriebsumgebung 2 kann z.B. zwei oder mehr als zwei Geräte 12.1-12.n einer ersten Geräteart 14.1 und zwei oder mehr als zwei Geräte 12.1-12.n einer zweiten Geräteart 14.2 aufweisen. Es ist hierbei ferner möglich, dass der komplexer-Teil-On-Premise-Gerätebestand 84 weitere Geräte 12 von weiteren Gerätearten 14.3-14.n aufweist. Gegenüber dem "vollständiger-On-Premise-Gerätebestand 86" weist der "komplexer-Teil-On-Premise-Gerätebestand 84" bevorzugt ein oder mehrere Geräte 12 von einer oder mehreren Gerätearten nicht auf.

Ein Teil-On-Premise-Gerätebestand 85 der IT-Betriebsumgebung 2 kann z.B. zwei oder mehr als zwei Geräte 12.1-12.n einer Geräteart 14 oder genau eine Geräteart 14 aufweisen.

Ein vollständiger-Cloud-Gerätebestand 92 der IT-Betriebsumgebung 2 kann z.B. je Geräteart 14.1-14.n ein oder mehrere Geräte 12.1-12.n aufweisen.

Ein komplexer-Teil-Cloud-Gerätebestand 90 der IT-Betriebsumgebung 2 kann z.B. zwei oder mehr als zwei Geräte 12.1-12.n einer ersten Geräteart 14.1 und zwei oder mehr als zwei Geräte 12.1-12.n einer zweiten Geräteart 14.2 aufweisen. Es ist hierbei ferner möglich, dass der "komplexer-Teil-Cloud-Gerätebestand 90" weitere Geräte 12 von weiteren Gerätearten 14.3-14.n aufweist. Gegenüber dem "vollständiger-Cloud-Gerätebestand 92" weist der "komplexer-Teil-Cloud-Gerätebestand 90" bevorzugt ein oder mehrere Geräte 12 von einer oder mehreren Gerätearten nicht auf.

Ein Teil-Cloud-Gerätebestand 91 der IT-Betriebsumgebung 2 kann z.B. zwei oder mehr als zwei Geräte 12.1-12.n einer Geräteart 14 oder genau einer Geräteart 14 aufweisen.

Ein erfindungsgemäßer Teil-On-Premise-und-Teil-Cloud-Gerätebestand 94 der hybriden IT-Betriebsumgebung 2 kann ein oder mehrere Geräte 12.1-12.n von einer oder mehreren Gerätearten 14.1-14.n des On-Premise-Gerätebestands und ein oder mehrere Geräte 12.1-12.n von einer oder mehreren Gerätearten 14.1-14.n des Cloud-Gerätebestands aufweisen.

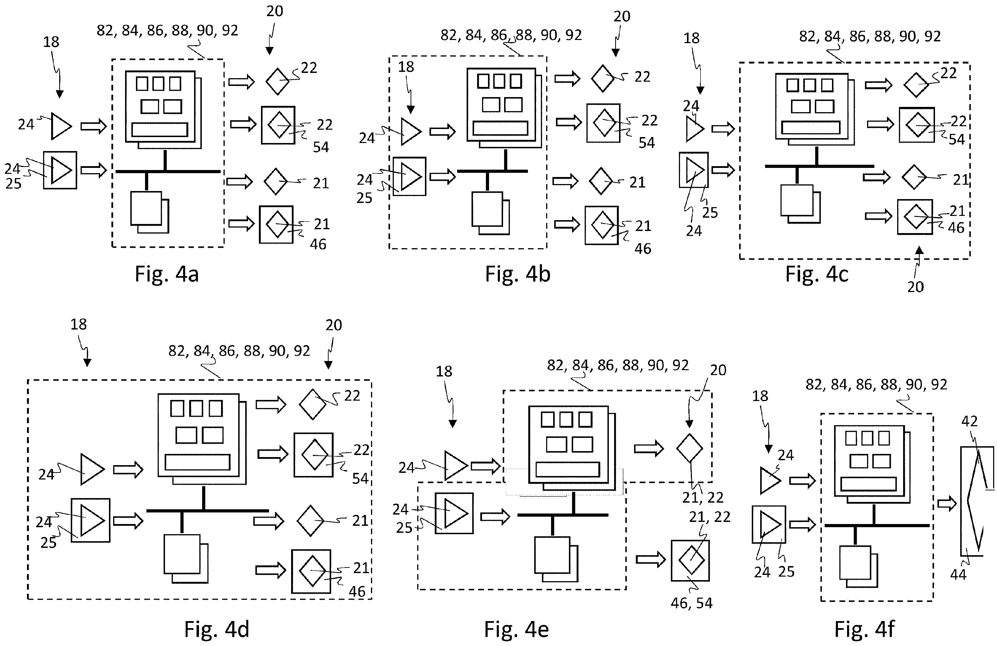

Fig. 4a bis 4e zeigen schematisch Beispiele für das Zusammenwirken von einem Zuordnungsmittel 18 oder mehreren Zuordnungsmitteln 18 und einem Gerät 12 oder mehreren Geräten 12 und einem Detektionsmittel 20 oder mehreren Detektionsmitteln 20. Je Gerätebestand 82, 84, 86, 88, 90, 92 ist bevorzugt für jedes Gerät 12 des jeweiligen Gerätebestands 82, 84, 86, 88, 90, 92 zumindest ein Zuordnungsmittel 18 oder genau ein Zuordnungsmittel 18 vorgesehen. Je Gerätebestand 82, 84, 86, 88, 90, 92 ist bevorzugt für jedes Gerät 12 des jeweiligen Gerätebestands 82, 84, 86, 88, 90, 92 zumindest ein Detektionsmittel 20 oder genau ein Detektionsmittel 20 vorgesehen.

Es ist alternativ einerseits möglich, dass alle oder mehrere Geräte 12 des jeweiligen Gerätebestands 82, 84, 86, 88, 90, 92 einem Zuordnungsmittel 18 zugeordnet sind, andererseits sind zusätzlich oder alternativ alle oder mehrere Geräte 12 des jeweiligen Gerätebestands 82, 84, 86, 88, 90, 92 einem Detektionsmittel 20 zugeordnet.

Weiterhin kann eines der Zuordnungsmittel 18 oder genau eines der Zuordnungsmittel 18 oder mindestens eines der Zuordnungsmittel 18, das einem oder mehreren Geräten 12 des jeweiligen Gerätebestands 82, 84, 86, 88, 90, 92 zugeordnet ist, als Kommunikations- und Verarbeitungsprogramm 24 ausgebildet sein. Alternativ können alle Zuordnungsmittel 18, die einem oder mehreren Geräten 12 des jeweiligen Gerätebestands 82, 84, 86, 88, 90, 92 zugeordnet sind, als Kommunikations- und Verarbeitungsprogramm 24 ausgebildet sein.

Weiterhin kann eines der Zuordnungsmittel 18 oder genau eines der Zuordnungsmittel 18 oder mindestens eines der Zuordnungsmittel 18, das einem oder mehreren Geräten 12 des jeweiligen Gerätebestands 82, 84, 86, 88, 90, 92 zugeordnet ist, als Kommunikations- und Verarbeitungseinrichtung 25, insbesondere zum Ausführen eines Kommunikations- und Verarbeitungsprogramms 24, ausgebildet sein. Alternativ können alle Zuordnungsmittel 18, die einem oder mehreren Geräten 12 des jeweiligen Gerätebestands 82, 84, 86, 88, 90, 92 zugeordnet sind, als Kommunikations- und Verarbeitungseinrichtung 25, insbesondere zum Ausführen eines Kommunikations- und Verarbeitungsprogramms 24, ausgebildet sein.

Ein Zuordnungsmittel 18 oder genau ein Zuordnungsmittel 18 oder mindestens ein Zuordnungsmittel 18 oder mehrere Zuordnungsmittel 18 oder alle Zuordnungsmittel 18, das bzw. die einem oder mehreren Geräten 12 des jeweiligen Gerätebestands 82, 84, 86, 88, 90, 92 zugeordnet ist/sind, kann/können als softwarebasiertes Zuordnungsmittel 18 ausgebildet sein, insbesondere als Kommunikations- und Verarbeitungsprogramm/e 24 (bzw. 24.1-24.n). Ein softwarebasiertes Zuordnungsmittel 18 weist dabei bevorzugt Identifikationsdaten oder Zuordnungsdaten zum Zuführen von Angriffscode 8 oder Angriffsdatei/en 10 zu dem zugeordneten Gerät 12 oder zu den zugeordneten Geräten 12.1-12.n auf. Ein softwarebasiertes Zuordnungsmittel 18 wird bevorzugt durch das Gerät 12.1-12.n, dem es zugeordnet ist, ausgeführt. Alternativ kann das softwarebasierte Zuordnungsmittel durch ein von dem zugeordneten Gerät verschiedenes Gerät ausgeführt werden, wobei zwischen dem zugeordneten Gerät und dem dazu verschiedenen Gerät bevorzugt zumindest eine Kommunikationsverbindung besteht oder erzeugbar ist.

Ein Zuordnungsmittel 18 oder genau ein Zuordnungsmittel 18 oder mindestens ein Zuordnungsmittel 18 oder mehrere Zuordnungsmittel 18 oder alle Zuordnungsmittel 18 das bzw. die einem oder mehreren Geräten 12 des jeweiligen Gerätebestands 82, 84, 86, 88, 90, 92 zugeordnet ist/sind, kann/können als hardwarebasiertes Zuordnungsmittel 18 ausgebildet sein, insbesondere als Kommunikations- und Verarbeitungseinrichtung/en 25 (bzw. 25.1-25.n). Ein hardwarebasiertes Zuordnungsmittel 18 weist dabei bevorzugt Identifikationsdaten oder Zuordnungsdaten zum Zuführen von Angriffscode 8 oder Angriffsdatei/en 10 zu dem zugeordneten Gerät 12 oder zu den zugeordneten Geräten 12.1-12.n auf. Ein hardwarebasiertes Zuordnungsmittel 18 ist bevorzugt Bestandteil des Geräts 12.1-12.n, dem es zugeordnet ist, oder es ist an das Gerät angekoppelt. Alternativ kann das hardwarebasiertes Zuordnungsmittel 18 Bestandteil eines von dem zugeordneten Gerät verschiedenen Geräts sein oder daran angekoppelt sein, wobei zwischen dem zugeordneten Gerät und dem dazu verschiedenen Gerät bevorzugt zumindest eine Kommunikationsverbindung besteht oder erzeugbar ist.

Bevorzugt können die Inhalte und die Art der Ausführung eines Angriffs einem Zuordnungsmittel oder einer Gruppe an Zuordnungsmittel 18 in Form von Instruktionen (Angriffscode oder Angriffsdatei) mitgegeben bzw. bereitgestellt werden und/oder das Zuordnungsmittel kann nach eigenständiger Logik den jeweiligen (legitimierten) Angriff ausführen.

Weiterhin kann eines der Detektionsmittel 20 oder genau ein Detektionsmittel 20 oder mindestens eines der Detektionsmittel 20, das einem oder mehreren Geräten 12 des jeweiligen Gerätebestands 82, 84, 86, 88, 90, 92 zugeordnet ist, als Dokumentations- und Kommunikationsprogramm 21 oder Aufbereitungs- und Kommunikationsprogramm 22 ausgebildet sein. Alternativ können alle Detektionsmittel 20, die einem oder mehreren Geräten 12 des jeweiligen Gerätebestands 82, 84, 86, 88, 90, 92 zugeordnet sind, als Dokumentations- und Kommunikationsprogramm 21 oder Aufbereitungs- und Kommunikationsprogramm 22 ausgebildet sein.

Es ist grundsätzlich möglich, dass ein oder mehrere oder alle Detektionsmittel als Dokumentations- und Kommunikationsprogramms 21 ausgebildet sind. Zusätzlich oder alternativ ist es möglich, dass ein oder mehrere oder alle Detektionsmittel als Aufbereitungs- und Kommunikationsprogramms 22 ausgebildet sind.

Weiterhin kann eines der Detektionsmittel 20 oder genau eines der Detektionsmittel 20 oder mindestens eines der Detektionsmittel 20, das einem oder mehreren Geräten 12 des jeweiligen Gerätebestands 82, 84, 86, 88, 90, 92 zugeordnet ist, als Dokumentations- und Kommunikationseinrichtung 46, insbesondere zum Ausführen eines Dokumentations- und Kommunikationsprogramms 21, oder als Aufbereitungs- und Kommunikationseinrichtung 54, insbesondere zum Ausführen eines Aufbereitungs- und Kommunikationsprogramms 22, ausgebildet sein. Alternativ können alle Detektionsmittel 20, die einem oder mehreren Geräten 12 des jeweiligen Gerätebestands 82, 84, 86, 88, 90, 92 zugeordnet sind, als Dokumentations- und Kommunikationseinrichtung 46, insbesondere zum Ausführen eines Dokumentations- und Kommunikationsprogramms 21, oder als Aufbereitungs- und Kommunikationseinrichtung 54, insbesondere zum Ausführen eines Aufbereitungs- und Kommunikationsprogramms 22, ausgebildet sein.

Es ist grundsätzlich möglich, dass ein oder mehrere oder alle Detektionsmittel als Dokumentations- und Kommunikationseinrichtung 46, insbesondere zum Ausführen eines Dokumentations- und Kommunikationsprogramms 21, ausgebildet sind. Zusätzlich oder alternativ ist es möglich, dass ein oder mehrere oder alle Detektionsmittel als Aufbereitungs- und Kommunikationseinrichtung 54, insbesondere zum Ausführen eines Aufbereitungs- und Kommunikationsprogramms 22, ausgebildet sind.

Ein Detektionsmittel 20 oder genau ein Detektionsmittel 20 oder mindestens ein Detektionsmittel 20 oder mehrere Detektionsmittel 20 oder alle Detektionsmittel 20 das bzw. die einem oder mehreren Geräten 12 des jeweiligen Gerätebestands 82, 84, 86, 88, 90, 92 zugeordnet ist/sind, kann/können als softwarebasiertes Detektionsmittel 20 ausgebildet sein, insbesondere als Dokumentations- und Kommunikationsprogramm/e 21 (bzw. 21.1-21.n) und/oder als Aufbereitungs- und Kommunikationsprogramm/e 22 (bzw. 22.1-22.n). Ein softwarebasiertes Detektionsmittel 20 weist dabei bevorzugt Dokumentations- und/oder Aufbereitungs- und/oder Kommunikationsroutine/n zur zumindest mittelbaren und bevorzugt unmittelbaren Dokumentation und/oder Aufbereitung und/oder Weiterleitung einer oder genau einer oder mindestens einer oder mehr als einer Aktivität zumindest eines oder genau eines oder mehr als einem der mehreren Geräte 12 infolge des Empfangs der Angriffsdatei 8 und/oder des Angriffscodes 12 auf.

Ein softwarebasiertes Detektionsmittel 20 wird bevorzugt durch das Gerät 12.1-12.n, dem es zugeordnet ist, ausgeführt. Alternativ kann das softwarebasierte Detektionsmittel 20 durch ein von dem zugeordneten Gerät verschiedenes Gerät ausgeführt werden, wobei zwischen dem zugeordneten Gerät und dem dazu verschiedenen Gerät bevorzugt zumindest eine Kommunikationsverbindung besteht oder erzeugbar ist.

Ein Detektionsmittel 20 oder genau ein Detektionsmittel 20 oder mindestens ein Detektionsmittel 20 oder mehrere Detektionsmittel 20 oder alle Detektionsmittel 20, das bzw. die einem oder mehreren Geräten 12 des jeweiligen Gerätebestands 82, 84, 86, 88, 90, 92 zugeordnet ist/sind, kann/können als hardwarebasiertes Detektionsmittel 20 ausgebildet sein, insbesondere als Dokumentations- und Kommunikationsprogramm/e 21 (bzw. 21.1-21.n) und/oder als Aufbereitungs- und Kommunikationsprogramm/e 22 (bzw. 22.1-22.n). Ein hardwarebasiertes Detektionsmittel 20 weist dabei bevorzugt Dokumentations- und/oder Aufbereitungs- und/oder Kommunikationselemente auf. Ein hardwarebasiertes Detektionsmittel 20 ist bevorzugt Bestandteil des Geräts 12.1-12.n, dem es zugeordnet ist, oder es ist an das Gerät angekoppelt. Alternativ kann das hardwarebasiertes Detektionsmittel 20 Bestandteil eines von dem zugeordneten Gerät verschiedenen Geräts sein oder daran angekoppelt sein, wobei zwischen dem zugeordneten Gerät und dem dazu verschiedenen Gerät bevorzugt zumindest eine Kommunikationsverbindung besteht oder erzeugbar ist. Alternativ kann das hardwarebasierte Detektionsmittel 20 eine eigenständige Detektionseinrichtung (46, 54) sein, insbesondere eine Dokumentations- und Kommunikationseinrichtung, insbesondere zum Ausführen eines Dokumentations- und Kommunikationsprogramms, oder eine Aufbereitungs- und Kommunikationseinrichtung, insbesondere zum Ausführen eines Kommunikations- und Verarbeitungsprogramms 24, sein.

Die Figuren 4a-e zeigen schematisch Beispiele einzelner der vorgenannten Varianten.

Die Beispiele zeigen, dass es sich bei einem konkreten Zuordnungsmittel entweder um ein hardwarebasiertes Zuordnungsmittel oder um ein softwarebasiertes Zuordnungsmittel handeln kann.

Den Figuren 4a-4d lässt sich entnehmen, dass die Anzahl an Detektionsmittel 20 von der Anzahl an Zuordnungsmittel 18 verschieden sein kann. Bevorzugt kann die Anzahl der Detektionsmittel 20 größer als die Anzahl an Zuordnungsmittel, insbesondere als die Anzahl an softwarebasierten oder hardwarebasierten Zuordnungsmitteln, sein. Alternativ kann die Anzahl der Detektionsmittel 20 kleiner als die Anzahl an Zuordnungsmittel 18, insbesondere als die Anzahl an softwarebasierten oder hardwarebasierten Zuordnungsmitteln, sein. Bevorzugt kann die Anzahl der Detektionsmittel 20 der Anzahl an Zuordnungsmittel 18, insbesondere der Anzahl an softwarebasierten oder hardwarebasierten Zuordnungsmitteln, entsprechen.

Gemäß Fig. 4a weisen die Geräte der Geräteanordnung weder die Zuordnungsmittel 18 noch die Detektionsmittel 20 auf. Hingegen zeigt Fig. 4d, dass die Geräte der Geräteanordnung die Zuordnungsmittel 18 und die Detektionsmittel 20 aufweisen können. Weiterhin zeigt die Fig. 4b, dass die Geräte der Geräteanordnung die Zuordnungsmittel 18 aufweisen können, ohne dass die Geräte der Geräteanordnung die Detektionsmittel 20 aufweisen. Alternativ zeigt Fig. 4c dass die Geräte der Geräteanordnung die Detektionsmittel 20 aufweisen können, ohne dass die Geräte der Geräteanordnung die Zuordnungsmittel 18 aufweisen.

Fig. 4e zeigt, dass ein Zuordnungsmittel als softwarebasiertes Zuordnungsmittel ausgeführt werden kann und das Gerät der Geräteanordnung das Zuordnungsmittel 18 nicht aufweisen muss bzw. das Zuordnungsmittel von einem Gerät umfasst ist, das von dem Gerät der Geräteanordnung verschieden ist. Es ist hierbei jedoch alternativ auch möglich, dass anstelle des softwarebasierten Zuordnungsmittels ein hardwarebasiertes Zuordnungsmittel vorgesehen wird und das Gerät der Geräteanordnung das Zuordnungsmittel 18 nicht aufweist bzw. das Zuordnungsmittel von einem Gerät umfasst ist, das von dem Gerät der Geräteanordnung verschieden ist.

Das Zuordnungsmittel benötigt zur Ausführung eines Angriffs mind. eine Datenverarbeitungseinrichtung, insbesondere CPU, APU oder GPU, mind. einen Speicher, insbesondere RAM oder HDD oder SSD, und mind. ein Interface, insbesondere ein LAN- oder WLAN- oder BT-Interface, oder eine Datenverarbeitungseinheit, wie z.B. ein Einplatinen-Computer, wobei ausreichende Ressourcen und ausreichende Erreichbarkeit zur hybriden IT-Betriebsumgebung vorausgesetzt werden.

In der Software-basierten Ausführung basiert das Zuordnungsmittel auf Ressourcen, die von der hybriden IT-Betriebsumgebung gestellt werden, wobei die Ressourcen bevorzugt das konkrete Gerät darstellen, dem das Zuordnungsmittel zugeordnet ist, oder wobei die Ressourcen bevorzugt ein alternatives Gerät darstellen, welches mit dem konkreten Gerät, dem das Zuordnungsmittel zugeordnet ist, zumindest zeitweise eine Datenverbindung aufweist.

In der Hardware-basierten Ausführung basiert das Zuordnungsmittel auf eigenständiger Hardware, die beispielsweise von einem separaten Server bereitgestellt wird oder die eine eigene Datenverarbeitungseinrichtung, insbesondere CPU, APU oder GPU, mind. einen Speicher, insbesondere RAM oder HDD oder SSD, und mind. ein Interface, insbesondere ein LAN- oder WLAN- oder BT-Interface, aufweist oder die als eine Datenverarbeitungseinheit, wie z.B. ein Einplatinen-Computer, ausgebildet ist.

Ferner zeigt Fig. 4e, dass ein Detektionsmittel als hardwarebasiertes Detektionsmittel 20 ausgeführt sein kann und das Gerät der Geräteanordnung das Detektionsmittel 20 nicht aufweisen muss bzw. das Zuordnungsmittel von einem Gerät umfasst ist, das von dem Gerät der Geräteanordnung verschieden ist. Es ist hierbei jedoch alternativ auch möglich, dass anstelle des hardwarebasierten Detektionsmittels ein softwarebasiertes Detektionsmittel vorgesehen wird und das Gerät der Geräteanordnung das Detektionsmittel 20 nicht aufweist bzw. das Detektionsmittel von einem Gerät umfasst ist, das von dem Gerät der Geräteanordnung verschieden ist. Alternativ kann das Detektionsmittel als softwarebasiertes Detektionsmittel 20 ausgeführt sein und das Gerät der Geräteanordnung kann das Detektionsmittel 20 aufweisen. Es ist hierbei jedoch alternativ auch möglich, dass anstelle des softwarebasierten Detektionsmittels ein hardwarebasiertes Detektionsmittel vorgesehen wird und das Gerät der Geräteanordnung das Detektionsmittel 20 aufweist.

Das Detektionsmittel benötigt zur Erkennung eines Angriffs eine Datenverarbeitungseinrichtung, insbesondere CPU, APU oder GPU, mind. einen Speicher, insbesondere RAM oder HDD oder SSD, und mind. ein Interface, insbesondere ein LAN- oder WLAN- oder BT-Interface, oder eine Datenverarbeitungseinheit, wie z.B. ein Einplatinen-Computer, wobei ausreichende Ressourcen und ausreichende Erreichbarkeit zur hybriden IT-Betriebsumgebung vorausgesetzt werden.

In der Software-basierten Ausführung basiert das Detektionsmittel auf Ressourcen, die von der hybriden IT-Betriebsumgebung gestellt werden, wobei die Ressourcen bevorzugt das konkrete Gerät darstellen, dem das Detektionsmittel zugeordnet ist, oder wobei die Ressourcen bevorzugt ein alternatives Gerät darstellen, welches mit dem konkreten Gerät, dem das Detektionsmittel zugeordnet ist, zumindest zeitweise eine Datenverbindung aufweist.

In der Hardware-basierten Ausführung basiert das Detektionsmittel auf eigenständiger Hardware, die beispielsweise von einem separaten Server bereitgestellt wird oder die eine eigene Datenverarbeitungseinrichtung, insbesondere CPU, APU oder GPU, mind. einen Speicher, insbesondere RAM oder HDD oder SSD, und mind. ein Interface, insbesondere ein LAN- oder WLAN- oder BT-Interface, aufweist oder die als eine Datenverarbeitungseinheit, wie z.B. ein Einplatinen-Computer, ausgebildet ist.

Fig. 4f zeigt ein Beispiel gemäß dem zusätzlich oder alternativ zu einem oder mehreren Dokumentations- und Kommunikationsprogramm/en 21 ein zentrales Dokumentations- und Kommunikationsprogramm 42 vorgesehen ist oder mehrere zentrale Dokumentations- und Kommunikationsprogramme 42 vorgesehen sind, wobei das eine zentrale oder die mehreren zentrale Dokumentations- und Kommunikationsprogramme 42 von einer Masterinstanz 44 ausführbar ist/sind. Die Masterinstanz kann dabei z.B. Teil eines Servers oder eines Clients sein.

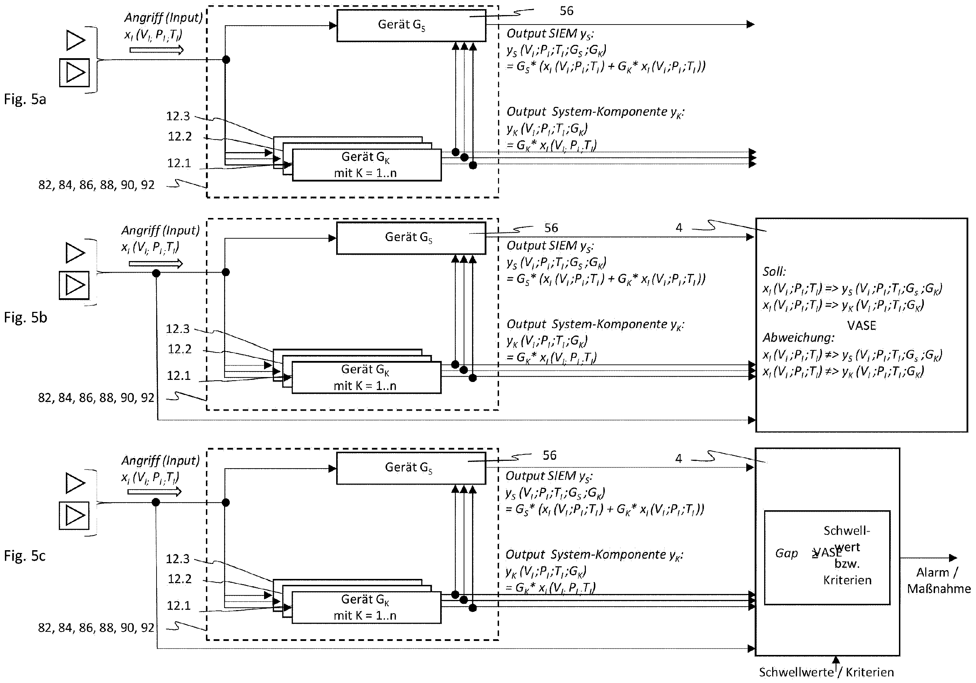

Die Figuren 5a bis 5f zeigen schematisch das Angreifen mehrerer Geräte 12.1-12.n des Gerätebestands. Wie in Bezug auf Fig. 4a-e ausgeführt wurde, kann der Angriff über ein oder über mindestens ein oder über mehr als ein Zuordnungsmittel 18 eingeleitet werden. Das Zuordnungsmittel kann dabei hardwarebasiert oder softwarebasiert sein. Zudem kann das Zuordnungsmittel Teil des angegriffenen Geräts 12.1-12.n oder Teil eines anderen Geräts, wie z.B. eines nicht vom Gerätebestand umfassten Geräts, sein. Zusätzlich oder alternativ kann das Zuordnungsmittel 18 mittels des angegriffenen Geräts 12.1-12.n oder durch ein anderes Gerät, wie z.B. durch ein nicht vom Gerätebestand umfasstes Gerät, ausgeführt werden.

Eine Aktivität zumindest eines und bevorzugt jedes der mehreren Geräte 12.1-12.n ist infolge des Empfangs der Angriffsdatei 8 und/oder des Angriffscodes 12 zumindest mittelbar und bevorzugt unmittelbar durch zumindest ein Detektionsmittel 20, insbesondere durch jeweils ein Detektionsmittel 20, detektierbar. Das Detektionsmittel 20, insbesondere das jeweilige Detektionsmittel 20, ist zum Erzeugen von Aktivitätsdaten 23 des mindestens einen Geräts 12 und bevorzugt jedes der mehreren Geräte 12 in Abhängigkeit zumindest eines Teils der Aktivität infolge des Empfangs der Angriffsdatei 8 und/oder des Angriffscodes 10 konfiguriert. Alternativ ist das Detektionsmittel 20, insbesondere das jeweilige Detektionsmittel 20, zum Erzeugen von Aktivitätsdaten 23 des mindestens einen Geräts 12 und bevorzugt jedes der mehreren Geräte 12.1-12.n in Abhängigkeit zumindest eines Teils der Aktivität des mindestens einen Geräts 12 und bevorzugt jedes der mehreren Geräte 12.1-12.n infolge des Empfangs der Angriffsdatei 8 und/oder des Angriffscodes 10 durch das mindestens eine Gerät und bevorzugt durch jedes der mehreren Geräte 12 und ein Ausführen der Angriffsdatei 8 und/oder des Angriffscodes 10 durch das mindestens eine Gerät 12 und bevorzugt durch jedes der mehreren Geräte 12.1-12.n konfiguriert.

Das Detektionsmittel 20, insbesondere das jeweilige Detektionsmittel 20, ist zum zumindest mittelbaren und bevorzugt unmittelbaren Bereitstellen der Aktivitätsdaten an die Analyseeinheit 4 konfiguriert.

Die Aktivitätsdaten der Detektionsmittel 20 oder einzelner Detektionsmittel 20 sind zusätzlich oder alternativ an eine Security Incident and Event Management Einheit (SIEM-Einheit) 56 der hybriden IT-Betriebsumgebung 2 übermittelbar, wobei von der SIEM-Einheit 56 die Aktivitätsdaten 23 an die Analyseeinheit 4 weiterleitbar sind oder wobei von der SIEM-Einheit 56 die Aktivitätsdaten 23 modifizierbar sind und modifizierten Aktivitätsdaten an die Analyseeinheit 4 weiterleitbar sind.

Figur. 5a zeigt, dass die Ausführung eines Angriffs (input) besonders bevorzugt durch
- V_{I} = Angriffstyp
- P_{I} = individuelle Parametrierung des Angriffs
- T_{I} = Zeitpunkt(e) der Ausführung
gekennzeichnet sein kann.

Eine Systemantwort *y_{K}* der System-Komponenten bzw. des Geräts 12 ist durch die input Parameter x_{I} sowie durch das eigene Systemverhalten des Geräts 12 *(G_{K}*) gekennzeichnet. Daher kann der *Output der System-Komponente y bzw. des angegriffenen Geräts auch wie folgt beschrieben werden:* ${y}_{K} \left({V}_{I}; {P}_{I}; {T}_{I}; {G}_{K}\right) = {G}_{K} * {x}_{I} \left({V}_{I}; {P}_{I}; {T}_{I}\right)$

Eine Systemantwort *yₛ* des SIEM 56, ist bevorzugt durch die input Parameter x_{I} sowie durch das Systemverhalten des SIEM *Gₛ* gekennzeichnet und kann beispielsweise wie folgt beschrieben werden: ${y}_{S} \left({V}_{I}; {P}_{I}; {T}_{I}; {G}_{S}; {G}_{K}\right) = {G}_{S} * \left({x}_{I}\left({V}_{I}; {P}_{I}; {T}_{I}\right)+{G}_{K}*{x}_{I}\left({V}_{I}; {P}_{I}; {T}_{I}\right)\right)$

Gemäß Fig. 5b erfolgt durch die Analyseeinheit 4 eine Prüfung auf Korrelationen zwischen den Systemantworten und dem ausgeführten (legitimierten) Angriff/en. Es wird folglich überprüft, ob eine Beziehung besteht zwischen *dem "Input Angriff x_{I}"* und dem *"Output SIEM yₛ", beschrieben als* $Soll : {x}_{I} \left({V}_{I}; {P}_{I}; {T}_{I}\right) = > {y}_{K} \left({V}_{I}; {P}_{I}; {T}_{I}; {G}_{K}\right)$

Gemäß Fig. 5b erfolgt ferner durch die Analyseeinheit 4 die Quantifizierung der ggf. vorliegenden Abhängigkeiten zwischen Systemantworten und dem ausgeführten (legitimierten) Angriff/en. Es wird folglich die Höhe der Abweichung zwischen *"Input* Angriff x_{I}" und dem "Output SIEM yₛ" ermittelt, beschrieben als $Abweichung : {x}_{I} \left({V}_{I}; {P}_{I}; {T}_{I}\right) \neq > {y}_{K} \left({V}_{I}; {P}_{I}; {T}_{I}; {G}_{K}\right)$

Ergänzend erfolgt gemäß Fig. 5b durch die Analyseeinheit 4 eine Prüfung auf Korrelationen zwischen den Antworten des SIEM und dem ausgeführten (legitimierten) Angriff/en. Es wird folglich überprüft, ob eine Beziehung besteht zwischen *"Input Angriff x_{I}"* und dem *"Output SIEM yₛ", beschrieben als* $Soll : {x}_{I} \left({V}_{I}; {P}_{I}; {T}_{I}\right) = > {y}_{S} \left({V}_{I}; {P}_{I}; {T}_{I}; {G}_{S}; {G}_{K}\right)$

Gemäß Fig. 5b erfolgt ferner durch die Analyseeinheit 4 die Quantifizierung der ggf. vorliegenden Abhängigkeiten zwischen den Antworten des SIEM und dem ausgeführten (legitimierten) Angriff/en. Es wird folglich die Höhe der Abweichung zwischen *"Input Angriff x_{I}"* und dem *"Output SIEM yₛ" ermittelt, beschrieben als* $Abweichung : {x}_{I} \left({V}_{I}; {P}_{I}; {T}_{I}\right) \neq > {y}_{S} \left({V}_{I}; {P}_{I}; {T}_{I}; {G}_{s}; {G}_{K}\right)$

Gemäß Fig. 5c wird in einer konkreten Ausführungsform der Schwellwertvergleich der Analyseeinheit mit Hilfe einer Recheneinheit und/oder eines Einplatinen-Computers, Beispielsweise in Form des Modells Raspberry Pi^{®} 5 B 8 GB 4 x 2.4 GHz, realisiert, der bevorzugt einen Prozessor, einen Speicher und Kommunikationsmodul/e umfasst. In dem Ausführungsbeispiel wird die zuvor als Zahlenwert ermittelte und eingelesene Abweichung mit dem zugeordneten, numerischen Schwellwert aus dem Speicher auf Grundlage einer ausgeführten Subtraktion verglichen. Im Fall eines positiven Ergebnisses liegt die Abweichung oberhalb des Schwellwert, sodass bevorzugt direkt und/oder indirekt ein Alarm ausgebbar ist und ggf. weitere Maßnahmen ausgeführt werden.

In einer anderen Ausführungsform können mit Hilfe einer Recheneinheit und/oder eines Einplatinen-Computers, beispielsweise in Form des Modells Raspberry Pi^{®} 5 B 8 GB 4 x 2.4 GHz, Vergleiche mit booleschen Variablen ausgeführt werden, wobei die booleschen Variablen stellvertretend für zuvor festgelegte und im Speicher hinterlege Kriterien stehen. Über eine Wenn-Abfrage kann der Angriffstyp geprüft werden, d.h. ob dieser mit dem detektierten Alarmtyp übereinstimmt.

Der Schwellwert oder die mehreren Schwellwerte und/oder das Kriterium oder die mehreren Kriterien sind in der Analyseeinheit hinterlegbar bzw. registrierbar.

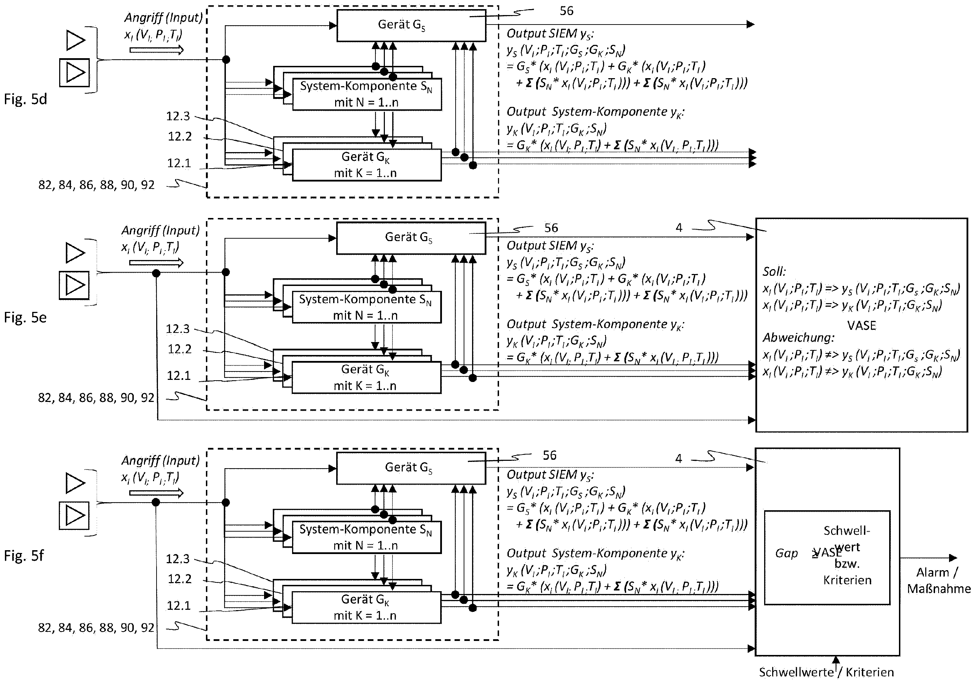

Figur. 5d zeigt ebenfalls, dass die Ausführung eines Angriffs (input) besonders bevorzugt durch
- V_{I} = Angriffstyp
- P_{I} = individuelle Parametrierung des Angriffs
- T_{I} = Zeitpunkt(e) der Ausführung
gekennzeichnet sein kann.

Eine Systemantwort *y_{K}* des Geräts *G_{K}* 12 ist bevorzugt durch die input Parameter x_{I} sowie durch das eigene Systemverhalten des Geräts *G_{K}* 12 und zusätzlich oder alternativ durch direkte, indirekte und/oder gegenseitige Auswirkungen einer oder mehrerer weiterer benachbarter System-Komponenten S_{N} gekennzeichnet, die in einer bevorzugten Ausgestaltung der Erfindung zur Systemantwort y_{K} beitragen kann/können.

Unter benachbarter System-Komponente S_{N} kann bevorzugt eine zum Gerät *G_{K} 12* benachbarte Komponenten innerhalb der hybriden IT-Betriebsumgebung 2 verstanden werden, die einen Server 57 oder einen Client 3 aufweist. Der Server 57 oder der Client kann dabei jeweils eine Anwendung 70 oder mehrere Anwendungen 70.1-70.n aufweisen. Zusätzlich kann eine Middleware 72 oder mehrere Middlewareprogramme 72.1-72.n und jeweils zumindest ein Betriebssystem 74 vorgesehen sein. Über Kommunikationselemente 76 kann der Client 3 oder der Server 57 mit einem oder mindestens einem weiteren Client oder Server eine Datenverbindung aufweisen. Zusätzlich oder alternativ können über die Kommunikationselemente 76 eine oder mehr als eine Firewall 78 und/oder eine oder mehr als eine weitere Einrichtung und/oder ein oder mehr als ein SIEM 56 zum Senden und/oder Empfangen von Daten angebunden sein. Die Kommunikationselemente 76 können eine oder mehrere Festkörperdatenleitung/en, insbesondere Kupfer oder Glasfaser, und/oder eine oder mehrere Funkverbindung/en ausbilden.

Alternativ können unter der benachbarten System-Komponente S_{N} grundsätzlich alle zum Gerät *G_{K}* 12 benachbarten Komponenten innerhalb der hybriden IT-Betriebsumgebung 2 gezählt werden, die einen Gerätebestand aufweisen, der z.B. einen Server 57 oder mehrere Server 57.1-57.n und bevorzugt einen Client 3 oder mehrere Clients 3.1-3.n aufweist. Der oder die Server 57.1-57.n und/oder der oder die Clients 3.1-3.n können dabei jeweils eine Anwendung 70 oder mehrere Anwendungen 70.1-70.n aufweisen. Zusätzlich kann eine Middleware 72 oder mehrere Middlewareprogramme 72.1-72.n und jeweils zumindest ein Betriebssystem 74 vorgesehen sein. Über Kommunikationselemente 76 können die Clients 3.1-3.n untereinander oder die Server 57.1-57.n untereinander oder einzelne oder mehrere oder alle Clients 3.1-3.n und einzelne oder mehrere oder alle Server 57.1-57.n miteinander zumindest zeitweise eine Datenverbindung aufweisen. Zusätzlich oder alternativ können über die Kommunikationselemente 76 eine oder mehr als eine Firewall 78 und/oder eine oder mehr als eine weitere Einrichtung und/oder ein oder mehr als ein SIEM 56 zum Senden und/oder Empfangen von Daten angebunden sein. Die Kommunikationselemente 76 können eine oder mehrere Festkörperdatenleitung/en, insbesondere Kupfer oder Glasfaser, und/oder eine oder mehrere Funkverbindung/en ausbilden.

Unter dem Systemverhalten der benachbarten System-Komponente S_{N} kann bevorzugt auch das Systemverhalten einer Gruppe von benachbarten Geräten verstanden werden, die nach außen das Verhalten und Erscheinungsbild einer Einheit haben und zu einer Einheit zusammengefasst werden können.

Besonders bevorzugt kann das dynamische Systemverhalten des Geräts *G_{K}* 12 oder mehrerer Geräte *G_{K}* 12 sowie das dynamische Systemverhalten der benachbarten System-Komponenten S_{N} im Kontext der vorliegenden Erfindung, insbesondere zur Bestimmung einer Erkennungslücke, berücksichtigt werden.

Daher kann der Output der benachbarten System-Komponente y_{K} bzw. des angegriffenen Geräts beispielsweise wie folgt beschrieben werden: ${y}_{K} \left({V}_{I}; {P}_{I}; {T}_{I}; {G}_{K}; {S}_{N}\right) = {G}_{K} * \left({x}_{I}\left({V}_{I}; {P}_{I}; {T}_{I}\right)+Σ\left({S}_{N}*{x}_{I}\left({V}_{I}; {P}_{I}; {T}_{I}\right)\right)\right)$

Eine Systemantwort *yₛ* des SIEM 56 ist bevorzugt durch die input Parameter x_{I} sowie durch das eigene Systemverhalten des SIEM *Gₛ* sowie durch direkte, indirekte und/oder gegenseitige Auswirkungen des Geräts *G_{K}* 12 und/oder der benachbarten System-Komponenten S_{N} gekennzeichnet, die ihrerseits zur Systemantwort yₛ beitragen können.

Unter dem Systemverhalten des Geräts *G_{K}* 12, des SIEM *Gₛ* oder unter der benachbarten System-Komponente S_{N} kann besonders bevorzugt auch das Systemverhalten einer Gruppe von Geräten oder benachbarter System-Komponenten verstanden werden, die nach außen das Verhalten und Erscheinungsbild einer Einheit haben und zu einer Einheit zusammengefasst werden können.
wobei das dynamische Systemverhalten des SIEM *Gₛ* , des Geräts *G_{K}* sowie des/der benachbarten System-Komponente/n S_{N} im Kontext berücksichtigt werden kann.

Daher kann der *Output des SIEM Gₛ* beispielsweise wie folgt beschrieben werden: $\begin{matrix}{y}_{S} \left({V}_{I}; {P}_{I}; {T}_{I}; {G}_{S}; {G}_{K}; {S}_{N}\right) \\ = {G}_{S} * \left({x}_{I}\left({V}_{I}; {P}_{I}; {T}_{I}\right)+{G}_{K}*\left({x}_{I}\left({V}_{I}; {P}_{I}; {T}_{I}\right)+Σ\left({S}_{N}*{x}_{I}\left({V}_{I}; {P}_{I}; {T}_{I}\right)\right)\right)+Σ\left({S}_{N}*{x}_{I}\left({V}_{I}; {P}_{I}; {T}_{I}\right)\right)\right)\end{matrix}$

Gemäß Fig. 5e erfolgt durch die Analyseeinheit 4 eine Prüfung auf Korrelationen zwischen den Systemantworten und dem ausgeführten (legitimierten) Angriff/en. Es wird folglich überprüft, ob eine Beziehung zwischen dem *"Input Angriff x_{I}"* und dem *"Output System-Komponente y_{K}"* besteht, beschrieben als $Soll : {x}_{I} \left({V}_{I}; {P}_{I}; {T}_{I}\right) = > {y}_{K} \left({V}_{I}; {P}_{I}; {T}_{I}; {G}_{K}; {S}_{N}\right)$

Gemäß Fig. 5e erfolgt ferner durch die Analyseeinheit 4 die Quantifizierung der ggf. vorliegenden Abhängigkeiten zwischen Systemantworten und dem ausgeführten (legitimierten) Angriff/en. Es wird folglich die Höhe der Abweichung zwischen dem *"Input Angriff x_{I}"* und dem *"Output System-Komponente y_{K}"* ermittelt, beschrieben als $Abweichung : {x}_{I} \left({V}_{I}; {P}_{I}; {T}_{I}\right) \neq > {y}_{K} \left({V}_{I}; {P}_{I}; {T}_{I}; {G}_{K}; {S}_{N}\right)$

Ergänzend erfolgt gemäß Fig. 5e durch die Analyseeinheit 4 eine Prüfung auf Korrelationen zwischen den Antworten des SIEM und dem ausgeführten (legitimierten) Angriff/en. Es wird folglich überprüft, ob eine Beziehung zwischen dem *"Input Angriff x_{I}"* und dem *"Output SIEM yₛ"* besteht, beschrieben als ${Soll : x}_{I} \left({V}_{I}; {P}_{I}; {T}_{I}\right) = > {y}_{S} \left({V}_{I}; {P}_{I}; {T}_{I}; {G}_{s}; {G}_{K}; {S}_{N}\right)$

Gemäß Fig. 5e erfolgt ferner durch die Analyseeinheit 4 die Quantifizierung der ggf. vorliegenden Abhängigkeiten zwischen den Antworten des SIEM und dem ausgeführten (legitimierten) Angriff/en. Es wird folglich die Höhe der Abweichung zwischen dem *"Input Angriff x_{I}"* und dem *"Output SIEM yₛ"* ermittelt, beschrieben als ${Abweichung : x}_{I} \left({V}_{I}; {P}_{I}; {T}_{I}\right) \neq > {y}_{S} \left({V}_{I}; {P}_{I}; {T}_{I}; {G}_{s}; {G}_{K}; {S}_{N}\right)$

Gemäß Fig. 5f kann in einer konkreten Ausführungsform der Schwellwertvergleich der Analyseeinheit mit Hilfe einer Recheneinheit und/oder eines Einplatinen-Computers, beispielsweise in Form des Modells Raspberry Pi^{®} 5 B 8 GB 4 x 2.4 GHz, realisiert werden, der einen Prozessor, einen Speicher und Kommunikationsmodule umfasst. In dem Ausführungsbeispiel wird die zuvor als Zahlenwert ermittelte und eingelesene Abweichung mit dem zugeordneten, numerischen Soll-Schwellwert aus dem Speicher auf Grundlage einer ausgeführten Subtraktion verglichen. Im Fall eines positiven Ergebnisses liegt die Abweichung oberhalb des Soll-Schwellwert, sodass direkt und/oder indirekt ein Alarm ausgegeben wird und ggf. weitere Maßnahmen ausgeführt werden.

In einer anderen Ausführungsform kann ein Kriterienvergleich der Analyseeinheit mit Hilfe einer Recheneinheit und/oder eines Einplatinen-Computers, beispielsweise in Form des Modells Raspberry Pi^{®} 5 B 8 GB 4 x 2.4 GHz, anhand von booleschen Variablen ausgeführt werden, wobei die booleschen Variablen stellvertretend für zuvor hinterlegte Kriterien stehen. Über eine Wenn-Abfrage kann geprüft werden, ob das detektierte Kriterium des Alarms mit dem hinterlegten Soll-Kriterium aus der Datenbank übereinstimmt. Im Fall einer Nicht-Übereinstimmung wird ein Alarm ausgegeben und es werden ggf. weitere Maßnahmen ausgeführt.

Der Schwellwert oder die mehreren Schwellwerte und/oder das Kriterium oder die mehreren Kriterien sind in der Analyseeinheit hinterlegbar bzw. registrierbar.

Fig. 6 zeigt schematisch ein Beispiel eines erfindungsgemäßem Systems 1, wobei das System 1 eine Überprüfungseinheit 100 oder Bestandteile, insbesondere eine Analyseeinheit 4 und/oder Angriffseinheit 6, dieser Überprüfungseinheit 100 und einen Gerätebestand 82, 84, 86, 88, 90, 92 (vgl. Ausführungen zu Fig. 3) einer hybriden IT-Betriebsumgebung 2 betrifft. Die Überprüfungseinheit 100 oder Bestandteile, insbesondere eine Analyseeinheit 4 und/oder Angriffseinheit 6, dieser Überprüfungseinheit 100 ist/sind dabei bevorzugt über ein Gateway 58 mit dem Gerätebestand 82, 84, 86, 88, 90, 92 der hybriden IT-Betriebsumgebung 2 verbunden, insbesondere zeitweise oder dauerhaft verbunden. Die über das Gateway 58 erzeugte Verbindung dient bevorzugt zum Datenaustausch und kann daher mittels Kabel und/oder Funk ausgebildet sein.

Die Überprüfungseinheit 100 weist bevorzugt zumindest die Analyseeinheit 4 und/oder Angriffseinheit 6 auf. Die Analyseeinheit 4 und/oder Angriffseinheit 6 ist/sind bevorzugt Teil eines Angriffs- und/oder Überprüfungsservers 7. Bevorzugt ist ebenfalls eine Kontroll- und/oder Ausgabeinstanz 5 Bestandteil der Überprüfungseinheit 100, wobei die Kontroll- und/oder Ausgabeinstanz 5 zumindest datentechnisch mit dem Angriffs- und/oder Überprüfungsserver 7, insbesondere der Analyseeinheit 4 und/oder der Angriffseinheit 6, gekoppelt ist bzw. koppelbar ist. Die Kontroll- und/oder Ausgabeinstanz 5 stellt bevorzugt eine Mensch-Maschineschnittstelle zum Vorgeben oder Auslösen der erfindungsgemäßen Erkennungslückenbestimmung dar. Weiterhin ist bevorzugt eine Bibliothek 11 zur Erzeugung oder zur Ableitung oder zum Bereitstellen der Angriffsdatei/en 8 und/oder der Angriffscode/s 10 vorgesehen. Die Bibliothek 11 kann bevorzugt zumindest datentechnisch mit dem Angriffs- und/oder Überprüfungsserver 7, insbesondere der Analyseeinheit 4 und/oder der Angriffseinheit 6, gekoppelt sein bzw. koppelbar sein.

Von der Angriffseinheit 6 an die hybriden IT-Betriebsumgebung 2 übermittelte Angriffsdatei/en 8 und/oder Angriffscode/s 10 werden einem Zuordnungsmittel 18 oder mehreren Zuordnungsmitteln 18.1-18.n zugeführt bzw. zugeleitet bzw. übermittelt. Je nach Analyseziel ist das empfangende Zuordnungsmittel 18.1-18.n somit ein Zuordnungsmittel 18 eines ersten Geräts 12.1 einer ersten Geräteart 14.1, wie z.B. ein Windows-Client, und/oder eines zweiten Geräts 12.2 bzw. eines Geräts einer zweiten Geräteart 14.2 , wie z.B. ein Linux-Server, und/oder eines dritten Geräts 12.3 bzw. eines Geräts einer dritten Geräteart 14.3, wie z.B. eine Router-Netzwerkkomponente, und/oder eines vierten Geräts 12.4 bzw. eines Geräts einer vierten Geräteart 14.4, wie z.B. eine andere Komponente oder eine Firewall. Es wurde bereits hinsichtlich der Figuren 1 bis 5c dargestellt, dass die Geräte 12.1-12.n des Gerätebestands 82, 84, 86, 88, 90, 92 mehrere Geräte 12.1-12.n derselben Geräteart oder Geräte 12.1-12.n unterschiedlicher Gerätearten sein können. Weiterhin ist wesentlich, dass die Angriffsdatei/en 8 und/oder Angriffscode/s 10 ein oder nur genau ein Gerät 12 oder Geräte 12.1-12.n einer Geräteart oder Geräte 12.1-12.n von nur genau einer Geräteart oder Geräte 12.1-12.n unterschiedliche Gerätearten betreffen können, abhängig von der jeweils zu überprüfenden Erkennungslücke.

Es wurde bzgl. der Figuren 1-5c bereits ausgeführt, dass es sich bei den Zuordnungsmitteln 18.1-18.n um softwarebasierte und/oder hardwarebasierte Zuordnungsmittel handeln kann, die entweder Teil des jeweiligen Gerät 12 sind oder mit diesem zumindest zeitweise Daten austauschen.

Bevorzugt weisen die Geräte 12.1-12.n des Gerätebestand ein oder mehrere Detektionsmittel 20.1-20.n auf. Eine Aktivität zumindest eines und bevorzugt jedes der mehreren Geräte 12.1-12.n ist dabei bevorzugt infolge des Empfangs der Angriffsdatei 8 und/oder des Angriffscodes 12 zumindest mittelbar und bevorzugt unmittelbar durch zumindest ein Detektionsmittel 20, insbesondere durch jeweils ein Detektionsmittel 20.1-20.n, detektierbar.

Das Detektionsmittel 20, insbesondere das jeweilige Detektionsmittel 20.1-20.n, ist dabei bevorzugt zum Erzeugen von Aktivitätsdaten 23.1-23.n des mindestens einen Geräts 12 und bevorzugt jedes der mehreren Geräte 12.1-12.n in Abhängigkeit zumindest eines Teils der Aktivität infolge des Empfangs der Angriffsdatei 8 und/oder des Angriffscodes 10 konfiguriert. Alternativ ist das Detektionsmittel 20, insbesondere das jeweilige Detektionsmittel 20, zum Erzeugen von Aktivitätsdaten 23 des mindestens einen Geräts 12 und bevorzugt jedes der mehreren Geräte 12.1-12.n in Abhängigkeit zumindest eines Teils der Aktivität des mindestens einen Geräts 12 und bevorzugt jedes der mehreren Geräte 12.1-12.n infolge des Empfangs der Angriffsdatei 8 und/oder des Angriffscodes 10 durch das mindestens eine Gerät 12 und bevorzugt durch jedes der mehreren Geräte 12.1-12.n und ein Ausführen der Angriffsdatei 8 und/oder des Angriffscodes 10 durch das mindestens eine Gerät 12 und bevorzugt durch jedes der mehreren Geräte 12.1-12.n konfiguriert.

Das Detektionsmittel 20, insbesondere das jeweilige Detektionsmittel 20.1-20.n, ist bevorzugt zum zumindest mittelbaren und besonders bevorzugt unmittelbaren Bereitstellen der Aktivitätsdaten an die Analyseeinheit 4 konfiguriert. Es ferner möglich, dass ein SIEM 56 vorgesehen ist. Das SIEM 56 kann dann ebenfalls ein Detektionsmittel 20 oder mehrere Detektionsmittel aufweisen. Bevorzugt werden die von den Detektionsmitteln 20.1-20.n (der Geräte 12.1-12.n und bevorzugt des SIEM 56) an die Analyseeinheit 4 übermittelt, insbesondere über das Gateway 58. Die Analyseeinheit 4 ist bevorzugt zum Bestimmen des Vorliegens oder Nicht-Vorliegens einer IT-sicherheitsrelevanten Erkennungslücke in Abhängigkeit der Aktivitätsdaten 23 eines Geräts 12, insbesondere der Aktivitätsdaten 23.1-23.n mehrerer Geräte oder jedes Geräts 12.1-12.n, und der von dem Gerät 12, insbesondere von dem jeweiligen Gerät 12, oder von dem Zuordnungsmittel 18 (welches dem Gerät 12 zugeordnet ist) empfangenen Angriffsdatei 8 und/oder des Angriffscode 10 konfiguriert.

Die Ausführung von IT-Security Angriffen auf die IT-Umgebung erfolgt bevorzugt mit Hilfe von Daten-Sequenzen, insbesondere Angriffsdatei/en 8 und/oder Angriffscode/s 10: Sie werden bevorzugt aus den Inhalten der Bibliothek 11 generiert. Sie können zusätzlich durch die Funktionalität des Angriffs- und/oder Überprüfungsservers 7 an den jeweiligen Kontext angepasst werden können.

Die ausführenden Daten-Sequenzen der IT-Security Angriffe können z.B. durch den spezifischen Angriffstyp V_{I}, durch die individuelle Parametrierung bzw. Payload des Angriffs P_{I} und/oder durch den Zeitpunkt(e) der Ausführung T_{I} gekennzeichnet sein, wobei die Kennzeichen einzeln oder in Kombination auftreten können.

In der Analyse wird das Antwortverhalten der Systemkomponenten y_{Kx} bzw. des SIEM yₛ den Daten-Sequenzen des bzw. der IT-Security Angriffe x_{I} gegenübergestellt. Eine kausale Verbindung liegt vor, wenn die Kennzeichen übereinstimmen, wobei zwischen Angriff und Systemantwort eine systembedingte Verzerrung und / oder ein Zeitversatz zu berücksichtigen ist.

Die aufgrund des Testangriffs erzeugten Systemantworten können im Nachgang zum Angriff aus dem System bzw. aus den Logs entfernt werden.

Die vorliegende Erfindung bezieht sich somit auf ein System 1 zur Bestimmung von IT-sicherheitsrelevanten Erkennungslücken einer hybriden IT-Betriebsumgebung 2. Erfindungsgemäß kann das System eine Analyseeinheit 4, eine Angriffseinheit 6, mehrere Zuordnungsmittel 18 und mehrere Detektionsmittel 20 aufweisen. Die Angriffseinheit 6 dient dabei bevorzugt zum Bereitstellen von mehreren voneinander verschiedenen Angriffsdateien 8 und/oder Angriffscodes 10 zur Modifikation der Funktionsweise von mehreren Geräten 12 der hybriden IT-Betriebsumgebung 2, wobei die mehrere Geräte 12 einer Geräteart 14 und/oder unterschiedlichen Gerätearten 14.1 bis 14.n zugehörig sind. Bevorzugt sind die mehreren Geräte 12 der hybriden IT-Betriebsumgebung 2 ein Teil des Gerätebestands der hybriden IT-Betriebsumgebung. Die mehreren Zuordnungsmittel 18 dienen zur Identifikation und/oder Adressierung der mehreren Geräte 12, wobei jedes der mehreren Geräte 12 durch zumindest ein Zuordnungsmittel 18, insbesondere durch jeweils ein Zuordnungsmittel 18, zum Empfang der Angriffsdatei 8 und/oder des Angriffscode 10 identifizierbar und/oder adressierbar ist.

Der Begriff "identifizierbar" beschreibt hierbei bevorzugt eine Identifizierung des jeweiligen Geräts mittels IP-Adresse oder Geräteart oder MAC-Adresse.

Der Begriff "adressierbar" beschreibt hierbei, dass die Angriffsdatei und/oder der Angriffscode an das jeweilige Gerät mittelbar oder unmittelbar übermittelbar ist.

Eine Aktivität zumindest eines und bevorzugt jedes der mehreren Geräte 12 infolge des Empfangs der Angriffsdatei 8 und/oder des Angriffscodes 12 ist zumindest mittelbar und bevorzugt unmittelbar durch zumindest ein Detektionsmittel 20, insbesondere durch jeweils ein Detektionsmittel 20, detektierbar, wobei das Detektionsmittel 20, insbesondere das jeweilige Detektionsmittel 20, zum Erzeugen von Aktivitätsdaten 23 des mindestens einen Geräts 12 und bevorzugt jedes der mehreren Geräte 12 in Abhängigkeit zumindest eines Teils der Aktivität infolge des Empfangs der Angriffsdatei 8 und/oder des Angriffscodes 10 konfiguriert ist, oder wobei das Detektionsmittel 20, insbesondere das jeweilige Detektionsmittel 20, zum Erzeugen von Aktivitätsdaten 23 des mindestens einen Geräts 12 und bevorzugt jedes der mehreren Geräte 12 in Abhängigkeit zumindest eines Teils der Aktivität des mindestens einen Geräts und bevorzugt jedes der mehreren Geräte 12 infolge des Empfangs der Angriffsdatei 8 und/oder des Angriffscodes 10 durch das mindestens eine Gerät und bevorzugt durch jedes der mehreren Geräte 12 und ein Ausführen der Angriffsdatei 8 und/oder des Angriffscodes 10 durch das mindestens eine Gerät und bevorzugt durch jedes der mehreren Geräte 12 konfiguriert ist. Das Detektionsmittel 20, insbesondere das jeweilige Detektionsmittel 20, ist bevorzugt zum zumindest mittelbaren und bevorzugt unmittelbaren Bereitstellen der Aktivitätsdaten an die Analyseeinheit 4 konfiguriert. Die Analyseeinheit 4 ist bevorzugt zum Bestimmen des Vorliegens oder nicht Vorliegens einer IT-sicherheitsrelevanten Erkennungslücke in Abhängigkeit der Aktivitätsdaten 23 eines Geräts 12, insbesondere der Aktivitätsdaten 23 jedes Geräts 12, und der von dem Gerät 12, insbesondere von dem jeweiligen Gerät 12, empfangenen Angriffsdatei 8 und/oder des Angriffscode 10 konfiguriert.

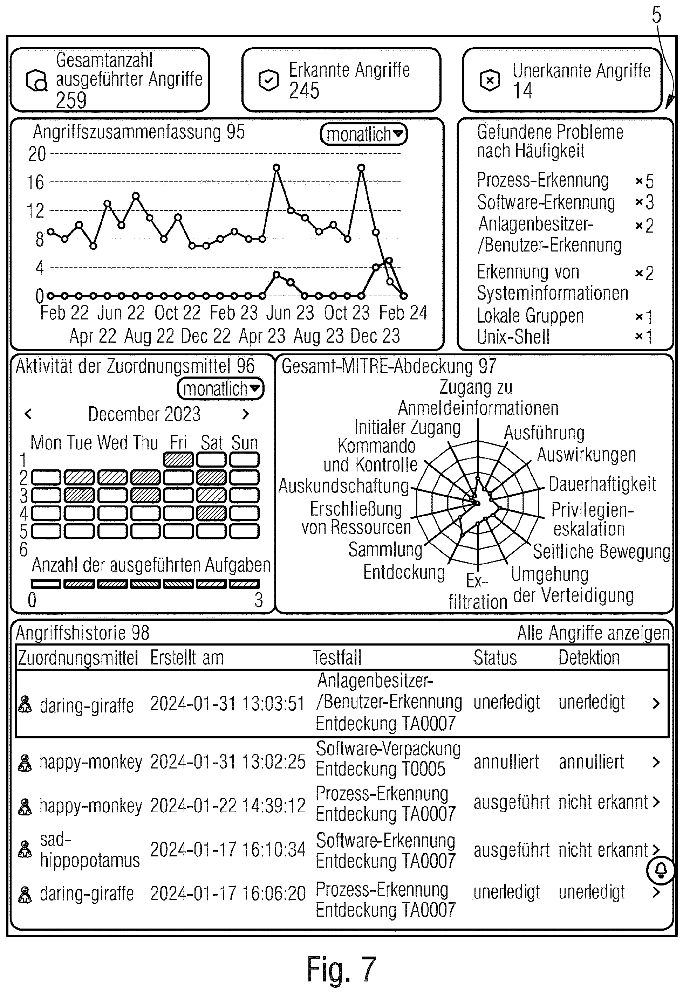

Fig. 7 zeigt ein Beispiel einer konkreten Kontroll- und/oder Ausgabeinstanz 5. Die Kontroll- und/oder Ausgabeinstanz 5 kann eine oder mehrere Informationen oder Informationskategorie/n über bereits durchgeführte Angriffe oder geplante Angriffe zum Identifizieren der IT-Erkennungslücken anzeigen.

Mögliche Informationskategorien sind dabei durch die Bezugszeichen 95, 96, 97 und 98 gekennzeichnet. Das Bezugszeichen 95 kennzeichnet eine Angriffszusammenfassung, wobei dargestellt wird, welche Anzahl an Angriffen in welchem Zeitraum erkannt wurde (die z.B. im Feb. 22 obere Linie) und welche Anzahl an Angriffen im selben Zeitraum nicht erkannt wurden (die z.B. im Feb. 22 untere Linie). Das Bezugszeichen 96 kennzeichnet eine Aktivität der Zuordnungsmittel 18, wobei dargestellt wird, in welchem Zeitraum wie viele Zuordnungsmittel 18 einen Angriff ausgeführt haben.

Das Bezugszeichen 97 zeigt eine Gesamt-MITRE-Abdeckung, um den Ablauf von Angriffen zu verstehen und die Erkennung eines erfolgten Angriffs, insbesondere mithilfe von Telemetrieerkennung und Verhaltensanalysen, zu optimieren. Hierzu werden bevorzugt mehrere Punkte überwacht und aus diesen mehreren Punkten wird bevorzugt eine grafische Darstellung erzeugt. Die mehreren Punkte sind dabei bevorzugt bis zu 14 Punkte oder genau 14 Punkte oder mehr als 14 Punkte. Besonders bevorzugt weisen die Punkte zumindest oder genau oder einzelne der nachfolgenden Punkte auf: Zugang zu Anmeldeinformationen, Ausführung Auswirkungen, Dauerhaftigkeit, Privilegieneskalation, Seitliche Verschiebung, Umgehung der Verteidigung, Exfiltration, Entdeckung, Sammlung, Erschließung von Ressourcen, Aufklären, Kommando und Kontrolle, Initialer Zugang.

Das Bezugszeichen 98 kennzeichnet eine Angriffshistorie, wobei ein Zuordnungsmittel oder eine Gruppe an Zuordnungsmitteln 18 mit einem Namen versehen ist, z.B. daring-giraffe oder happy-monkey, zusätzlich oder alternativ kann der jeweilige Testfall, bzw. die zu erfassenden IT Erkennungslücke, benannt sein, zusätzlich oder alternativ kann ein Status des Angriffs (läuft, storniert oder ausgeführt) angegeben sein, zusätzlich oder alternativ kann der Detektionsstatus (detektiert, storniert, nicht detektiert, läuft) angeben sein, zusätzlich oder alternativ kann das Erzeugungsdatum angegeben sein.

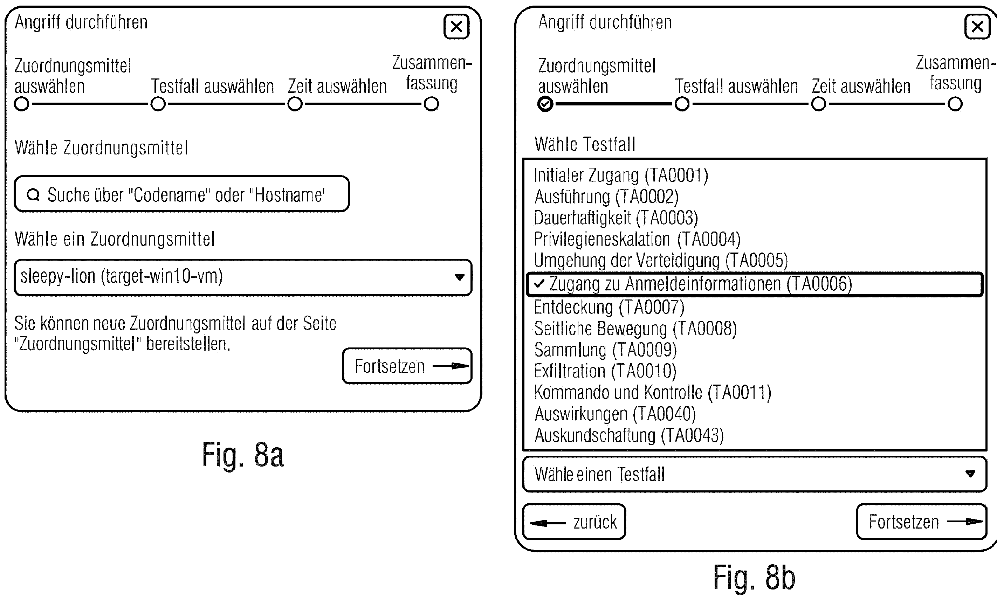

Die Figuren 8a-8f zeigen schematisch, wie z.B. mittels der Kontroll- und/oder Ausgabeinstanz 5 ein Angriff zur Bestimmung von IT-Erkennungslücke/n aufsetzbar ist.

Fig. 8a zeigt dabei die Auswahl eines Zuordnungsmittels 18 oder einer Gruppe an Zuordnungsmittel 18, wobei im ausgewählten Fall z.B. Geräte 12.1-12.n des Gerätebestands 82, 84, 86, 88, 90, 92 angegriffen werden, die ein Windows 10 System ausführen. In Fig. 8b wird z.B. eine Taktik aus der folgenden Liste der MITRE Punkte ausgewählt: Zugang zu Anmeldeinformationen, Ausführung Auswirkungen, Dauerhaftigkeit, Privilegieneskalation, Seitliche Verschiebung, Umgehung der Verteidigung, Exfiltration, Entdeckung, Sammlung, Erschließung von Ressourcen, Aufklären, Kommando und Kontrolle, Initialer Zugang.

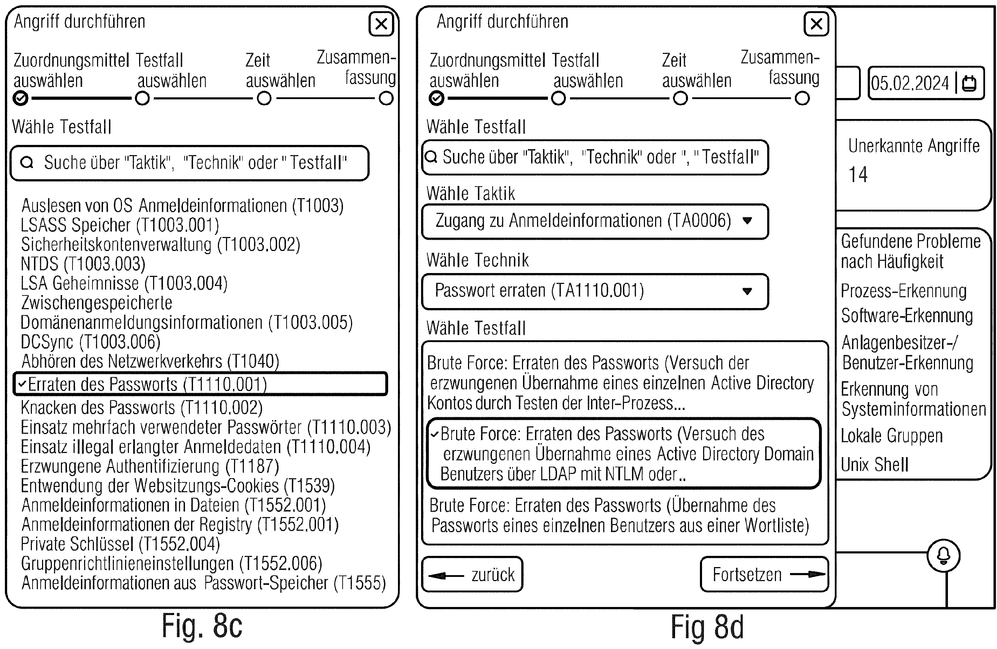

In Fig. 8c wird eine Technik ausgewählt und in Fig. 8d wird ein Vorgehen ausgewählt.

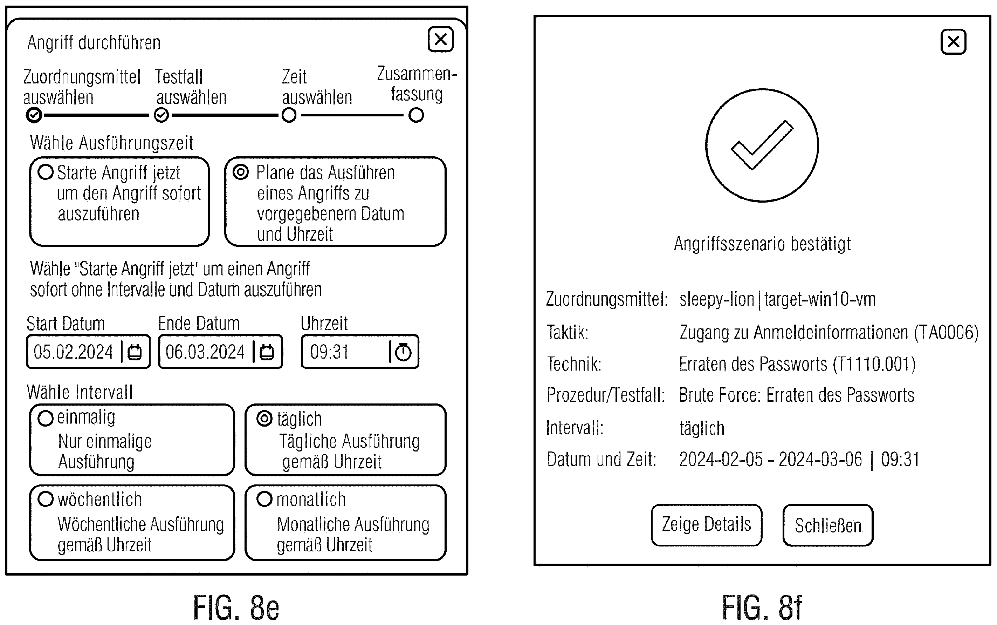

In Fig. 8e wird ausgewählt, ob der Angriff sofort oder zu einem späteren Zeitpunkt ausgeführt wird. Ferner können beispielsweise Intervalle zur Wiederholung des Angriffs definiert werden.

Gemäß Fig. 8f kann eine Zusammenfassung der zuvor festgelegten Punkte angezeigt werden.

### Bezugszeichenliste

| | | | |
|---|---|---|---|
| 1 | System zur Bestimmung von IT-sicherheitsrelevanten Erkennungslücken | 7 | Angriffs- und/oder Überprüfungsservers |
| | | 8 | Angriffsdatei |
| 2 | Betriebsumgebung | 10 | Angriffscode |
| 3 | Client | 11 | Bibliothek |
| 3.1-3.n | erster Client bis n-ter Client | 12 | Gerät |
| 4 | Analyseeinheit | 12.1-12.n | erstes Gerät bis n-tes Gerät |
| 5 | Kontroll- und/oder Ausgabeinstanz | | |
| | | 14 | Geräteart |
| 6 | Angriffseinheit | | |
| 14.1-14.n | erste Geräteart bis n-te Geräteart | 25.1-25.n | erste Kommunikations- und Verarbeitungseinrichtung bis n-te Kommunikations- und Verarbeitungseinrichtung |
| 18 | Zuordnungsmittel | | |
| 18.1-18.n | erstes Zuordnungsmittel bis n-tes Zuordnungsmittel | | |
| | | 27 | Prozessoreinrichtung des ersten Geräts |
| 20 | Detektionsmittel | | |
| 21 | Dokumentations- und Kommunikationsprogramm | 28 | Prozessoreinrichtung des zweiten Geräts |
| 21.1 bis 21.n | Detektionsmittel als erstes Dokumentations- und Kommunikationsprogramm bis n-tes Dokumentations- und Kommunikationsprogramm | 30 | weitere Ausführungskomponente des ersten Geräts |
| | | 32 | weitere Ausführungskomponente des zweiten Geräts |
| 22 | Aufbereitungs- und Kommunikationsprogramm | 34.1-34.n | erste Kommunikations- und Verarbeitungseinrichtung bis n-te Kommunikations- und Verarbeitungseinrichtung |
| 22.1 bis 22.n | Detektionsmittel als erstes Aufbereitungs- und Kommunikationsprogramm bis n-tes Aufbereitungs- und Kommunikationsprogramm | | |
| | | 36 | Kommunikationsverbindung |
| | | 36.1-36.n | erste Kommunikationsverbindung bis n-te Kommunikationsverbindung |
| 23 | Aktivitätsdaten | | |
| 24 | Kommunikations- und Verarbeitungsprogramm | | |
| 24.1-24.n | Zuordnungsmittel als erstes Kommunikations- und Verarbeitungsprogramm bis n-tes Kommunikations- und Verarbeitungsprogramm | 38 | Prozessoreinrichtung der ersten Kommunikations- und Verarbeitungseinrichtung |
| | | 40 | Prozessoreinrichtung der zweiten Kommunikations- und Verarbeitungseinrichtung |
| 25 | Zuordnungsmittel als Kommunikations- und Verarbeitungseinrichtung | | |
| 42 | zentrales Dokumentations- und Kommunikationsprogramm | | bis n-te Aufbereitungs- und Kommunikationseinrichtung |
| | | 56 | Security Incident and Event Management Einheit (SIEM-Einheit) |
| 42.1-42.n | erstes zentrales Dokumentations- und Kommunikationsprogramm bis n-tes zentrales Dokumentations- und Kommunikationsprogramm | | |
| | | 57 | Server |
| | | 57.1-57.n | ein Server bis n-te Server |
| | | 58 | Gateway |
| 44 | Masterinstanz | 60 | Datenbank |
| 46 | Dokumentations- und Kommunikationseinrichtung | 62 | On-Premise-IT-Betriebsumgebung |
| 46.1-46.n | erste Dokumentations- und Kommunikationseinrichtung bis n-te Dokumentations- und Kommunikationseinrichtung | 64 | Cloud-IT-Betriebsumgebung |
| | | 66 | Hybride Umgebung |
| | | 70 | Anwendungen |
| | | 70.1-70.n | erste Anwendung bis n-te Anwendung |
| 48 | erste Datenverbindung | | |
| 50 | zweite Datenverbindung | 72 | Middleware |
| 52 | zentrales Aufbereitungs- und Kommunikationsprogramm | 72.1-72.n | erste Middleware bis n-te Middleware |
| | | 74 | Betriebssystem |
| 52.1-52.n | erstes zentrales Aufbereitungs- und Kommunikationsprogramm bis n-tes zentrales Aufbereitungs- und Kommunikationsprogramm | 76 | Kommunikationselemente (z.B. auch 36, 48, 50) |
| | | 77 | Infrastrukturelemente (z.B. 78, 80, 56) |
| | | 78 | Firewall |
| 54 | Aufbereitungs- und Kommunikationseinrichtung | 78.1-78.n | erste Firewall bis n-te Firewall |
| 54.1-54.n | erste Aufbereitungs- und Kommunikationseinrichtung | 80 | Weitere ausführende Einrichtung |
| 82 | Gesamtgerätebestand der IT-Betriebsumgebung | 91 | Teil-Cloud-Gerätebestand der IT-Betriebsumgebung |
| 84 | Komplexer-Teil-On-Premise-Gerätebestand der IT-Betriebsumgebung | 92 | Vollständiger-Cloud-Gerätebestand der IT-Betriebsumgebung |
| 85 | Teil-On-Premise-Gerätebestand der IT-Betriebsumgebung | 94 | Teil-On-Premise-und-Teil-Cloud-Gerätebestand der IT-Betriebsumgebung |
| 86 | Vollständiger-On-Premise-Gerätebestand der IT-Betriebsumgebung | 95 | Angriffszusammenfassung |
| | | 96 | Aktivität der Zuordnungsmittel |
| 90 | Komplexer-Teil-Cloud-Gerätebestand der IT-Betriebsumgebung | 97 | Gesamt-MITRE-Abdeckung |
| | | 98 | Angriffshistorie |
| | | 100 | Überprüfungseinheit |

## Patentansprüche

1. System (1) zur Bestimmung von IT-sicherheitsrelevanten Erkennungslücken einer hybriden IT-Betriebsumgebung (2), wobei die hybride IT-Betriebsumgebung (2) zumindest einen On-Premise-Anteil (85) und einen Cloud-Anteil (91) aufweist,
mindestens umfassend
eine Analyseeinheit (4),
eine Angriffseinheit (6) zum Bereitstellen von mehreren voneinander verschiedenen Angriffsdateien (8) und/oder Angriffscodes (10) zur Modifikation der Funktionsweise von mehreren Geräten (12) der hybriden IT-Betriebsumgebung (2), wobei die mehreren **Geräte** (12) einer Geräteart (14) und/oder unterschiedlichen Gerätearten (14.1 bis 14.n) zugehörig sind, und wobei zumindest ein Gerät oder ein erster Anteil der mehreren Geräte (12) dem On-Premise-Anteil (85) der IT-Betriebsumgebung (2) zugehörig ist und wobei zumindest ein Gerät oder ein zweiter Anteil der mehreren Geräte (12) dem Cloud-Anteil (91) der IT-Betriebsumgebung (2) zugehörig ist,
mehrere Zuordnungsmittel (18) zur Identifikation und/oder Adressierung der mehreren Geräte (12), wobei jedes der mehreren Geräte (12) durch zumindest ein Zuordnungsmittel (18), insbesondere durch jeweils ein Zuordnungsmittel (18), zum Empfang der Angriffsdatei (8) und/oder des Angriffscode (10) identifizierbar und/oder adressierbar ist,
und
mehrere Detektionsmittel (20),
wobei eine Aktivität zumindest eines und bevorzugt jedes der mehreren Geräte (12) infolge des Empfangs der Angriffsdatei (8) und/oder des Angriffscodes (12) zumindest mittelbar und bevorzugt unmittelbar durch zumindest ein Detektionsmittel (20), insbesondere durch jeweils ein Detektionsmittel (20), detektierbar ist,
wobei das Detektionsmittel (20), insbesondere das jeweilige Detektionsmittel (20),
zum Erzeugen von Aktivitätsdaten (23) des mindestens einen Geräts (12) und bevorzugt jedes der mehreren Geräte (12) in Abhängigkeit zumindest eines Teils der Aktivität des mindestens einen Geräts und bevorzugt jedes der mehreren Geräte (12) infolge des Empfangs der Angriffsdatei (8) und/oder des Angriffscodes (10) durch das mindestens eine Gerät und bevorzugt durch jedes der mehreren Geräte (12) und ein Ausführen der Angriffsdatei (8) und/oder des Angriffscodes (10) durch das mindestens eine Gerät und bevorzugt durch jedes der mehreren Geräte (12) konfiguriert ist, und
wobei das Detektionsmittel (20), insbesondere das jeweilige Detektionsmittel (20), zum zumindest mittelbaren und bevorzugt unmittelbaren Bereitstellen der Aktivitätsdaten an die Analyseeinheit (4) konfiguriert ist,
wobei die Analyseeinheit (4) zum Bestimmen des Vorliegens oder Nicht-Vorliegens einer IT-sicherheitsrelevanten Erkennungslücke in Abhängigkeit der Aktivitätsdaten (23) eines Geräts (12), insbesondere der Aktivitätsdaten (23) jedes Geräts (12), und der von dem Gerät (12), insbesondere von dem jeweiligen Gerät (12), empfangenen Angriffsdatei (8) und/oder des Angriffscode (10) konfiguriert ist.

2. System nach Anspruch 1,
**dadurch gekennzeichnet, dass**
die Angriffsdateien (8) Angriffe zu unterschiedlichen Angriffstypen, insbesondere mehr als drei voneinander verschiedenen Angriffstypen, repräsentieren und/oder die Angriffscodes (10) Angriffe zu unterschiedlichen Angriffstypen, insbesondere mehr als drei voneinander verschiedenen Angriffstypen, repräsentieren.

3. System nach Anspruch 2,
**dadurch gekennzeichnet, dass**
die Angriffsdateien (8) oder Angriffscodes (10) zumindest zu zwei unterschiedlichen Angriffstypen jeweils mehr als zwei und bevorzugt mehr als drei unterschiedliche Angriffstechniken repräsentieren, wobei
die unterschiedlichen Angriffstypen aus einer Gruppe an Angriffstypen ausgewählt sind, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung.

4. System nach Anspruch 2,
**dadurch gekennzeichnet, dass**
die Angriffsdateien (8) Angriffe zu mehr als oder zu genau fünf voneinander verschiedenen Angriffstypen repräsentieren und/oder die Angriffscodes (10) Angriffe zu mehr als fünf oder zu genau fünf voneinander verschiedenen Angriffstypen repräsentieren, wobei
die zumindest fünf oder genau fünf unterschiedlichen Angriffstypen aus einer Gruppe an Angriffstypen ausgewählt sind, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung, wobei
die zumindest oder genau fünf unterschiedlichen Angriffstypen sind:
Ausführung, Dauerhaftigkeit, Privilegien-Eskalation, Zugang zu Anmeldeinformationen,
Entdeckung.

5. System nach Anspruch 2,
**dadurch gekennzeichnet, dass**
die Angriffsdateien (8) Angriffe zu mehr als oder zu genau acht voneinander verschiedenen Angriffstypen repräsentieren und/oder die Angriffscodes (10) Angriffe zu mehr als acht oder zu genau acht voneinander verschiedenen Angriffstypen repräsentieren,
wobei die zumindest acht oder genau acht unterschiedlichen Angriffstypen aus einer Gruppe an Angriffstypen ausgewählt sind, wobei die Gruppe aufweist: Initialer Zugang, Ausführung, Dauerhaftigkeit, Privilegien-Eskalation, Umgehung der Verteidigung, Entdeckung, Seitliche Bewegung, Sammlung, Kommando und Kontrolle, Exfiltration, Auswirkung,
wobei die zumindest oder genau acht unterschiedlichen Angriffstypen sind:
Ausführung, Dauerhaftigkeit, Privilegien-Eskalation, Zugang zu Anmeldeinformationen,
Entdeckung, Seitliche Bewegung, Sammlung, Kommando und Kontrolle.

6. System nach einem der vorangegangenen Ansprüche 2 bis 5,
**dadurch gekennzeichnet, dass**
zumindest eine Angriffsdatei (8) die einen ersten Angriffstyp repräsentiert oder ein Angriffscode (10) der einen ersten Angriffstyp repräsentiert bereitstellbar ist und
zumindest eine Angriffsdatei (8) die einen zweiten Angriffstyp repräsentiert oder ein Angriffscode (10) der einen zweiten Angriffstyp repräsentiert bereitstellbar ist,
wobei die Angriffsdatei (8) die den zweiten Angriffstyp repräsentiert oder der Angriffscode (10) der den zweiten Angriffstyp repräsentiert in Abhängigkeit von der Angriffsdatei, die den ersten Angriffstyp repräsentiert, oder in Abhängigkeit von dem Angriffscode (10), der den ersten Angriffstyp repräsentiert, bereitstellbar ist.

7. System nach einem der vorangegangenen Ansprüche,
**dadurch gekennzeichnet, dass**
zumindest zwei Zuordnungsmittel (18) genau zwei Geräten (12.1, 12.2) der mehreren Geräte (12.1 bis 12.n) unmittelbar zugeordnet sind, wobei ein erstes Zuordnungsmittel (18.1) der beiden Zuordnungsmittel (18.1, 18.2) einem ersten Gerät (12.1) der zwei Geräte (12.1, 12.2) zugeordnet ist und wobei das zweite Zuordnungsmittel (18.2) der zwei Zuordnungsmittel (18.1, 18.2) einem zweiten Gerät (12.2) der zwei Geräte (12.1, 12.2) zugeordnet ist.

8. System nach einem der vorangegangenen Ansprüche,
**dadurch gekennzeichnet, dass**
mehrere oder alle Detektionsmittel (20) Dokumentations- und Kommunikationsprogramme (21.1- 21.n) zum Erzeugen und Bereitstellen der Aktivitätsdaten sind.

9. System nach Anspruch 8,
**dadurch gekennzeichnet, dass**
die Dokumentations- und Kommunikationsprogramme (21.1-21.n) von den Geräten (12.1-12.n) ausführbar sind
und/oder
ein oder mehrere zentrale Dokumentations- und Kommunikationsprogramme (42.1-42.n) vorgesehen sind, wobei das eine zentrale oder die mehreren zentrale Dokumentations- und Kommunikationsprogramme (42.1-42.n) von einer Masterinstanz (44) ausführbar ist/sind
und/oder
zumindest zwei Dokumentations- und Kommunikationseinrichtungen (46.1, 46.2) zum Ausführen von Dokumentations- und Kommunikationsprogrammen (21.1-21.n) vorgesehen sind, wobei eine erste Dokumentations- und Kommunikationseinrichtung (46.1) der zumindest zwei Dokumentations- und Kommunikationseinrichtungen (46.1, 46.2) zum Ausführen eines ersten Dokumentations- und Kommunikationsprogramms (21.1) konfiguriert ist, wobei die erste Dokumentations- und Kommunikationseinrichtung (46.1) zumindest mittels einer ersten Datenverbindung (48) mit einem der Geräte (12.1-12.n) verbunden ist und wobei eine zweite Dokumentations- und Kommunikationseinrichtung (46.2) der zumindest zwei Dokumentations- und Kommunikationseinrichtungen (46.1, 46.2) zum Ausführen eines zweiten Dokumentations- und Kommunikationsprogramms (21.2) konfiguriert ist, wobei die zweite Dokumentations- und Kommunikationseinrichtung (46.2) zumindest mittels einer zweiten Datenverbindung (50) mit einem anderen der Geräte (12.1-12.n) verbunden ist.

10. System nach einem der vorangegangenen Ansprüche,
**dadurch gekennzeichnet, dass**
mehrere oder alle Detektionsmittel (20) Aufbereitungs- und Kommunikationsprogramme (22.1-22.n) zum Aufbereiten, Erzeugen und Bereitstellen der Aktivitätsdaten sind.

11. System nach Anspruch 10,
**dadurch gekennzeichnet, dass**
die Aufbereitungs- und Kommunikationsprogramme (22.1-22.n) von den Geräten (12.1-12.n) ausführbar sind
und/oder
ein oder mehrere zentrale Aufbereitungs- und Kommunikationsprogramme (52.1-52.n) vorgesehen sind, wobei das eine zentrale oder die mehreren zentrale Aufbereitungs- und Kommunikationsprogramme (52.1-52.n) von einer Masterinstanz (44) ausführbar ist/sind
und/oder
zumindest zwei Aufbereitungs- und Kommunikationseinrichtungen (54.1, 54.2) zum Ausführen von Aufbereitungs- und Kommunikationsprogrammen (22.1-22.n) vorgesehen sind, wobei eine erste Aufbereitungs- und Kommunikationseinrichtung (54.1) der zumindest zwei Aufbereitungs- und Kommunikationseinrichtungen (54.1, 54.2) zum Ausführen eines ersten Aufbereitungs- und Kommunikationsprogramms (22.1) konfiguriert ist, wobei die erste Aufbereitungs- und Kommunikationseinrichtung (54.1) zumindest mittels einer ersten Datenverbindung (48) mit einem der Geräte (12.1-12.n) verbunden ist und wobei eine zweite Aufbereitungs- und Kommunikationseinrichtung (54.2) der zumindest zwei Aufbereitungs- und Kommunikationseinrichtungen (54.1, 54.2) zum Ausführen eines zweiten Aufbereitungs- und Kommunikationsprogramms (22.2) konfiguriert ist, wobei die zweite Aufbereitungs- und Kommunikationseinrichtung (54.2) zumindest mittels einer zweiten Datenverbindung (50) mit einem anderen der Geräte (12.1-12.n) verbunden ist.

12. System nach einem der vorangegangenen Ansprüche,
**dadurch gekennzeichnet, dass**
die Aktivitätsdaten der Detektionsmittel (20) oder einzelner Detektionsmittel (20) an eine Security Incident and Event Management Einheit (SIEM-Einheit) (56) der hybriden IT-Betriebsumgebung (2) übermittelbar sind, wobei von der SIEM-Einheit (56) die Aktivitätsdaten (23) an die Analyseeinheit (4) weiterleitbar sind oder wobei von der SIEM-Einheit (56) die Aktivitätsdaten (23) modifizierbar und an die Analyseeinheit (4) weiterleitbar sind.

13. System nach einem der vorangegangenen Ansprüche,
**dadurch gekennzeichnet, dass**
die Analyseeinheit (4) und/oder die Angriffseinheit (6) über ein Gateway (58) mit der hybriden IT-Betriebsumgebung (2) zum Austausch von Daten zumindest zeitweise verbunden sind.

14. Verfahren zur Bestimmung von IT-sicherheitsrelevanten Erkennungslücken einer hybriden IT-Betriebsumgebung (2), wobei die hybride IT-Betriebsumgebung (2) zumindest einen On-Premise-Anteil und einen Cloud-Anteil aufweist,
mindestens umfassend die Schritte Bereitstellen von mehreren voneinander verschiedenen Angriffsdateien (8) und/oder Angriffscodes (10) zur Modifikation der Funktionsweise von mehreren Geräten (12.1-12.n) der hybriden IT-Betriebsumgebung (2) mittels einer Angriffseinheit (6), wobei die mehreren Geräte (12.1-12.n) einer Geräteart (14) und/oder unterschiedlichen Gerätearten (14.1-14.n) zugehörig sind, und wobei zumindest ein Gerät oder ein erster Anteil der mehreren Geräte (12) dem On-Premise-Anteil (85) der IT-Betriebsumgebung (2) zugehörig ist und wobei zumindest ein Gerät oder ein zweiter Anteil der mehreren Geräte (12) dem Cloud-Anteil (91) der IT-Betriebsumgebung (2) zugehörig ist,
Identifikation und/oder Adressierung der mehreren Geräte (12.1-12.n) mittels mehrerer Zuordnungsmittel (18.1-18.n), wobei jedes der mehreren Geräte (12.1-12.n) durch zumindest ein Zuordnungsmittel (18.1-18.n), insbesondere durch jeweils ein Zuordnungsmittel, zum Empfang der Angriffsdatei (8) und/oder des Angriffscode (10) identifiziert und/oder adressiert wird,
und
Detektieren einer Aktivität zumindest eines und bevorzugt jedes der mehreren Geräte (12.1-12.n) infolge des Empfangs der Angriffsdatei (8) und/oder des Angriffscodes (10) zumindest mittelbar und bevorzugt unmittelbar durch zumindest ein Detektionsmittel (20), insbesondere durch jeweils ein Detektionsmittel (20),
Erzeugen von Aktivitätsdaten des mindestens einen Geräts (12.1.-12.n) und bevorzugt jedes der mehreren Geräte (12.1-12.n) in Abhängigkeit zumindest eines Teils der Aktivität infolge des Empfangs der Angriffsdatei (8) und/oder des Angriffscodes (10) durch ein Detektionsmittel (20), insbesondere das jeweilige Detektionsmittel (20),
zumindest mittelbares und bevorzugt unmittelbares Bereitstellen der Aktivitätsdaten an die Analyseeinheit (4) durch ein Detektionsmittel (20), insbesondere das jeweilige Detektionsmittel,
Bestimmen des Vorliegens oder Nicht-Vorliegens einer IT-sicherheitsrelevanten Erkennungslücke in Abhängigkeit der Aktivitätsdaten (23) eines Geräts (12.1-12.n), insbesondere der Aktivitätsdaten jedes Geräts (12.1-12.n), und der von dem Gerät (12.1-12.n), insbesondere von dem jeweiligen Gerät (12.1-12.n), empfangenen Angriffsdatei (8) und/oder des Angriffscodes (10) mittels der Analyseeinheit (4).

15. Computerprogrammprodukt umfassend Befehle, die bewirken, dass das System gemäß einem der Ansprüche 1 bis 13 die Verfahrensschritte gemäß Anspruch 14 ausführt

## Claims

1. System (1) for determining IT security-relevant detection gaps of a hybrid IT operating environment (2), wherein the hybrid IT operating environment (2) has at least an on-premise portion (85) and a cloud portion (91),
at least comprising
an analysis unit (4),
an attack unit (6) for providing a plurality of mutually different attack files (8) and/or attack codes (10) for modifying the mode of operation of a plurality of devices (12) of the hybrid IT operating environment (2), wherein the plurality of devices (12) belong to one device type (14) and/or different device types (14.1 to 14.n), and wherein at least one device or a first portion of the plurality of devices (12) belongs to the on-premise portion (85) of the IT operating environment (2), and wherein at least one device or a second portion of the plurality of devices (12) belongs to the cloud portion (91) of the IT operating environment (2),
a plurality of assignment means (18) for identifying and/or addressing the plurality of devices (12), wherein each of the plurality of devices (12) is identifiable and/or addressable by at least one assignment means (18), in particular by a respective assignment means (18), for receiving the attack file (8) and/or the attack code (10),
and
a plurality of detection means (20),
wherein an activity of at least one and preferably each of the plurality of devices (12) as a result of receiving the attack file (8) and/or the attack code (12) is detectable at least indirectly and preferably directly by at least one detection means (20), in particular by a respective detection means (20),
wherein the detection means (20), in particular the respective detection means (20), is configured to generate activity data (23) of the at least one device (12) and preferably each of the plurality of devices (12) as a function of at least a part of the activity of the at least one device and preferably each of the plurality of devices (12) as a result of receiving the attack file (8) and/or the attack code (10) by the at least one device and preferably by each of the plurality of devices (12) and executing the attack file (8) and/or the attack code (10) by the at least one device and preferably by each of the plurality of devices (12), and
wherein the detection means (20), in particular the respective detection means (20), is configured to provide the activity data to the analysis unit (4) at least indirectly and preferably directly,
wherein the analysis unit (4) is configured to determine the presence or absence of an IT security-relevant detection gap as a function of the activity data (23) of a device (12), in particular the activity data (23) of each device (12), and the attack file (8) and/or the attack code (10) received by the device (12), in particular by the respective device (12).

2. System according to claim 1,
**characterized in that**
the attack files (8) represent attacks of different attack types, in particular more than three mutually different attack types, and/or the attack codes (10) represent attacks of different attack types, in particular more than three mutually different attack types.

3. System according to claim 2,
**characterized in that**
the attack files (8) or attack codes (10) represent, for at least two different attack types, in each case more than two and preferably more than three different attack techniques, wherein
the different attack types are selected from a group of attack types, wherein the group comprises: initial access, execution, persistence, privilege escalation, defense evasion, discovery, lateral movement, collection, command and control, exfiltration, impact.

4. System according to claim 2,
**characterized in that**
the attack files (8) represent attacks of more than or exactly five mutually different attack types and/or the attack codes (10) represent attacks of more than five or exactly five mutually different attack types, wherein
the at least five or exactly five different attack types are selected from a group of attack types, wherein the group comprises: initial access, execution, persistence, privilege escalation, defense evasion, discovery, lateral movement, collection, command and control, exfiltration, impact, wherein
the at least or exactly five different attack types are:
execution, persistence, privilege escalation, credential access,
discovery.

5. System according to claim 2,
**characterized in that**
the attack files (8) represent attacks of more than or exactly eight mutually different attack types and/or the attack codes (10) represent attacks of more than eight or exactly eight mutually different attack types,
wherein the at least eight or exactly eight different attack types are selected from a group of attack types, wherein the group comprises: initial access, execution, persistence, privilege escalation, defense evasion, discovery, lateral movement, collection, command and control, exfiltration, impact,
wherein the at least or exactly eight different attack types are:
execution, persistence, privilege escalation, credential access,
discovery, lateral movement, collection, command and control.

6. System according to any one of the preceding claims 2 to 5,
**characterized in that**
at least one attack file (8) which represents a first attack type or an attack code (10) which represents a first attack type can be provided, and
at least one attack file (8) which represents a second attack type or an attack code (10) which represents a second attack type can be made available,
wherein the attack file (8) which represents the second attack type or the attack code (10) which represents the second attack type can be made available as a function of the attack file which represents the first attack type or as a function of the attack code (10) which represents the first attack type.

7. System according to any one of the preceding claims,
**characterized in that**
at least two assignment means (18) are directly assigned to exactly two devices (12.1, 12.2) of the plurality of devices (12.1 to 12.n), wherein a first assignment means (18.1) of the two assignment means (18.1, 18.2) is assigned to a first device (12.1) of the two devices (12.1, 12.2) and wherein the second assignment means (18.2) of the two assignment means (18.1, 18.2) is assigned to a second device (12.2) of the two devices (12.1, 12.2).

8. System according to any one of the preceding claims,
**characterized in that**
a plurality or all of the detection means (20) are documentation and communication programs (21.1-21.n) for generating and providing the activity data.

9. System according to claim 8,
**characterized in that**
the documentation and communication programs (21.1-21.n) are executable by the devices (12.1-12.n)
and/or
one or more central documentation and communication programs (42.1-42.n) are provided, wherein the one central or the plurality of central documentation and communication programs (42.1-42.n) is/are executable by a master instance (44)
and/or
at least two documentation and communication devices (46.1, 46.2) for executing documentation and communication programs (21.1-21.n) are provided, wherein a first documentation and communication device (46.1) of the at least two documentation and communication devices (46.1, 46.2) is configured to execute a first documentation and communication program (21.1), wherein the first documentation and communication device (46.1) is connected to one of the devices (12.1-12.n) at least by means of a first data connection (48), and wherein a second documentation and communication device (46.2) of the at least two documentation and communication devices (46.1, 46.2) is configured to execute a second documentation and communication program (21.2), wherein the second documentation and communication device (46.2) is connected to another one of the devices (12.1-12.n) at least by means of a second data connection (50).

10. System according to any one of the preceding claims,
**characterized in that**
a plurality or all of the detection means (20) are processing and communication programs (22.1-22.n) for processing, generating and providing the activity data.

11. System according to claim 10,
**characterized in that**
the processing and communication programs (22.1-22.n) are executable by the devices (12.1-12.n)
and/or
one or more central processing and communication programs (52.1-52.n) are provided, wherein the one central or the plurality of central processing and communication programs (52.1-52.n) is/are executable by a master instance (44)
and/or
at least two processing and communication devices (54.1, 54.2) for executing processing and communication programs (22.1-22.n) are provided, wherein a first processing and communication device (54.1) of the at least two processing and communication devices (54.1, 54.2) is configured to execute a first processing and communication program (22.1), wherein the first processing and communication device (54.1) is connected to one of the devices (12.1-12.n) at least by means of a first data connection (48), and wherein a second processing and communication device (54.2) of the at least two processing and communication devices (54.1, 54.2) is configured to execute a second processing and communication program (22.2), wherein the second processing and communication device (54.2) is connected to another one of the devices (12.1-12.n) at least by means of a second data connection (50).

12. System according to any one of the preceding claims,
**characterized in that**
the activity data of the detection means (20) or of individual detection means (20) can be transmitted to a Security Incident and Event Management unit (SIEM unit) (56) of the hybrid IT operating environment (2), wherein the activity data (23) can be forwarded by the SIEM unit (56) to the analysis unit (4) or wherein the activity data (23) can be modified by the SIEM unit (56) and forwarded to the analysis unit (4).

13. System according to any one of the preceding claims,
**characterized in that**
the analysis unit (4) and/or the attack unit (6) are connected, at least temporarily, to the hybrid IT operating environment (2) via a gateway (58) for exchanging data.

14. Method for determining IT security-relevant detection gaps of a hybrid IT operating environment (2), wherein the hybrid IT operating environment (2) has at least an on-premise portion and a cloud portion,
at least comprising the steps of
providing a plurality of mutually different attack files (8) and/or attack codes (10) for modifying the mode of operation of a plurality of devices (12.1-12.n) of the hybrid IT operating environment (2) by means of an attack unit (6), wherein the plurality of devices (12.1-12.n) belong to one device type (14) and/or different device types (14.1-14.n), and wherein at least one device or a first portion of the plurality of devices (12) belongs to the on-premise portion (85) of the IT operating environment (2), and wherein at least one device or a second portion of the plurality of devices (12) belongs to the cloud portion (91) of the IT operating environment (2),
identifying and/or addressing the plurality of devices (12.1-12.n) by means of a plurality of assignment means (18.1-18.n), wherein each of the plurality of devices (12.1-12.n) is identified and/or addressed by at least one assignment means (18.1-18.n), in particular by a respective assignment means, for receiving the attack file (8) and/or the attack code (10),
and
detecting an activity of at least one and preferably each of the plurality of devices (12.1-12.n) as a result of receiving the attack file (8) and/or the attack code (10) at least indirectly and preferably directly by at least one detection means (20), in particular by a respective detection means (20),
generating activity data of the at least one device (12.1-12.n) and preferably each of the plurality of devices (12.1-12.n) as a function of at least a part of the activity as a result of receiving the attack file (8) and/or the attack code (10) by a detection means (20), in particular the respective detection means (20),
providing the activity data to the analysis unit (4) at least indirectly and preferably directly by a detection means (20), in particular the respective detection means,
determining the presence or absence of an IT security-relevant detection gap as a function of the activity data (23) of a device (12.1-12.n), in particular the activity data of each device (12.1-12.n), and the attack file (8) and/or the attack code (10) received by the device (12.1-12.n), in particular by the respective device (12.1-12.n), by means of the analysis unit (4).

15. Computer program product comprising instructions which cause the system according to any one of claims 1 to 13 to carry out the method steps according to claim 14.

## Revendications

1. Système (1) pour déterminer des lacunes de détection pertinentes pour la sécurité informatique d'un environnement opérationnel informatique hybride (2), l'environnement opérationnel informatique hybride (2) présentant au moins une partie sur site (85) et une partie en nuage (91),
au moins comportant
une unité d'analyse (4),
une unité d'attaque (6) pour fournir une pluralité de fichiers d'attaque (8) et/ou de codes d'attaque (10), qui diffèrent les uns des autres, afin de modifier la fonctionnalié d'une pluralité de dispositifs (12) de l'environnement opérationnel informatique hybride (2), ladite pluralité de dispositifs (12) appartenant à un type de dispositif (14) et/ou à différents types de dispositif (14.1 à 14.n), et au moins un dispositif ou une première partie de la pluralité de dispositifs (12) appartenant à la partie sur site (85) de l'environnement opérationnel informatique (2) et au moins un dispositif ou une seconde partie de la pluralité de dispositifs (12) appartenant à la partie en nuage (91) de l'environnement opérationnel informatique (2),
une pluralité de moyens d'attribution (18) pour identifier et/ou adresser la pluralité de dispositifs (12), chaque dispositif de la pluralité de dispositifs (12) étant identifiable et/ou adressable par au moins un moyen d'attribution (18), en particulier par un moyen d'attribution respectif (18), afin de recevoir le fichier d'attaque (8) et/ou le code d'attaque (12),
et
une pluralité de moyens de détection (20),
une activité d'au moins un et, de préférence, de chacun des différents dispositifs (12) à la suite de la réception du fichier d'attaque (8) et/ou du code d'attaque (10) étant détectable au moins indirectement et, de préférence, directement par au moins un moyen de détection (20), en particulier par un moyen de détection respectif (20),
le moyen de détection (20), en particulier le moyen de détection respectif (20), étant configuré pour générer des données d'activité (23) de l'au moins un dispositif (12) et, de préférence, de chacun des différents dispositifs (12) en fonction d'au moins une partie de l'activité de l'au moins un dispositif et, de préférence, de chacun des différents dispositifs (12) à la suite de la réception du fichier d'attaque (8) et/ou du code d'attaque (10) par l'au moins un dispositif et, de préférence, par chacun des différents dispositifs (12) et d'une exécution du fichier d'attaque (8) et/ou du code d'attaque (10) par l'au moins un dispositif et, de préférence, par chacun des différents dispositifs (12), et
le moyen de détection (20), en particulier le moyen de détection respectif (20), étant configuré pour fournir, au moins indirectement et, de préférence, directement, les données d'activité à l'unité d'analyse (4),
l'unité d'analyse (4) étant configurée pour déterminer la présence ou l'absence d'une lacune de détection pertinente pour la sécurité informatique en fonction des données d'activité (23) d'un dispositif (12), en particulier des données d'activité (23) de chaque dispositif (12), et du fichier d'attaque (8) et/ou du code d'attaque (10) reçus par le dispositif (12), en particulier par le dispositif respectif (12).

2. Système selon la revendication 1,
**caractérisé par le fait que**
les fichiers d'attaque (8) représentent des attaques relevant de différents types d'attaque, en particulier plus de trois types d'attaque différents les uns des autres, et/ou les codes d'attaque (10) représentent des attaques relevant de différents types d'attaque, en particulier plus de trois types d'attaque différents les uns des autres.

3. Système selon la revendication 2,
**caractérisé par le fait que**
les fichiers d'attaque (8) ou les codes d'attaque (10) représentent des attaques relevant au moins de deux types d'attaque différents, respectivement plus de deux et, de préférence, plus de trois techniques d'attaque différentes,
les différents types d'attaque étant choisis dans un groupe de types d'attaque, le groupe présentant : accès initial, exécution, persistance, élévation de privilèges, contournement des défenses, découverte, mouvement latéral, collecte, commandement et contrôle, exfiltration, impact.

4. Système selon la revendication 2,
**caractérisé par le fait que**
les fichiers d'attaque (8) représentent des attaques relevant de plus de ou d'exactement cinq types d'attaque différents les uns des autres et/ou les codes d'attaque (10) représentent des attaques relevant de plus de ou d'exactement cinq types d'attaque différents les uns des autres,
les au moins ou exactement cinq types d'attaque différents étant choisis dans un groupe de types d'attaque, le groupe comprenant : accès initial, exécution, persistance, élévation des privilèges, contournement des défenses, découverte, mouvement latéral, collecte, commandement et contrôle, exfiltration, impact,
les au moins cinq ou exactement cinq types d'attaque différents sont :
exécution, persistance, élévation de privilèges, accès aux informations d'identification, découverte.

5. Système selon la revendication 2,
**caractérisé par le fait que**
les fichiers d'attaque (8) représentent des attaques relevant de plus de ou d'exactement huit types d'attaque différents les uns des autres et/ou les codes d'attaque (10) représentent des attaques relevant de plus de ou d'exactement huit types d'attaque différents les uns des autres,
les au moins huit ou exactement huit types d'attaque différents les uns des autres étant choisis dans un groupe de types d'attaque, le groupe présentant : accès initial, exécution, persistance, élévation de privilèges, contournement des défenses, découverte, mouvement latéral, collecte, commandement et contrôle, exfiltration, impact,
les au moins huit ou exactement huit types d'attaque différents étant :
exécution, persistance, élévation de privilèges, accès aux informations d'identification, découverte, mouvement latéral, collecte, commandement et contrôle.

6. Système selon l'une des revendications 2 à 5 précédentes,
**caractérisé par le fait qu'**
au moins un fichier d'attaque (8) qui représente un premier type d'attaque ou un code d'attaque (10) qui représente un premier type d'attaque est disponible, et
au moins un fichier d'attaque (8) qui représente un second type d'attaque ou un code d'attaque (10) qui représente un second type d'attaque est disponible,
le fichier d'attaque (8) qui représente le second type d'attaque ou le code d'attaque (10) qui représente le second type d'attaque étant disponible en fonction du fichier d'attaque qui représente le premier type d'attaque ou en fonction du code d'attaque (10) qui représente le premier type d'attaque.

7. Système selon l'une des revendications précédentes,
**caractérisé par le fait qu'**
au moins deux moyens d'attribution (18) sont directement attribués à exactement deux dispositifs (12.1, 12.2) parmi la pluralité de dispositifs (12.1 à 12.n), un premier moyen d'attribution (18.1) des deux moyens d'attribution (18.1, 18.2) étant attribué à un premier dispositif (12.1) des deux dispositifs (12.1, 12.2) et le second moyen d'attribution (18.2) des deux moyens d'attribution (18.1, 18.2) étant attribué à un second dispositif (12.2) des deux dispositifs (12.1, 12.2).

8. Système selon l'une des revendications précédentes,
**caractérisé par le fait que**
plusieurs ou tous les moyens de détection (20) sont des programmes de documentation et de communication (21.1 à 21.n) destinés à générer et à mettre à disposition les données d'activité.

9. Système selon la revendication 8,
**caractérisé par le fait que**
les programmes de documentation et de communication (21.1-21.n) sont exécutables par les dispositifs (12.1-12.n)
et/ou
un ou plusieurs programmes centraux de documentation et de communication (42.1-42.n) sont prévus, le ou les programmes centraux de documentation et de communication (42.1-42.n) étant exécutable(s) par une instance principale (44)
et/ou
au moins deux dispositifs de documentation et de communication (46.1, 46.2) sont prévus pour l'exécution des programmes de documentation et de communication (21.1-21.n), un premier dispositif de documentation et de communication (46.1) parmi les au moins deux dispositifs de documentation et de communication (46.1,46.2) étant configuré pour exécuter un premier programme de documentation et de communication (21.1), le premier dispositif de documentation et de communication (46.1) étant relié, au moins par l'intermédiaire d'une première liaison de données (48), à l'un des dispositifs (12.1-12.n), et un second dispositif de documentation et de communication (46.2) parmi les au moins deux dispositifs de documentation et de communication (46.1, 46.2) étant configuré pour exécuter un second programme de documentation et de communication (21.2), le second dispositif de documentation et de communication (46.2) étant relié, au moins par l'intermédiaire d'une seconde liaison de données (50), à un autre des dispositifs (12.1 -12.n).

10. Système selon l'une des revendications précédentes,
**caractérisé par le fait que**
plusieurs ou tous les moyens de détection (20) sont des programmes de traitement et de communication (22.1-22.n) destinés à traiter, générer et mettre à disposition les données d'activité.

11. Système selon la revendication 10,
**caractérisé par le fait que**
les programmes de traitement et de communication (22.1-22.n) sont exécutables par les dispositifs (12.1 -12.n)
et/ou
un ou plusieurs programmes centraux de traitement et de communication (52.1 -52.n) sont prévus, le ou les programmes centraux de traitement et de communication (52.1-52.n) étant exécutable(s) par une instance principale (44)
et/ou
au moins deux dispositifs de traitement et de communication (54.1, 54.2) sont prévus pour exécuter des programmes de traitement et de communication (22.1-22.n), un premier dispositif de traitement et de communication (54.1) parmi les au moins deux dispositifs de traitement et de communication (54.1,54.2) étant configuré pour exécuter un premier programme de traitement et de communication (22.1), le premier dispositif de traitement et de communication (54.1) étant relié, au moins par une première liaison de données (48), à l'un des dispositifs (12.1-12.n), et un second dispositif de traitement et de communication (54.2) parmi les au moins deux dispositifs de traitement et de communication (54.1, 54.2) étant configuré pour exécuter un second programme de traitement et de communication (22.2), le second dispositif de traitement et de communication (54.2) étant connecté, au moins par une seconde liaison de données (50), à un autre des dispositifs (12.1-12.n).

12. Système selon l'une des revendications précédentes,
**caractérisé par le fait que**
les données d'activité des moyens de détection (20) ou de moyens de détection individuels (20) sont aptes à être transmises à une unité de gestion des incidents et des événements de sécurité (unité SIEM) (56) de l'environnement opérationnel informatique hybride (2), les données d'activité (23) pouvant être transférées par l'unité SIEM (56) à l'unité d'analyse (4) ou les données d'activité (23) pouvant être modifiées par l'unité SIEM (56) et transférées à l'unité d'analyse (4).

13. Système selon l'une des revendications précédentes,
**caractérisé par le fait que**
l'unité d'analyse (4) et/ou l'unité d'attaque (6) son reliées au moins de manière temporaire, pour l'échage de données, avec l'environnement opérationnel informatique hybride (2) par l'intermédiaire d'une passrelle (58).

14. Procédé de détermination des lacunes de détection pertinentes pour la sécurité informatique d'un environnement opérationnel informatique hybride (2), l'environnement opérationnel informatique hybride (2) présentant au moins une partie sur site et une partie en nuage,
au moins comprenant les étapes de :
mise à disposition de plusieurs fichiers d'attaque (8) et/ou codes d'attaque (10) différents les uns des autres, destinés à modifier la fonctionnalité de plusieurs dispositifs (12.1-12.n) de l'environnement opérationnel informatique hybride (2) au moyen d'une unité d'attaque (6), les différents dispositifs (12.1-12.n) appartenant à un type de dispositif (14) et/ou à différents types de dispositif (14.1-14.n), et au moins un dispositif ou une première partie des différents dispositifs (12) appartenant à la partie sur site (85) de l'environnement opérationnel informatique (2) et au moins un dispositif ou une seconde partie des différents dispositifs (12) appartenant à la partie en nuage (91) de l'environnement opérationnel informatique (2),
identification et/ou adressage des différents dispositifs (12.1-12.n) à l'aide de plusieurs moyens d'attribution (18.1-18.n), chacun des différents dispositifs (12.1-12.n) étant identifié et/ou adressé par au moins un moyen d'attribution (18.1-18.n), en particulier par un moyen d'attribution respectif, pour la réception du fichier d'attaque (8) et/ou du code d'attaque (10),
et
détection d'une activité au moins d'un et, de préférence, de chacun des différents dispositifs (12.1-12.n) à la suite de la réception du fichier d'attaque (8) et/ou du code d'attaque (10) au moins indirectement et, de préférence, directement par au moins un moyen de détection (20), en particulier par un moyen de détection respectif (20),
génération de données d'activité de l'au moins un dispositif (12.1-12.n) et, de préférence, de chacun des différents dispositifs (12.1-12.n) en fonction au moins d'une partie de l'activité à la suite de la réception du fichier d'attaque (8) et/ou du code d'attaque (10) par un moyen de détection (20), en particulier le moyen de détection respectif (20),
mise à disposition au moins indirecte et, de préférence, directe, des données d'activité à l'unité d'analyse (4) par un moyen de détection (20), en particulier le moyen de détection respectif,
détermination de la présence ou de l'absence d'une lacune de détection pertinente pour la sécurité informatique en fonction des données d'activité (23) d'un dispositif (12.1-12.n), en particulier des données d'activité de chaque dispositif (12.1-12.n), et du fichier d'attaque (8) et/ou du code d'attaque (10) reçus par le dispositif (12.1-12.n), en particulier par le dispositif respectif (12.1-12.n), au moyen de l'unité d'analyse (4).

15. Produit-programme d'ordinateur comprenant des instructions qui amènent le système selon l'une des revendications 1 à 13 à exécuter les étapes de procédé selon la revendication 14.
